# EUROPEAN PATENT APPLICATION

(11) **EP 1 168 338 A2**
(43) Date of publication of application: **02.01.2002**
(21) Application number: 01122455.7
(22) Date of filing: 11.06.1999
(51) Int. Cl.: G11B 23/087

(54) **Magnetic tape cassette and tape reel**

(30) Priority: 12.06.1998 JP 16550398; 17.06.1998 JP 17019698; 23.06.1998 JP 17626398; 13.07.1998 JP 19748298; 17.07.1998 JP 20371698; 31.08.1998 JP 24632498; 21.10.1998 JP 30000598; 30.10.1998 JP 31094998; 19.05.1999 JP 13872499
(62) Divisional of application: 99925303.2
(71) Applicant: FUJI PHOTO FILM CO., LTD., Kanagawa-ken, 250-0123 (JP)
(72) Inventor: Ashikawa, Teruo, Odawara-shi, Kanagawa, 250-0001 (JP); Onmori, Shozo, Odawara-shi, Kanagawa, 250-0001 (JP); Hiraguchi, Kazuo, Odawara-shi, Kanagawa, 250-0001 (JP); Morita, Kiyoo, Odawara-shi, Kanagawa, 250-0001 (JP); Naito, Hiroyuki, Odawara-shi, Kanagawa, 250-0001 (JP)
(74) Representative: Grünecker, Kinkeldey, Stockmair & Schwanhäusser Anwaltssozietät

(57) **Abstract**

A magnetic tape cassette comprising upper cassette half having upper bosses; lower cassette half having lower bosses and coupled with said upper cassette through screws which are respectively inserted into said lower bosses and then threadedly engaged with said upper bosses, wherein said lower bosses includes a front center lower boss which is substantially disposed in a center portion in a right-left direction and in a front end portion in a front-rear direction perpendicular to said right-left direction, and a rear center lower boss which is substantially disposed in a center portion in a right-left direction and in a rear end portion in the front-rear direction, and wherein said upper bosses includes a front center upper boss mating with said front center lower boss, and a rear center upper boss mating with said rear center lower boss.

## Description

This invention relates to a magnetic tape cassette such as a digital video cassette (DVC) or the like in which a pair of tape reels with magnetic tape wound therearound are rotatably stored in a cassette case composed of upper and lower cassette halves and, in more particular, a magnetic tape cassette characterized by screw bosses into which screws for fixing the upper and lower cassette halves to each other can be inserted.

Conventionally, there are known various kinds of magnetic tape cassettes and, for example, there is known a magnetic tape cassette for a digital video cassette (DVC). The magnetic tape cassette for a digital video cassette (DVC) is classified into three kinds of cassettes according to uses; that is, S-size (small- size), M-size (medium-size) and L-size (large-size) cassettes.

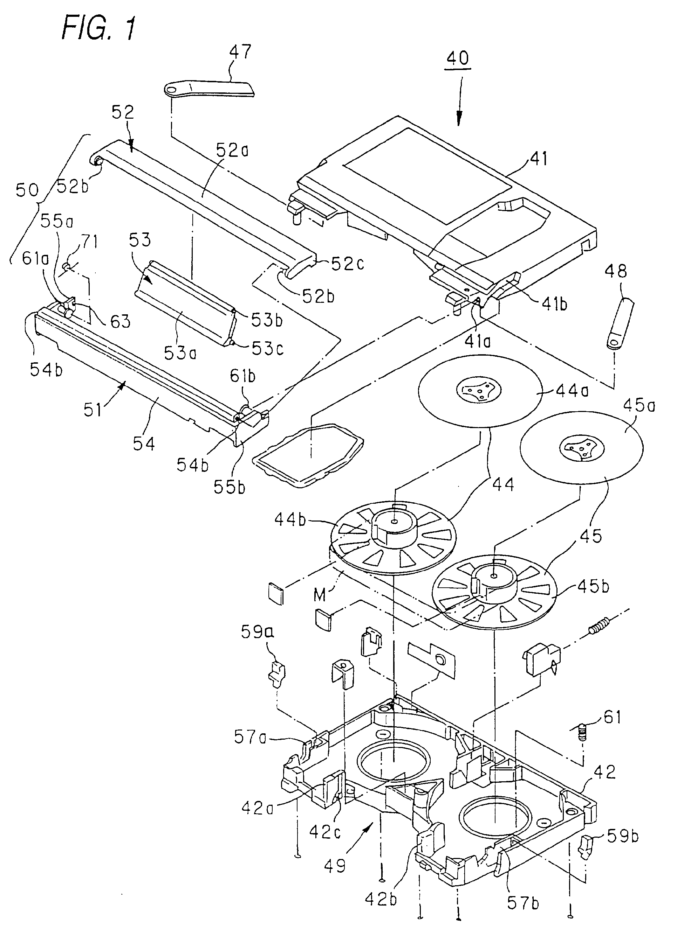

Now, in Fig. 1, there is shown an exploded perspective view of an M-size magnetic tape cassette for DVC, which is generally utilized in a broadcasting station. As shown in Fig. 1, the present magnetic tape cassette 40 includes upper and lower halves 41 and 42 and, within the lower half 42 forming one of the cassette case halves, there are rotatably stored a pair of reels 44 and 45 which are respectively composed of upper and lower flanges 44a, 45a and 44b, 45b. And, around the two reels 44 and 45, there is wound magnetic tape M.

And, the two reels 44 and 45 are respectively energized toward the lower half 42 side by their associated reel springs 47 and 48. Also, the magnetic tape M, in the front portion of the magnetic tape cassette (in Fig. 1, on the left side thereof), is guided by two tape guides 42a and 42b which are respectively disposed on the two sides of the magnetic tape cassette, so that the magnetic tape M is allowed to pass through an opening 49 formed in the front end of the lower half 42.

On the upper half 41 which cooperates together with the lower half 42 in forming the cassette case, there is mounted a lid 50 which is used to cover the magnetic tape M, while the lid 50 is composed of three components: that is, an outer lid 51, a top lid 52 and an inner lid 53.

The outer lid 51 comprises a front cover plate 54 for covering the front surface side of the magnetic tape M stretched over the opening 49, and two side plates 55a and 55b which are respectively provided on and projected from the two sides of the front cover plate 54. On the respective inner wall surfaces of the two side plates 55a and 55b, there are provided two support shaft pins 61a and 61b in such a manner that they respectively extend at right angles from their respective inner wall surfaces, while the two support shaft pins 61a and 61b can be rotatably fitted into and supported by their associated pin support holes 41a which are respectively formed in the two side surface portions of the upper half 41. Thus, the outer lid 51 can be freely rotated about the two support shaft pins 61a and 61b.

The top lid 52 includes an upper cover plate 52a for covering the upper surface side of the magnetic tape M stretched over the opening 49, two front cover connecting portions 52b for connecting the two ends of the upper cover plate 52a on the front edge side thereof with their associated connecting holes 54b respectively formed in the two ends of the upper end edge of the front cover plate 54, two arm portions 52c respectively extended from the rear end edge of the upper cover plate 52a, and two slide pins which are respectively provided on and projected from the two arm portions 52c and also which can be slidably engaged with upper cover cam grooves 41b respectively formed in the two side surfaces of the upper half 41.

The inner lid 53 comprises an inner cover plate 53a for covering the upper surface side of the magnetic tape M stretched over the opening 49, two upper cover connecting portions 53b for connecting the upper edge of the inner cover plate 53a with the upper cover plate 52a, and two slide pins 53c which are respectively provided on and projected from the two end portions of the lower edge of the inner cover plate 53a and can be engaged with their associated inner cover cam grooves 42c respectively formed in the two inner surface portions of the lower half 42.

When the above-structured magnetic tape cassette 40 is loaded into a VTR apparatus, the two side plates 55a and 55b of the outer lid 51 are respectively pushed upward by their associated cover opening pins (not shown) equipped on the apparatus side and, in linking with the then cover opening operation of the outer lid 51, the top lid 52 and inner lid 53 are respectively opened. To take out the magnetic tape cassette 40 from the VTR apparatus, reversely to the loading operation thereof, the respective lids thereof are closed.

Also, on the respective inner wall surfaces of the two side plates 55a and 55b of the outer lid 51, there are projectingly provided lock projections 63. And, on the side surface portions 57a and 57b of the lower half 42, there are rotatably disposed lid locks 59a and 59b which can be respectively engaged with their associated lock projections 63 to thereby lock the lid 50 into its closed state. The lid lock 59a, which is supported on the side surface portion 57a side, is energized in the closing direction of the lid 50 by a lid spring 71 which is mounted on the support shaft pin 61a of the outer lid 51, whereas the lid lock 59b supported on the side surface portion 57b side is energized in the closing direction thereof by a lid lock spring 61 which is to be assembled to the lower half 42.

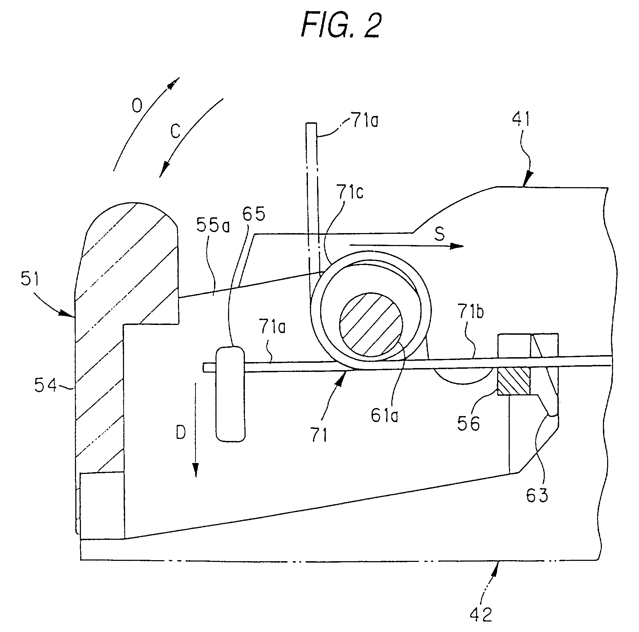

Here, Fig. 2 shows a partially sectional view of the above-mentioned conventional magnetic tape cassette 40.

As shown in Fig. 2, on the side plate 55a of the outer lid 51, there is mounted the lid spring 71. That is, a coil portion 71c of the lid spring 71, which is composed of about 6 windings, is mounted on a support shaft pin 61a in such a manner that it is loosely fitted with but not in contact with the support shaft pin 61a, one leg portion 71a of the lid spring 71 is secured to a projection portion 65 provided on the side plate 55a, and the other leg portion 71b of the lid spring 71 is secured to a projection portion 56 provided on the side surface of the upper half 41. The outer lid 51 is energized in its closing direction (in the direction of an arrow line C shown in Fig. 2) by the energizing force that is produced in the direction of an arrow line D shown in Fig. 2 by the leg portions 71a and 71b of the lid spring 71. Also, one leg portion 71b can be engaged with the upper surface of the lid lock 59a to thereby energize the lid lock 59a in the locking direction of the lid 50.

By the way, when the side plate 55a of the outer lid 51 is pushed upward by the cover opening pin on the apparatus side and the lid 50 is thereby opened, the outer lid 51 is rotated in the direction of an arrow line O shown in Fig. 2 about the support shaft pin 61a. At the then time, because one leg portion 71b of the lid spring 71 is secured to the projection portion 56 on the upper half 41, the position of one leg portion 71b remains unchanged, whereas the other leg portion 71a is moved together with the outer lid 51 because it is secured to the projection portion 65 on the side plate portion 55a.

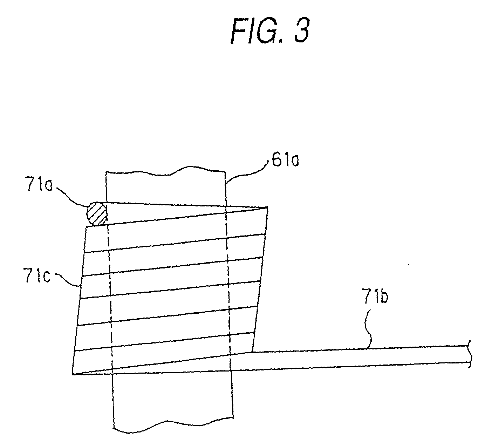

As a result of this, for example, if the other leg portion 71a is moved to reach a position shown by a one-dot chained line in Fig. 2 due to the opening operation of the lid 50, then there is applied a force in the direction of an arrow line S shown in Fig. 2 (that is, in the direction of the rear surface of the magnetic tape cassette). Therefore, the coil portion 71c of the lid spring 71, which is mounted in such a manner that it is loosely fitted with but not in' contact with the support shaft pin 61a in the closed state of the lid 50, is inclined as the lid 50 is opened. As shown in Fig. 3, if the coil portion 71c is inclined from its proper position, then there is a fear that the coil portion 71c can be contacted with the support pin 61a to thereby shave the support shaft pin 61a. Here, since the opening and closing operations of the lid 50 are repeatedly executed, the support pin 61a is also shaved repeatedly. Such repeated shaving of the support shaft pin 61a can reduce the diameter of the support shaft pin 61a and also can produce shavings, which can cause a serious error such as drop-out and the like. Therefore, in the above-mentioned conventional magnetic tape cassette, there is left unsolved a problem that the support shaft pin 61a may be shaved.

These are first problems.

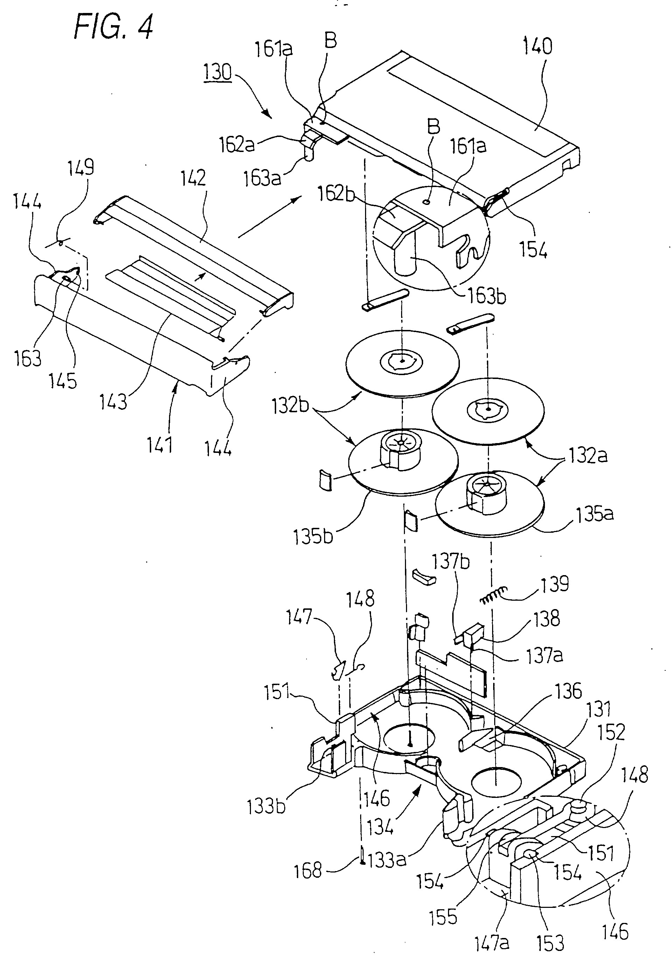

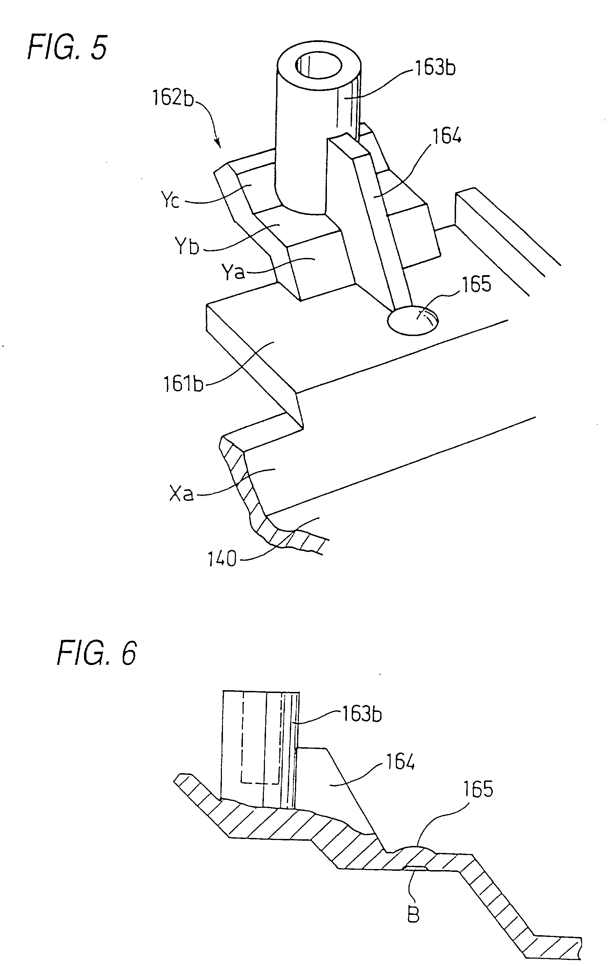

Now, description will be given below of an example of a conventional magnetic tape cassette known as a DVC with reference to Figs. 4 and 5. At first, describing the structure of the conventional magnetic tape cassette 130 with reference to Fig. 4, a pair of reels 132a and 132b are rotatably disposed within a lower half case (which is hereinafter referred as a lower half simply) 131, while magnetic tape (not shown) is wound around the two reels 132a and 132b. The magnetic tape can be guided by two tape guides 133a and 133b respectively disposed on the two sides of the front end portion of the present magnetic tape cassette 130 in such a manner that the magnetic tape is allowed to pass through an opening 134 formed on the front end side of the lower half 131. And, on the respective peripheral edges of the two reels 132a and 132b (in particular, on the peripheral edges of the lower flanges thereof), there are formed teeth 135a and 135b in such a manner that they extend over the whole of their associated peripheral edges.

On the other hand, in order to prevent the magnetic tape from loosening when the magnetic tape cassette 130 is not loaded in a video deck (not shown), that is, when the magnetic tape cassette 130 is put in storage or it is being carried, in a space 136 formed on the rear side of the cassette 130 between the two reels 132a, 132b, there are disposed a brake member 138 including two securing pawls 137a and 137b which cooperate together in forming a lock device capable of locking the rotational movements of the two reels 132a and 132b, and a compression spring (a brake spring) 139 which is used to energize the brake member 138.

Also, on an upper half case (which is hereinafter referred to as an upper half simply) 140, there are mounted an outer lid 141, an upper lid 142 and an inner lid 143 which cooperate together in forming an open/close lid for covering the opening 134 formed in the front end portion of the lower half 131, while the three lids can be freely opened and closed.

Two lid lock pawls 145 are respectively provided on and projected from the inner side surfaces of the two side plates 144 of the outer lid 141. And, on the respective insides of the two right and left side plate portions 146 of the lower half 131, there are formed frame-shaped storage portions 151 into which lid locks 147 to be secured to their associated lid lock pawls 145 of the outer lid 141 can be rotatably mounted or stored. In the rear of the storage portions 151, there are mounted springs 148 which are respectively used to energize their associated lid locks 147 toward their locking directions, while the mounting of the springs 148 can be achieved by mounting the annular-shaped portions of the springs 148, which are respectively formed in the end portions of the springs 148, on their associated rod-shaped securing pins 152.

By the way, since the structures of the right and left storage portions 151 and the storing states of the right and left lid locks 147 are respectively symmetrical to each other, in the left portion of Fig. 4, there is shown an exploded state thereof, whereas, in the right portion of Fig. 4, there is shown a storing state thereof. In Fig. 4, no designations are given to other parts than the parts that belong to the main portions of the magnetic tape cassette 130, and the description thereof is also omitted.

On the two sides of the front end portion of the upper half 140, there are formed eaves portions 161a and 161b which are respectively used to define an opening for drawing out the magnetic tape and, on the parts of the respective leading end portions of the eaves portions 161a and 161b, there are formed extension portions 162a and 162b. And, on the lower sides of the extension portions 162a and 162b, there are formed screw bosses (that is, bosses with which screws can be threadedly engaged) 163a and 163b which respectively face downward, in particular, in Fig. 4, they face the lower half 131 side. The screw bosses 163a and 163b are used not only when the upper and lower halves 140 and 131 are superimposed on top of each other and are screwed together, but also to restrict a gap between the upper and lower halves 140 and 131 in the above-mentioned opening.

Next, description will be given below of the structures of the screw bosses 163a and 163b with reference to Figs. 5 and 6. By the way, the two screw bosses 163a and 163b are identical in structure with each other and, therefore, description will be given here only of one them, that is, the screw boss 163b. Fig. 5 is a perspective view of the screw boss 163b and its adjoining portion of the upper half 140, in which the upper half 140 is turned downside up. And, Fig. 6 is a section view of the main portions of the screw boss 163b, showing the structure thereof. In particular, the eaves portion 161b is so formed as to extend continuously with the upper half 140 through an inclined portion Xa of the upper half 140 and, from a portion of the eaves portion 161b and integrally therewith, there is projected an extension portion 162b which comprises an inclined portion Ya, a flat portion Yb and an inclined portion Yc.

And, the cylindrical-shaped screw boss 163b is formed in such a manner that it extends over the flat portion Yb and inclined portion Yc in part, while there is formed a reinforcing rib 164 in such a manner that it extends over the side surface of the screw boss 163b, flat portion Yb, inclined portion Ya and eaves portion 161b. By the way, in the neighborhood of the reinforcing rib 164, there is formed a small raised portion 165 spaced from the reinforcing rib 164, while the raised portion 165 is formed in a portion of the eaves portion 161b which is disposed opposed to a gate (not shown) provided in a die, when the upper half 140 is molded.

Now, description will be given below of an operation to mold the upper half 140. The upper half 140 can be molded by injecting resin into a die (not shown) through a gate (not shown) provided in the die. The gate is disposed at a position which corresponds to the back surface side of the raised portion 165, and a space within the die is filled with the resin injected through the gate to thereby form the upper half 140, while the resin injection position is left on the surface thereof as a gate trace B. As described above, Figs. 5 and 6 respectively show a state in which the upper half 140 is turned downside up and, therefore, in a state shown in Fig. 4, two gate traces B appear on the front of the upper half 140.

However, when the magnetic tape cassette 130 is not in use, the two gate traces B are covered by the outer lid 142 and, therefore, normally, the two gate traces B cannot be observed by a user.

However, in the above-structured conventional magnetic tape cassette 130, there are still left unsolved the following problems: That is, when assembling the magnetic tape cassette 130, the lower and upper halves 131 and 140 are superimposed on top of each other and are then screwed together. This screwing operation is executed at a plurality of positions. Here, referring to one of such screwing positions, as shown in the lower left end portion of Fig. 4, a screw 168 is inserted through an insertion hole (not shown) formed in the lower half 131 and is then tightened and screwed to the hollow, cylindrical screw boss 163a.

No screw groove is formed in the screw boss 163a and, therefore, while cutting a threaded groove in the screw boss 163a with the rotation of the screw 168, the screw 168 is tightened with respect to the screw boss 163a. Accordingly; a large force is given to the screw boss 163a as the screw 168 is rotated and, in order to prevent the screw boss 163a and eaves portion 161b from being deformed by such large force, there is provided the above-mentioned reinforcing rib 164.

The reinforcing rib 164, preferably, may be so formed as to have almost the same height as the screw bosses 163a and 163b, or may be so formed as to have a larger thickness than those of the screw bosses 163a and 163b, so that the strength of the reinforcing rib 164 can be enhanced. However, it is not practical to take this reinforcing rib 164 strength enhancing measure due to the space relation between the reinforcing rib 164 and lower half 131; in particular, such space relation makes it difficult for the reinforcing rib 164 to have a sufficient height or a sufficient thickness, so that the screw bosses 163a and 163b cannot be prevented against deformation to a satisfactory degree.

Also, since the gate position is distant from the screw bosses 163a and 163b and reinforcing rib 164, the fluidity of the resin is not good when molding the magnetic tape cassette 130, and the resin cannot be applied to the screw bosses 163a and 163b with a proper pressure, so that the screw bosses 163a and 163b may be molded in a deformed manner.

These are second problems.

Further, conventionally, as means for positioning a magnetic tape cassette in a recording and reproducing apparatus when the former is completely loaded into the latter, there is generally known the following means: that is, the position of the magnetic tape cassette in the horizontal direction thereof is determined by inserting two pins, which are provided in the recording and reproducing apparatus, respectively into two reference holes formed in the loading area of the magnetic tape cassette; and, the position of the magnetic tape cassette in the vertical direction thereof is determined at a position where, when conical-shaped pins disposed on the recording and reproducing apparatus side are inserted into two recessed portions formed in the magnetic tape cassette and a hole formed in the bottom surface thereof, or into three holes formed in the bottom surface thereof, or into a horizontally positioning hole formed in the magnetic tape cassette, the diameters of the pins are coincident with the diameters of the holes.

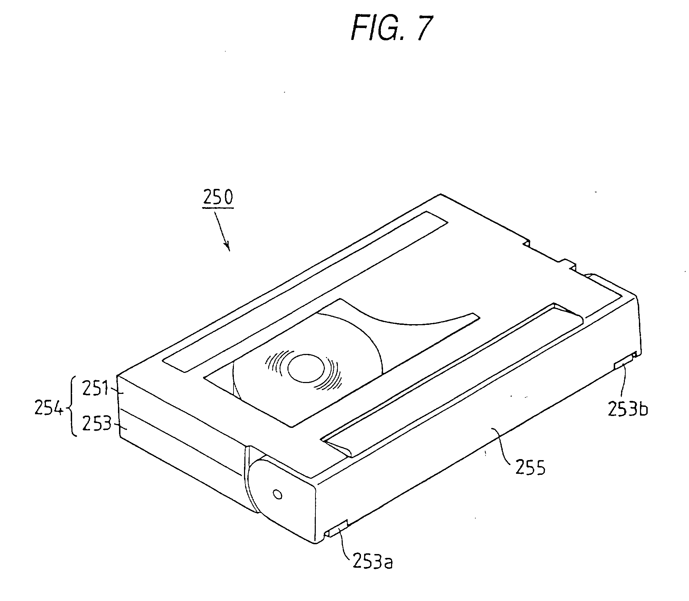

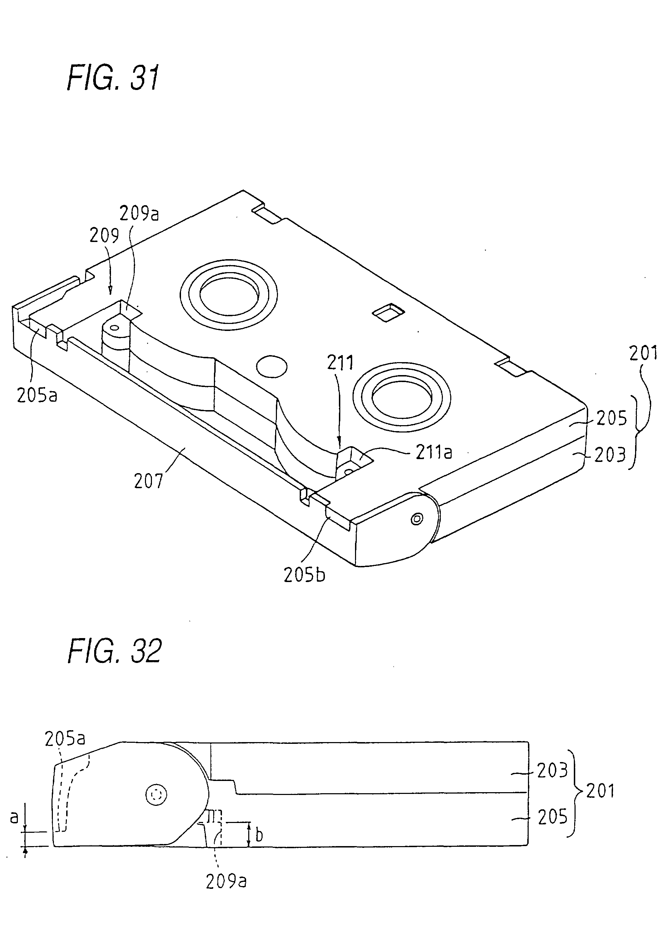

Here, Fig. 7 is a perspective view of a conventional magnetic tape cassette. A conventional magnetic tape cassette 250, which is shown in Fig. 31, comprises a cassette case 254 composed of upper and lower halves 251 and 253, and a lid 255 mounted on the cassette case 254, while the lid 255 is used to cover magnetic tape. And, in the front end of the lower half 253, there are provided a pair of ribs 253a and 253b which respectively project out from the cut-away portions of the lid 255. The push-in depth of the magnetic tape cassette 250 in the recording and reproducing apparatus, when the former is loaded into the latter, is determined by bringing stopper members provided in the recording and reproducing apparatus into contact with the ribs 253a and 253b. As a magnetic tape cassette the push-in depth of which is specified using this method, there are known an 8mm-cassette, a β cam cassette, a D2 cassette, a D3 cassette and the like.

By the way, in the above-mentioned magnetic tape cassette 250, because it is used many times in a broadcasting station or the like, it is repeatedly inserted into and removed from a recording and reproducing apparatus. In particular, the ribs 253a and 253b provided on the front end of the magnetic tape cassette 250 are repeatedly contacted with the stopper members of the recording and reproducing apparatus, with the result that the surfaces of the ribs 253a and 253b are roughened. The ribs 253a and 253b are normally used to restrict the height of magnetic tape and thus, if there are produced burrs in the ribs 253a and 253b due to the repeated contact thereof with the stopper members of the recording and reproducing apparatus, then there arises a possibility that the ribs 253a and 253b cannot display their functions to restrict the height of the magnetic tape or they can damage the magnetic tape.

Also, in a system in which a cassette operation function is executed during a cassette inserting operation, if the push-in depth of the magnetic tape cassette is restricted by the ribs 253a and 253b provided on the front end of the magnetic tape cassette 250, there is a possibility that, before a lid lock removing pin is contacted with a lid lock member keeping the closed condition of the lid to thereby remove the closed condition of the lid, the stopper members can be contacted with the ribs 253a and 253b. As a result, before the magnetic tape cassette 250 is able to operate, the magnetic tape cassette 250 is caused to stop within the recording and reproducing apparatus, which disables the cassette operation function from being displayed.

Further, if the position of a magnetic tape cassette in the recording and reproducing apparatus is restricted using a single rib provided in the front end of the lower half, there is a possibility that the magnetic tape cassette can be rotated with the single rib as a fulcrum thereof, which makes it impossible to restrict the position of the magnetic tape cassette in the horizontal direction thereof. Also, even if the position of a magnetic tape cassette in the recording and reproducing apparatus is restricted using two ribs respectively provided in the front end of the lower half, there is a possibility that the rear side of the magnetic tape cassette can be floated up, which makes it impossible to restrict the position of the magnetic tape cassette in the vertical direction thereof. Here, in order that the two ribs provided in the front end of the lower half are able to restrict the position of the magnetic tape cassette, they must be distant from each other as far as possible, they must be provided with high precision, they must be situated near to their respective reference holes, and they must have such height that can restrict the floatation of the magnetic tape cassette in the vertical direction.

These are third problems.

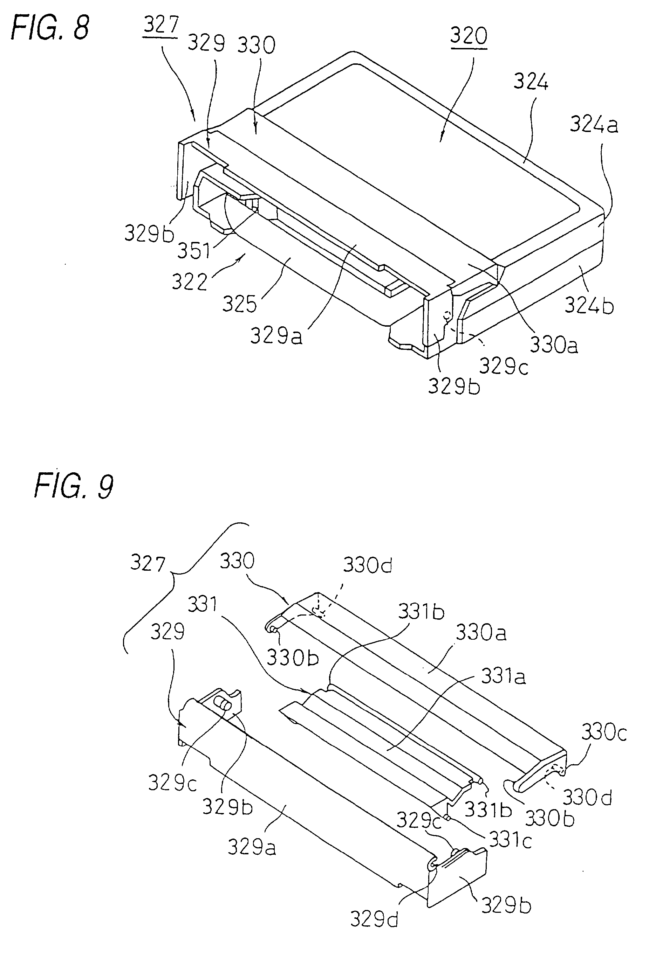

Moreover, Fig. 8 shows a conventional magnetic tape cassette for DVC in which an open/close lid capable of covering an opening formed in the front surface of a cassette main body in a freely openable and closable manner is composed of three lids. As shown in Fig. 8, the present magnetic tape cassette 320 comprises a cassette main body 324 including in the front surface thereof an opening 322 into which a tape draw-out member disposed on the side of equipment such as a VTR or the like can be inserted, a magnetic tape 325 stretched over the opening 322 by tape guides respectively disposed on the front surface of the cassette main body 324, and an open/close lid 327 assembled to the front surface side of the cassette main body 324 in such a manner that, when the magnetic tape cassette 320 is carried or transferred, the magnetic tape 325 stretched over the opening 322 can be covered by the open/close lid 327.

The cassette main body 324 is composed of an upper half 324a and a lower half 324b. Also, the open/close lid 327 is composed of an outer lid (front lid) 329, a top lid (upper lid) 330, and an inner lid (rear lid) 331.

Now, Fig. 9 is an exploded perspective view of the open/close lid 327. As shown in Figs. 8 and 9, the outer lid 329 includes a front lid plate 329a for covering the front surface side of the magnetic tape 325 stretched over the opening 322, and two side plate portions 329b which are respectively projected from the two sides of the front lid plate 329a. And, on the respective inner wall surfaces of the two side plate portions 329b, there are projectingly provided support shaft pins 329c, while the two support shaft pins 329c can be rotatably fitted into and supported by their associated pin support holes respectively formed in the two side surface portions of the upper half 324a that are located near to the front surface of the upper half 324a. Therefore, the outer lid 329 can be freely rotated about the support shaft pins 329c.

And, the top lid 330 comprises an upper lid plate 30a for covering the upper surface side of the magnetic tape 325 stretched over the opening 322, two front lid connecting pins 330b which are respectively used to connect the two ends of the upper lid plate 330a on the front edge side thereof to connecting holes 329d formed in the front lid plate 329a in such a manner that the present two ends of the top lid 330 can be freely rotated, and two slide pins 330d which are respectively provided on two arm portions 330c respectively extended from the rear end edge of the upper lid plate 330a and also which can be slidably engaged with two upper lid cam grooves respectively formed in the two side surface portions of the upper half 324a.

Referring to the operation of the top lid 330, when opening the outer lid 329, as the outer lid 329 is swung about the support shaft pins 329c, the slide pins 330d are moved or slided along the upper lid cam grooves; that is, as shown in Fig. 8, the top lid 330 is moved substantially in parallel to the upper surface of the cassette main body 324 to the rear end side of the cassette main body 324.

Further, the inner lid 331 comprises a inner lid plate 331a for covering the rear surface side of the magnetic tape 325 which is stretched over the opening 322, two upper lid connecting portions 331b for connecting the upper edge of the inner lid plate 331a to the upper lid plate 330a in such a manner that the upper edge of the inner lid plate 331a can be freely rotated, and two slide pins 331c which are respectively provided on and projected from the two end portions of the lower edge of the inner lid plate 331a and also can be slided into two S-shaped inner lid cam grooves 351 respectively formed in the inner surface portions of tape guide members respectively disposed in the lower half 324b.

Referring to the operation of the inner lid 330, when opening the outer lid 329, the two upper lid connecting portions 331b are moved with the movement of the top lid 330 and, as the two upper lid connecting portions 331b are moved, the two slide pins 331c are slided on their associated inner lid cam grooves 351 which are respectively formed in the lower half 324b.

When the above-structured magnetic tape cassette 320 is loaded into equipment such as a VTR, the two side plates 329b of the outer lid 329 are pushed upward by lid opening pins (not shown) disposed on the equipment side or on the VTR side and, in linking with the lid opening operation of the outer lid 329, the top lid 330 and inner lid 331 are opened. To take out the magnetic tape cassette 320 from the equipment or VTR, reversely to its loading operation, the respective lids may be closed.

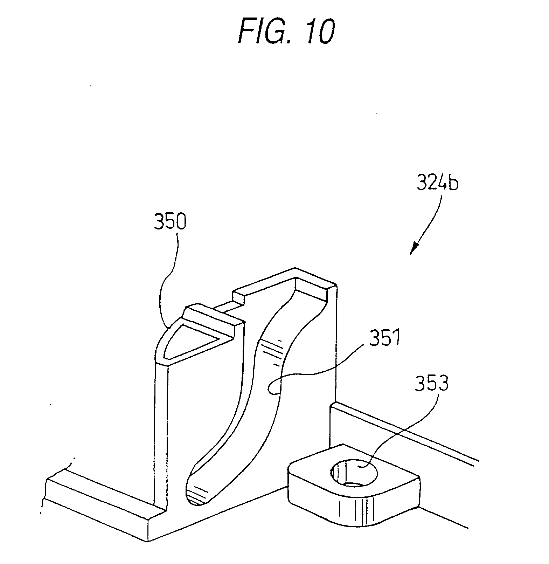

Now, in Fig. 10, there is shown an enlarged view of one of the above-mentioned tape guide members 350 and its neighboring portion. As shown in Fig. 10, in the inner surface portion of the tape guide member 350 of the lower half 324b, there is formed the inner lid cam groove 351 on which the slide pins 331c of the inner lid 331 can be slided. And, adjacently to the inner lid cam groove 351, there is formed a detect hole 353 which serves as reference for positioning the cassette.

By the way, since the inner lid cam groove 351 and detect hole 353 are so positioned as to adjoin each other, the thickness of a connecting portion between the inner lid cam groove 351 and detect hole 353 is increased over the thickness of the remaining portions. However, when the increased thickness portion is molded, there arises a problem: that is, when the molten resin is cooled and hardened, it contracts and thus the volume thereof is reduced, which may produce a sink mark on the surface of the molding.

This is a fourth problem.

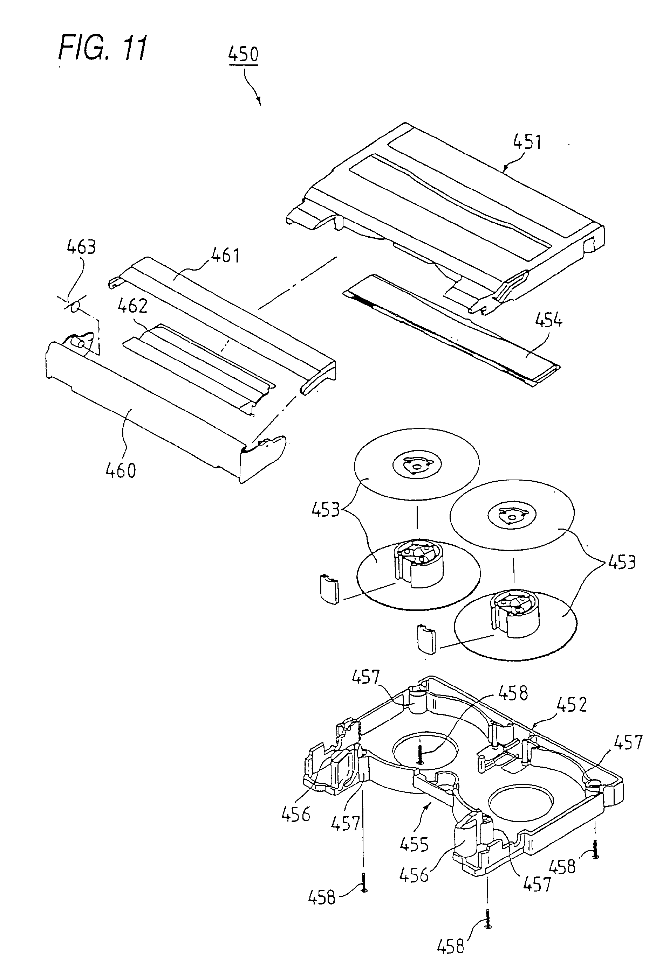

Fig. 11 shows a small-size (S-size) magnetic tape cassette for a DVC. As shown in Fig. 11, a magnetic tape cassette 450 comprises an upper cassette half 451 and a lower cassette half 452 and, within the lower cassette half 452, there are rotatably supported a pair of tape reels 453 with magnetic tape (not shown) wound therearound.

The lower cassette half 452 includes an opening 455 on this side in Fig. 11 and, on the two sides of the opening 455, there are disposed two tape guides 456 respectively. The two tape guides 456 are used to guide magnetic tape, which is fed out from one tape reel 453 and is wound around the other tape reel 453, and also allow the magnetic tape to pass through the opening 455 at a given position thereof.

Also, in the lower cassette half 452, in particular, at four positions which are situated near the four corner portions of the lower cassette half 452, there are disposed four screw bosses (which are hereinafter referred to as lower bosses) respectively including insertion holes into which their associated screws 458 can be inserted respectively.

In the upper cassette half 451, in particular, in the substantially central portion of the upper cassette half 451 in the lateral direction thereof, there is formed a substantially rectangular-shaped opening which extends in the longitudinal direction of the upper cassette half 451, so that the winding amounts of the magnetic tape on the respective tape reels can be confirmed through the opening; and, there is also disposed a transparent window 454 in such a manner that it can close the present opening. Also, on the upper cassette half 451, there are mounted an outer lid 460, an upper lid 461 and an inner lid 462 which are respectively used to cover the opening 455 of the lower cassette half 452, while the outer lid 460, upper lid 461 and inner lid 462 are respectively arranged in such a manner that they can be freely opened and closed. And, the outer lid 460 is normally energized in its closing direction by a spring 463.

Also, in the upper cassette half 451 as well, in particular, at the positions thereof that correspond to the lower bosses disposed in the lower cassette half 452, there are disposed four screw bosses (which are hereinafter referred to as upper bosses) into which the above-mentioned screws 458 can be inserted.

In the thus structured small-size magnetic tape cassette 450, to fix together the upper and lower cassette halves 451 and 452, the screws 458 may be respectively inserted into the lower bosses 457 disposed in the lower cassette half 452 and, after then, the present screws 458 may be threadedly engaged into the upper bosses 457 disposed in the upper cassette half 451 respectively.

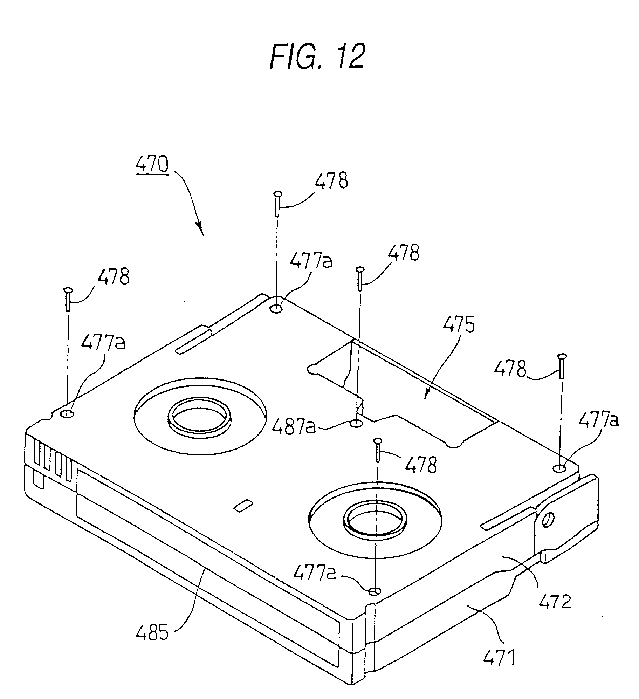

Now, Fig. 12 shows a perspective view of a large- (L-) size magnetic tape cassette for DVC. In the magnetic tape cassette 470 shown in Fig. 12, to fix upper and lower cassette halves 471 and 472 to each other, screws 478 may be respectively inserted into the insertion holes 477a of four lower bosses disposed at the four positions of the lower cassette half 472 that are respectively located near the four corner portions of the lower cassette half 472 as well as into the insertion hole 487a of a lower opening side center boss disposed at a position of the longitudinal center portion of the lower cassette half 472 on the opening 475 side and, after then, the screws 478 may be threadedly engaged into four upper bosses and an upper opening side center boss (not shown) which are respectively disposed at the corresponding positions of the upper cassette half 471.

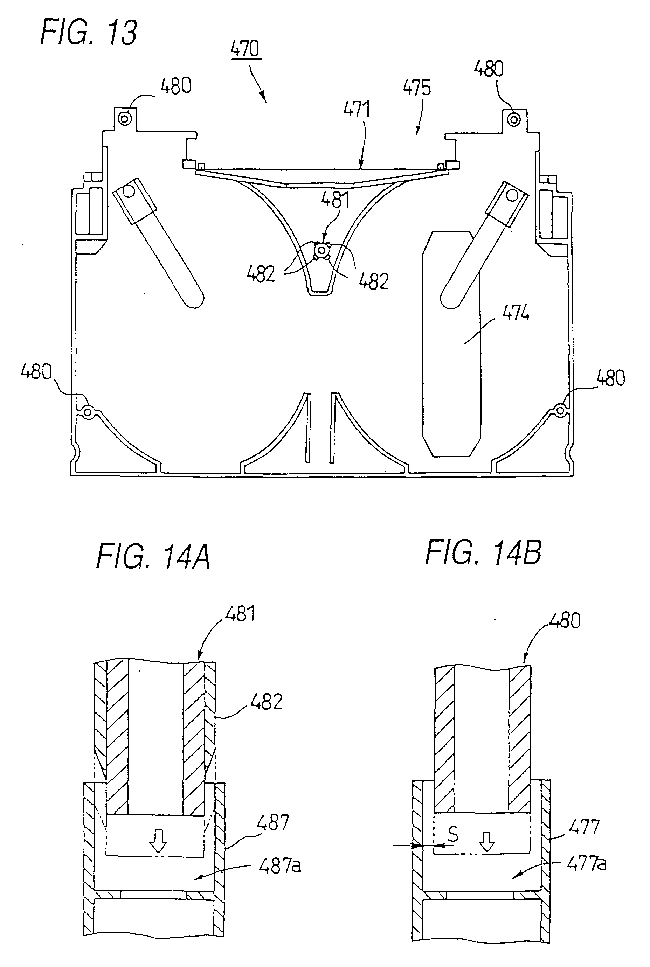

Now, Fig. 13 shows the inner surface view of the upper cassette half 471 of the above-mentioned conventional magnetic tape cassette 470. In upper bosses 480 which are respectively disposed at the four positions of the upper cassette half 471 that are located near the four corner portions of the upper cassette half 471, there are respectively opened up cylindrical-shaped self-tapping holes the diameters of which are slightly smaller than the shaft diameters of the screws 478 shown in Fig. 12. In the respective wall surfaces of the four self-tapping holes, there are formed threads by pushing the screws 478 into these holes forcibly, that is, by so called self-tapping. In an opening side upper center boss 481 which is disposed on the opening 475 side of the longitudinal-direction center portion of the upper cassette half 471, not only there is opened up a self-tapping hole but also, on the outer periphery of the opening side upper center boss 481, there are formed four positioning ribs 482 which are spaced from one another in the peripheral direction thereof.

On one side (in Fig. 13, on the right side) of the upper cassette half 471 in the longitudinal direction thereof, there is formed a substantially rectangular-shaped opening which extends in the lateral direction of the upper cassette half 471; and, there is also disposed a window 474 in such a manner that it can close the present opening.

If the thus structured upper cassette half 471 is made to approach the lower cassette half 472 shown in Fig. 12 in order to fit the upper cassette half 471 with the lower cassette half 472, then, as shown in Fig. 14A, at first, the leading end of the upper center boss 481 of the upper cassette half 471 is inserted into the insertion hole 487a of the lower center boss 487 of the lower cassette half 472. At the then time, as shown in Fig. 14B, the respective leading ends of the four upper bosses 480 disposed at the four positions of the upper cassette half 471 that are respectively situated near to the four corner portions of the upper cassette half 471 are also respectively inserted into the insertion holes of the four lower bosses 477 which are disposed at their respective corresponding positions of the lower cassette half 472.

And, if the upper cassette half 471 is made to approach the lower cassette half 472 further, then the four positioning ribs 482 of the upper center boss 481 shown in Fig. 14A are respectively fitted into the insertion hole 487a, thereby being able to position the upper and lower cassette halves.

In the above-described conventional magnetic tape cassettes 450 and 470, in the upper cassette halves 451 and 471, there are respectively formed the openings, while there are also disposed the windows 454 and 474 respectively for closing their associated openings. However, because the windows 454 and 474 are lower in strength than the remaining portions of the upper cassette halves 451 and 471, when the upper and lower cassette halves are fixed together by the screws 458 and 478, the upper and lower cassette halves can' be twisted or flexed. In the magnetic tape cassette 470 shown in Figs. 12 to 14B, since, only on one side of the upper cassette half 471 on the longitudinal direction thereof, there is disposed the window 474 which extends in the lateral direction of the upper cassette half 471, the upper and lower cassette halves can be easily twisted when they are fixed together by tightening the screws 478, which can cause a gap between the engaged surfaces of the upper and lower cassette halves on the back surface side (in Fig. 12, on this side) thereof. Especially, when the area of the opening of the upper cassette half 471 to be closed by the window 474 is more than or equal to 1/5 of the area of the bottom plate of the upper cassette half 471, the above-mentioned gap becomes large, that is, this is one of the problems that cannot be solved in the conventional magnetic tape cassette.

Also, as shown in Fig. 14B, between the outer peripheral surfaces of the four upper bosses 480 disposed at the four positions near the four corner portions of the upper cassette half and the inner peripheral surfaces of the four lower bosses 477 of the lower cassette half, there is present a gap S in a state where the upper and lower cassette halves are fitted with each other. In the magnetic tape cassette 470, the upper and lower cassette halves are positioned by the upper and lower opening side center bosses 481 and 487. However, the shifts or deviations of the upper and lower cassette halves in the rotation direction thereof around the center bosses 481 and 487 cannot be restricted. For this reason, while the upper and lower cassette halves remain shifted in the rotation direction thereof around the center bosses 481 and 487, the screws 478 threadedly inserted into the upper center boss 481 and upper bosses 480 are tightened, thereby causing a large gap between the engaged surfaces 485 of the upper and lower cassette halves on the back surface side (in Fig. 12, on this side) thereof.

These are fifth problems.

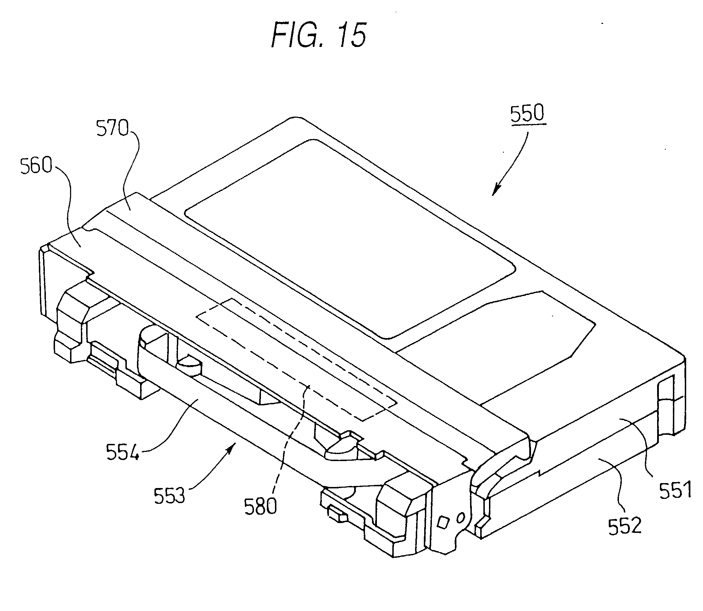

Here, Fig. 15 shows a perspective view of a conventional magnetic tape cassette. As shown in Fig. 15, the magnetic tape cassette 550 comprises a cassette case which is composed of upper and lower cassette halves 551 and 552 and, over an opening 553 formed in the front portion of the cassette case, there is stretched magnetic tape 554. The magnetic tape 554, when not in use, is covered or closed by an outer lid 560, a top lid 570 and an inner lid 580.

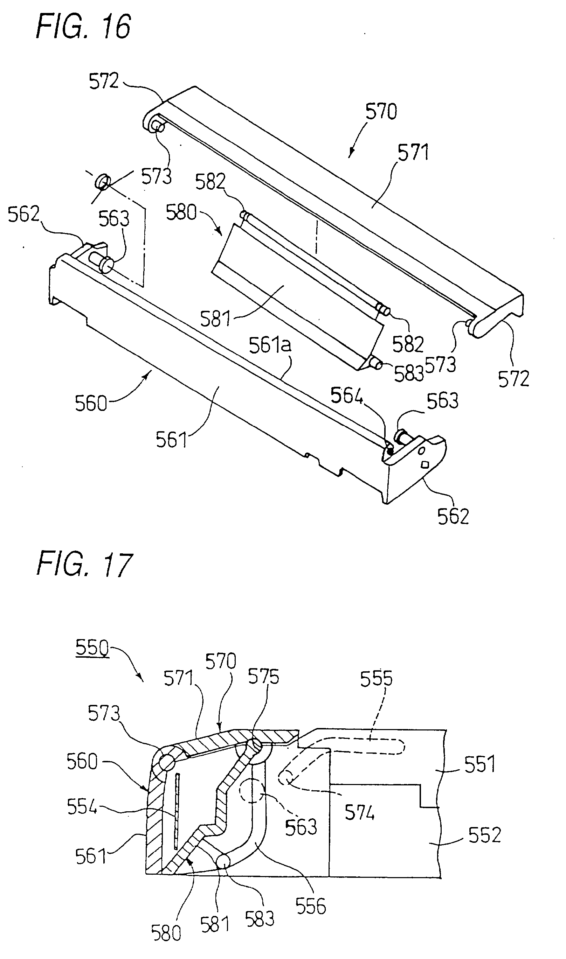

Now, Fig. 16 shows an exploded perspective view of the lid part of the cassette case of the magnetic tape cassette 550, while the lid part is composed of an outer lid 560, a top lid 570, and an inner lid 580. In particular, the outer lid 560 includes an outer lid portion 561 for covering the front surface of the magnetic tape stretched over the opening 553, and two side plate portions 562 which are respectively disposed on the two ends of the outer lid portion 561 for covering the two side portions of the upper and lower cassette halves. In the inside of the respective side plate portions 562, there are disposed two support pins 563 which can be rotatably engaged with cutaway portions (not shown) formed in the two side surfaces of the front portion of the upper cassette half. Also, the outer lid portion 561 includes a projecting portion 561a which is located inside the side plate portions 562 and projects toward the top lid 570 side from the end portions of the side plate portions 562. In the two ends of the projecting portion 561a, there are formed pin holes 564.

The top lid 570 includes a top lid portion 571 for covering the upper edge of the magnetic tape stretched over the opening 553, and two side plate portions 572 which are respectively disposed on the two ends of the outer lid portion 571 for covering the two side portions of the front portion of the upper cassette half. On the front side (on the side of the outer lid 560) of the inside of the two side plate portions 572, there are projectingly provided two connecting pins 573 which can be rotatably engaged with the pin holes 564 of the outer lid 560 to thereby connect the top lid 570 to the outer lid 560. Also, on the rear side of the inside of the two side plate portions 572, there are provided two slide pins 574 (see Fig. 17) which can be slidably engaged with two guide grooves (see Fig. 17) respectively formed in the two side surfaces of the front portion of the upper cassette half.

The inner lid 580 includes an inner lid portion 581 for covering the back surface of the magnetic tape stretched over the opening 553, and, on the two side surfaces of the upper end (the top lid side) of the inner lid portion 581, there are projectingly provided two connecting pins 502 which can be rotatably engaged with two pin holes 575 (see Fig. 17) formed in the top lid 570 to thereby connect the inner lid 580 to the top lid 570. Also, on the two side surfaces of the lower end of the inner lid 581, there are projectingly provided two slide pins 583 (see Fig. 17) which can be slidably engaged with two guide grooves (see Fig. 17) respectively formed in the lower cassette half.

Now, in Fig. 17, there is shown a schematic section view of the front portion of the magnetic tape cassette 550 in a state where the outer lid 560, top lid 570 and inner lid 580 are closed. In this manner, the magnetic tape 554, when not in use, is covered or closed by the three lids 560, 570 and 580 and is thereby protected against dust or the like. A portion (for example, the outer surface of the outer lid portion 561, the outer surfaces of the side plate portions 562 or the like), which can be observed visually from outside the outer lid 560, top lid 570 and inner lid 580 in the covered state, is formed as a coarse surface, in order to be able to obtain a similar appearance to the upper and lower cassette halves.

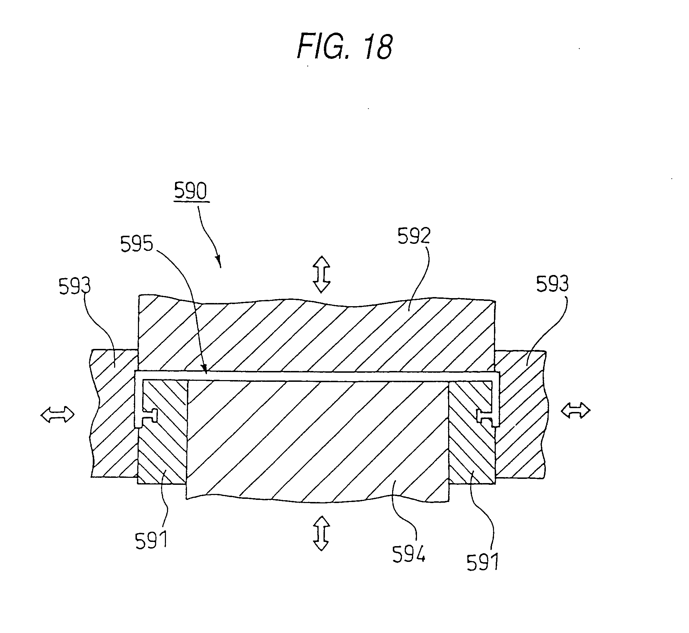

Next, description will be given below of a mold which is used to mold the above-mentioned outer lid 560. As shown in Fig. 18, in the mold 590 for molding the outer lid 560, a cavity portion 595, into which molding material is to be loaded, is defined by a fixed mold 591, and a plurality of slide cores 592, 593, 594. Among these defining elements, the molding surfaces of the slide cores 592 and 593 on the outer surface side of the outer lid 560 are subjected to a surface treatment (for example, a so-called sand blast manner in which sand are impinged to a surface with compressed air so as to make the surface coarser) and are thereby formed as coarse surfaces.

In a mold which includes a plurality of slide cores in order to mold a complicated shape, such as the above-mentioned mold 590 for molding the outer lid 560, when opening or tightening the mold, there can be produced a portion where the two slide cores are slidingly contacted with each other, or a portion where the slide core is slidingly contacted with the mold main body. In the above-mentioned mold 590, for example, between the two slide cores 592 and 593, there is produced a portion where they are slidingly contacted with each other.

By the way, since the surfaces of the two slide cores 592 and 593 are respectively formed as the coarse surfaces, the surfaces have a high coefficient of friction and thus, in the mutually sliding contact portions of these slide cores, the parts of the mold for molding such slide cores are liable to wear in the early stage. If the mold parts are worn, then the resin flows out of the worn portion to thereby cause burrs.

This is a sixth problem.

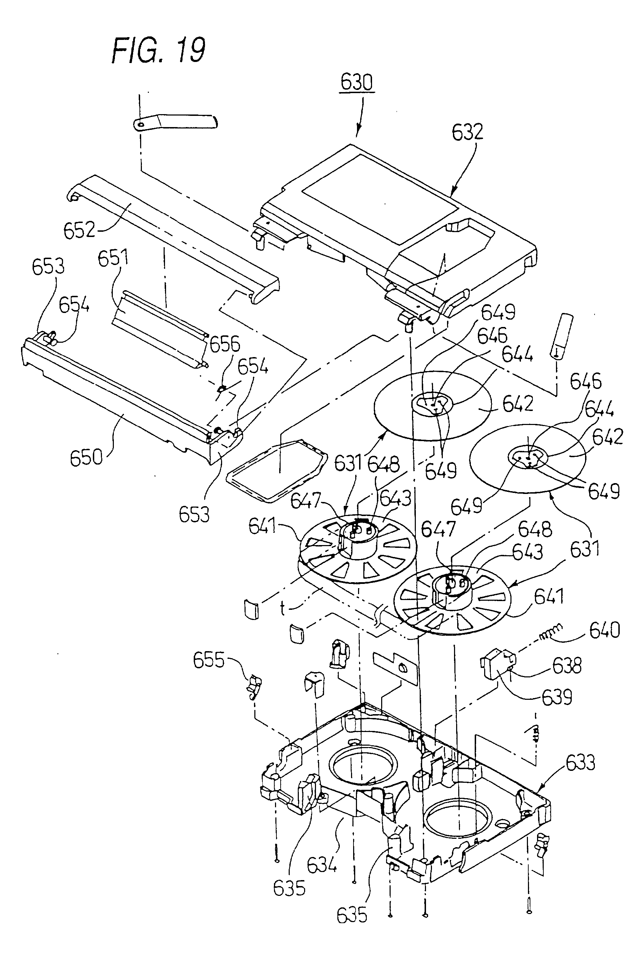

Here, referring to Fig. 19, conventionally, as a magnetic tape cassette which is used as a DVC, there is known a magnetic tape cassette 630 in which a pair of tape reels 631 with magnetic tape t wound therearound are rotatably supported within a lower cassette half 633 which is the companion to an upper cassette half 632.

In the lower cassette half 633, in particular, on this side of the lower cassette half 633 in Fig. 19, there is formed an opening 634 and, on the two sides of the opening 634, there are disposed two tape guides 635. The two tape guides 635 are respectively used to guide the magnetic tape t, which is fed out of one tape reel 631 and is then wound around the other tape reel 631, in such a manner that the two tape guides 635 allow the magnetic tape t to pass through a given position in the opening 634.

Also, on the rear side of the lower cassette half 633, there is disposed a reel lock member 639 which includes a tape reel securing arm 638. The reel lock member 639 is energized by a coiled compression spring 640 to thereby bring the tape reel securing arm 638 into engagement with engaging teeth 641 formed on the respective outer peripheries of the two tape reels 631, thereby preventing the unexpected rotation of the two tape reels 631. This can prevent the magnetic tape t from loosening its windings.

On the upper cassette half 632, there are mounted an outer lid 650, a top lid 651 and an inner lid 652 in such a manner that they can be freely opened and closed, while these lids are used to cover the opening 634 formed in the lower cassette half 633.

The outer lid 650 includes two side plates 653 and two lock pins 654 which are provided on and projected from their associated side plates 653. The two lock pins 654 are respectively secured to their associated lid locks 655 which are rotatably disposed on the lower cassette half 633. By the way, in Fig. 19, reference character 656 designates a lid spring which is mounted on the rotary shaft of the outer lid 650.

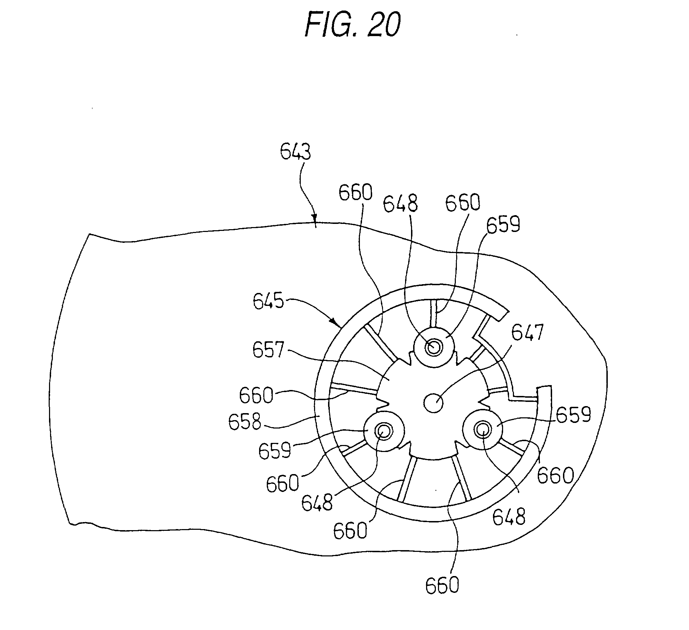

Now, referring to Figs. 19 and 20, each of the two tape reels 631 is structured such that the mutually opposing upper and lower reels 642 and 643 of the tape reel 631 are fixed together with a given distance between the flange portion 644 of the upper reel 642 and the boss portion 645 of the lower reel 643.

In particular, in each tape reel 631, a pivot 647 provided on and projected from the boss portion 645 of the lower reel 643 is fitted into a pivot hole 646 which is % formed in the flange portion 644 of the upper reel 642. Also, welding bosses 648, which are provided at and projected from the positions of the boss portion 645 of the lower reel 643 spaced in the radial direction of the boss portion 645 from the pivot 647, are fitted into welding boss holes 649 respectively formed at the positions of the flange portion 644 of the upper reel 642 that correspond to the welding bosses 648. In this state, if the welding horns (not shown) are contacted with the substantially central portions of the leading end faces (in Fig. 19, the upper end faces) of the welding bosses 648, then the welding bosses 648 can be welded by ultrasonic waves. As a result of this, the mutually opposing upper and lower reels 642 and 643 can be fixed together in such a manner that there is a clearance or a distance between the flange portion 644 of the upper reel 642 and the boss portion 645 of the lower reel.

The boss portion 645 of the lower reel 643 includes, in the periphery thereof which is spaced in the radial direction of the boss portion 645 from a boss center portion 657 of the boss portion 645 where the pivot 647 is projectingly provided, a side wall 658 which serves as the winding surface of the magnetic tape t; and, not only the boss center portion 657 and side wall 658 are connected together but also the base end portions 659 of the welding bosses 648 are the side wall 658 of the boss portion 645 are connected together by a plurality of ribs 660 which are respectively disposed along the radial direction of the boss portion 645.

However, in the conventional magnetic tape cassette 630, when the welding bosses 648 are welded by ultrasonic waves, the oscillation energy of the ultrasonic waves from the welding horns is dispersed over to the other remaining portions of the lower reel 643 than the welding bosses 648, for example, through the ribs 660 interposed between the base end portions 659 of the welding bosses 648 and the side wall 658 of the boss portion 645, which results in the low efficiency of transmission of the oscillation energy of the ultrasonic waves to the welding bosses 648 from the welding horns. Therefore, it takes longer time to weld the welding bosses 648 by ultrasonic waves and the welding operation lacks welding stability. The lack of welding stability raises a fear that the mutually opposing attitudes of the upper and lower reels 642 and 643 can be distorted, which, when the tape reels 631 are rotated, can cause the surfaces of the tape reels 631 to vibrate.

This is a seventh problem.

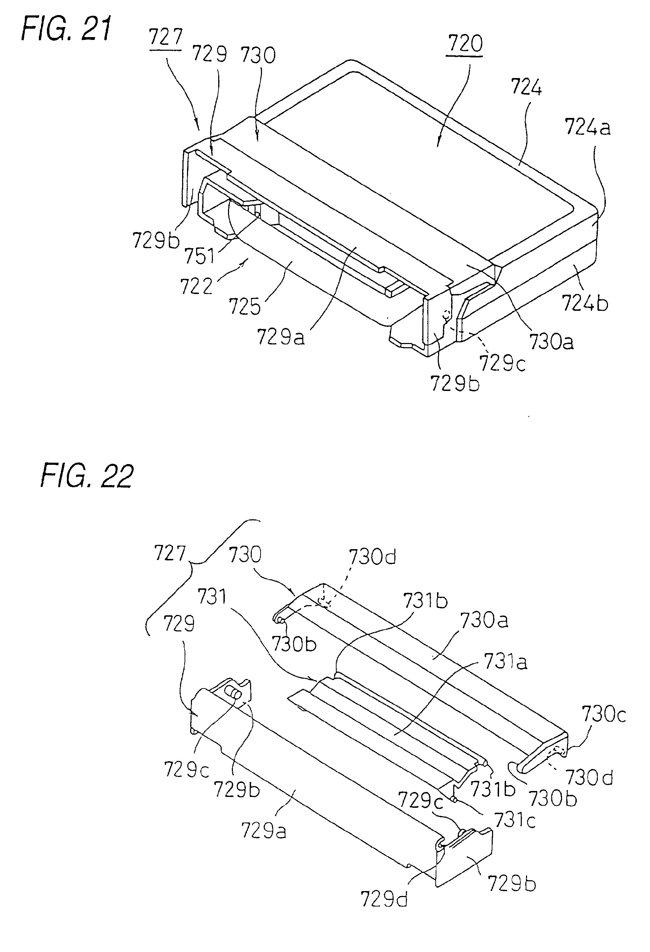

Here, Fig. 21 is a perspective view of a conventional magnetic tape cassette for DVC including an open/close lid of a three-lid type. As shown in Fig. 21, the conventional magnetic tape cassette 720 comprises a cassette main body 724 including in the front surface thereof an opening 722 for insertion of a tape pull-out member disposed on the apparatus side such as the VTR or the like, magnetic tape 725 stretched over the opening 722 by two tape guides respectively disposed on the front surface of the cassette main body 724, and an open/close lid 727 assembled to the front surface side of the cassette main body 724 so that the magnetic tape 725 stretched over the opening 722 can be covered by the open/close lid 727 when the magnetic tape cassette 720 is carried.

The cassette main body 724 is composed of an upper half 724a and a lower half 724b. Also, the open/close lid 727 is composed of three lids, that is, an outer lid (front lid) 729, a top lid (upper lid) 730, and an inner lid (rear lid) 731.

Now, Fig. 22 is an exploded perspective view of the open/close lid 727. As shown in Figs. 21 and 22, the outer lid 729 includes a front lid plate 729a for covering the front surface side of the magnetic tape 725 stretched over the opening 722, and two side plate portions 729b respectively projected out from the two sides of the front lid plate 729a. And, two support shaft pins 729c are respectively provided on and projected from the inner wall surface of the two side plate portions 729b, while the two support shaft pins 729c can be rotatably fitted into and supported by pin support holes respectively formed in the portions of the two side surface portions of the upper half 724a that are respectively located near the front surface of the upper half 724a. Thus, the outer lid 729 can be freely rotated about the two support shaft pins 729c.

The top lid 730 includes an upper lid plate 730a for covering the upper surface side of the magnetic tape 725 stretched over the opening 722, two front lid connecting portions 730b for connecting the two ends of the upper lid plate 730a on the front edge side thereof to their associated connecting holes 729d respectively formed in the upper edge of the front lid plate 729a, and two slide pins 730d which are respectively provided on and projected from their associated arm portions 730c extended from the rear end edge of the upper lid plate 730a and also which can be slidably engaged with their associated upper lid cam grooves respectively formed in the two side surface portions of the' upper half 724a.

Here, referring to the operation of the top lid 730, when opening the outer lid 729, as the outer lid 729 is swung about the support shaft pins 729c, the slide pins 730d of the top lid 730 are moved along the upper lid cam grooves, that is, as shown in Fig. 21, the slide pins 730d are moved substantially in parallel to the upper surface of the cassette main body 724 to the rear end side of the cassette main body 724.

Now, the inner lid 731 includes an inner lid plate 731a for covering the rear surface side of the magnetic tape 725 stretched over the opening 722, two upper lid connecting portions 731b for connecting the upper edge of the inner lid plate 731a to the upper lid plate 730a in a freely rotatable manner, and two slide pins 731c which are respectively projected from the two lower-edge-side end portions of the inner lid plate 731a and can be engaged with their associated inner lid cam grooves 751 respectively formed in the inner side surface portions of the cassette main body 724 and each having an S-shaped section.

Here, referring to the operation of the inner lid 731, when opening the outer lid 729, the upper lid connecting portions 731b are moved following the movement of the top lid 730 and, as the upper lid connecting portions 731b are moved, the slide pins 731c are respectively moved on their associated inner lid cam grooves 751.

If the above-structured magnetic tape cassette 720 is loaded into the VTR, then the two side plate portions 729b of the outer lid 729 are pushed upward by lid opening pins (not shown) disposed on the VTR side and, in linking with the then opening operation of the outer lid 729, the top lid 730 and inner lid 731 are opened respectively. To take out the magnetic tape cassette 720 from the VTR, reversely to the loading operation, the respective lids may be closed.

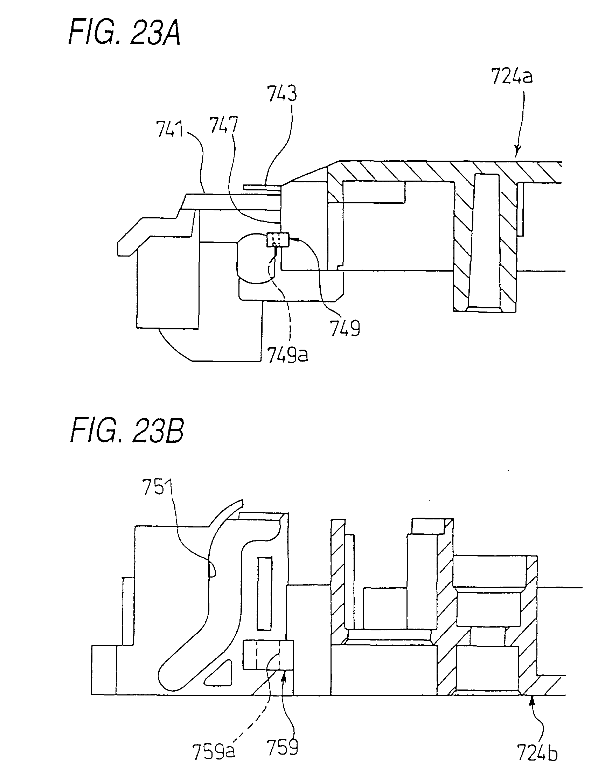

Now, Fig. 23A is a partially enlarged section view of the above-mentioned upper half 724a, taken along the longitudinal direction thereof, and Fig. 23B is a partially enlarged section view of the above-mentioned lower half 724b, taken along the longitudinal direction thereof. As shown in Fig. 23A, in the upper half 724a, in particular, on the tape travel area thereof, there is disposed an upper lid 741. Also, on the opposite side of the upper lid 741 with respect to the side surface of the magnetic tape cassette 720, there are disposed a flat-plate-shaped cam lid 743 for preventing the slide pin 731c of the inner lid 731 from moving to the upward side of the magnetic tape cassette 720, and a front surface 747 of the upper half 724a. On either side of the upper half front surface 747, there is disposed a dimension reference projection 749 with a reference hole 749a opened up therein in such a manner that the dimension reference projection 749 projects forwardly of the magnetic tape cassette 720.

On the other hand, as shown in Fig. 23B, in the lower half 724b, there is formed an inner lid cam groove 751 along which the slide pin 731c of the inner lid 731 can be slided. Similarly to the above-mentioned upper half 724a, in the lower half 724b as well, in the neighborhood of the inner lid cam groove 751, there is disposed a dimension reference projection 759 with a reference hole 759a opened up therein in such a manner that the dimension reference projection 759 projects forwardly of the magnetic tape cassette 720.

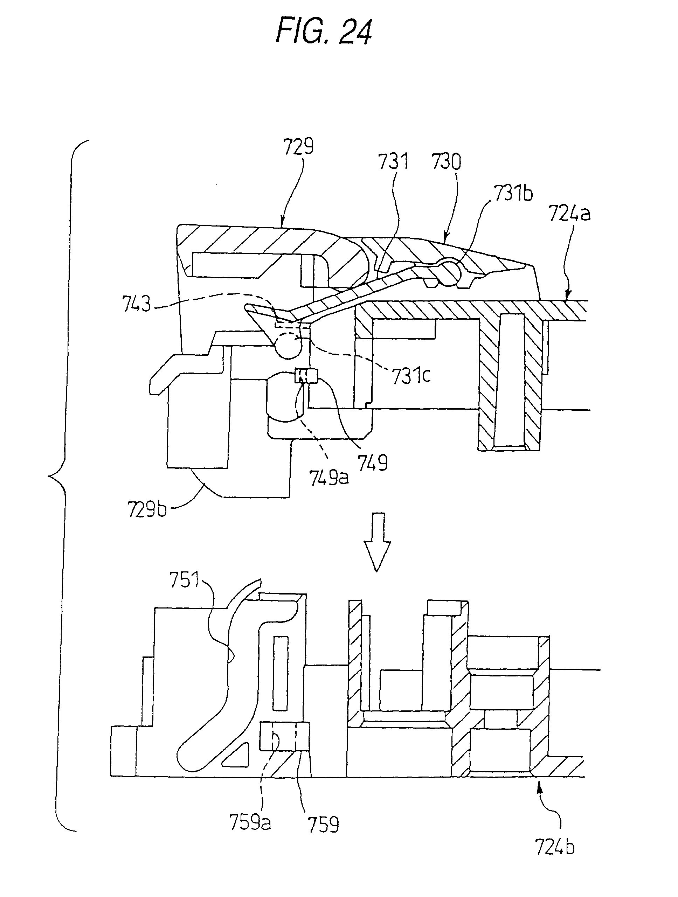

When assembling the above-mentioned magnetic tape cassette 720 including the open/close lid 727 of a three-lid type, the three lid, that is, the outer lid 729, top lid 730 and inner lid 731 have been previously assembled provisionally. After then, the two slide pins 730d of the top lid 730 are respectively fitted into their associated upper lid cam grooves formed in the upper half 724a and, at the same time, the two support shaft pins 729c of the outer lid 729 are respectively fitted into their associated pin support holes formed in the two side surface portions of the upper half 724a located near the front surface thereof, thereby assembling the three lids 729, 730 and 731 to the upper half 724a. Next, as shown in Fig. 24, in a state where the open/close lid 727 is completely opened, the upper half 724a is assembled onto the lower half 724b placed on a support base while matching together the reference holes 759a and 749a of their respective dimension reference projections 759 and 749.

By the way, when assembling the upper half 724a onto the lower half 724b, if the assembling operation is carried out by hand, then there is a possibility that, while the upper half 724a is not located in parallel to the ground, the upper half 724a can be held by hand and assembled to the lower half 724b. In this case, since the inner lid 731 is connected to the top lid 730 in such a manner that only the upper lid connecting portions 731b of the inner lid 731 can be rotated, the inner lid 731 can be shifted from its proper position with the upper lid connecting portions 731b thereof as the center of its motion. As a result of this, the slide pins 731c of the inner lid 731 are caused to move, so that the slide pins 731c cannot be fitted into the cam grooves 751 positively, which makes it difficult to assemble the upper half 724a to the lower half 724b positively.

This is an eighth problem.

The present invention aims at eliminating the drawbacks found in the above-mentioned conventional magnetic tape cassette.

In particular, the present invention aims at eliminating the fifth problems found in the above-mentioned conventional magnetic tape cassettes.

Accordingly, it is an object of the present invention to provide a magnetic tape cassette as indicated above in which the mutual fitting and fixation of the upper and lower cassette halves can be carried out easily and positively without causing any gap between the engaged surfaces of the upper and lower cassette halves.

This objective is solved in an inventive manner by a magnetic tape cassette having the features of claim 1.

Accordingly, there is provided a magnetic tape cassette structured such that a pair of tape reels with magnetic tape wound therearound are rotatably supported within a cassette case composed of upper and lower cassette halves, screws are inserted into lower bosses disposed in the lower cassette half, and the above-mentioned screws are then threadedly engaged with upper bosses disposed in the upper cassette half, thereby fixing the upper and lower cassette halves to each other, wherein, on the back surface side of the lower cassette half, there is disposed a lower back surface side center boss and, at a position of the upper cassette half that corresponds to the lower back surface side center boss, there is disposed an upper back surface side center boss including two or more positioning ribs thereon.

Here, the upper and lower back surface side center bosses may be preferably disposed in the neighborhood of the longitudinal-direction center portions of the upper and lower cassette halves among all areas of the back surface sides of the upper and lower cassette halves. If they are disposed in these preferred areas, the upper and lower cassette halves can be fixed together uniformly.

In particular, when, on one side of the upper cassette half in the longitudinal direction thereof, there is formed an opening which extends in the lateral direction of the upper cassette half, and also there is disposed a window in such a manner as to close this opening, in order that the upper back surface side center boss can be situated in the neighborhood of the window, the lower back surface side center boss may be preferably disposed at a position shifted from the longitudinal-direction center portion of the lower cassette half. If the lower back surface side center boss is disposed at this position, then the strength of the window can be reinforced, thereby being able to control the torsion and flexure of the window itself.

According to the thus structured magnetic tape cassette, since the center bosses are disposed on the back surface side of the upper and lower cassette halves, the strength of the upper and lower cassette halves against torsion and flexure can be enhanced and also, when compared with the conventional magnetic tape cassette in which the upper and lower cassette halves thereof are positioned only by the upper and lower opening side center bosses, the shifts or deviations of the upper and lower cassette halves around the opening side center bosses can be controlled. Further, because two or more positioning ribs are disposed on the upper back surface side center boss, the upper and lower cassette halves can be scarcely deviated around the opening side center bosses.

According to a preferred embodiment of the invention, there is provided a magnetic tape cassette, comprising: a cassette case composed of upper and lower halves and including an opening at the front end thereof; a pair of reels which are respectively so stored within the cassette case as to be freely rotatable and around which magnetic tape can be wound; a lid for covering the magnetic tape passing through the above-mentioned opening in such a manner the magnetic tape can be freely opened and closed; a lid lock for locking the lid in its closed state; and, a lid spring capable of not only energizing the lid in its closed state but also energizing the lid lock in the closing direction of the lid, wherein a coil portion of the lid spring is mounted in a loose fit manner on a support shaft pin which is so disposed on the side plate of the lid as to extend at right angles to the present lid side plate, one leg portion of the lid spring is secured to a projection portion provided on the side plate of the lid, and the other leg portion of the lid spring is secured to a projection portion provided on the side surface of the upper half and can be engaged with the lid lock from the upper half side to thereby energize the lid lock in the closing direction of the lid, characterized in that, on the upper half, there is disposed position restrict means which can be contacted with the coil portion of the lid spring to thereby restrict the position of the present coil portion.

According to this embodiment, the position restrict means disposed on the upper half is contacted with the coil portion of the lid spring to thereby be able to restrict the position of the lid spring. And, even if the opening and closing operations of the lid are carried out repeatedly, the lid spring can be prevented from removing from its proper mounting position.

Therefore, there is no possibility that the support shaft pin of the lid can be shaved, which can prevent the occurrence of the shavings of the support shaft pin. This makes it possible not only to prevent a serious error such as drop-out or the like but also to assure a reliable lid lock.

Here, as the position restrict means, for example, there are available the flat-plate-shaped rib provided on the upper half, the extended portion of the cam groove of the upper half on which the slide pin of the top lid can be slided, and the like.

Thus, the first problems found in the above-mentioned conventional magnetic tape cassette is eliminated.

Furthermore, the shaving of the support shaft pin of the lid caused by the inclination of the coil spring of the lid spring can be prevented.

The position of the coil portion of the lid spring is restricted property and, therefore, the lid spring can be prevented from removing from its proper mounting position.

According to a further preferred embodiment of the present invention, there is provided a magnetic tape cassette, comprising: upper and lower half cases to be screwed together while they are superimposed on top of each other; a pair of reels rotatably stored within the upper and lower half cases, with magnetic tape being wound around the two reels; an open/close lid capable of closing an opening formed in one end of the upper and lower half cases, the lid being openable when pulling out the magnetic tape from the above-mentioned opening; and, two screw bosses respectively formed in their associated two extension portions respectively extended from their associated two eaves portions projected from the upper half case to the opening side, the screw bosses being threadedly engageable with their associated screws when fixing the upper and lower half cases to each other using such screws, the screw bosses being capable of restricting the distance between the upper and lower half cases in the opening, wherein the upper half case is molded while two gates for injection of resin are respectively situated in the neighborhood of the back surface side of their associated one of the screw bosses, characterized in that the upper half case includes, in the portions thereof that are respectively so disposed as to be opposed to the two gates, two increased thickness portions which are respectively disposed as to be continuous with the two extension portions and also which, when molding the upper half case, are capable of serving as the flow passages of the resin to the screw bosses.

The above magnetic tape cassette includes the upper half case which is molded while the gate for resin injection is provided in the neighborhood of the screw boss. And, since the increased thickness portion is so formed as to be continuous with the extension portion in which the screw boss is formed, in the injection molding operation, after the resin passes through the gate, a proper flow amount of resin can be secured and also the temperature of the resin can be prevented from lowering, thereby being able to reduce the flow resistance of the resin. Therefore, since not only the fluidity of the resin can be enhanced but also a proper resin pressure can be secured, the screw boss can be surely prevented against deformation. Also, provision of the increased thickness portion can enhance the rigidity of the screw boss and the eaves portion in which the screw boss is formed, thereby being able to prevent the screw boss and its neighboring portion from being deformed when the upper and lower half cases are screwed together.

Preferably, the thickness of the increased thickness portion may be larger than or equal to the diameter of the gate; in particular, the larger, the better. For example, when the diameter of the gate is 0.8 mm, the thickness of the increased thickness portion may be preferably larger than or equal to 0.8 mm.

Also, the screw boss and increased thickness portion may be connected together through a rib or the like.

Thus, the second problems found in the above-mentioned conventional magnetic tape cassette is eliminated.

Furthermore, deformation of its upper and lower half cases to be screwed together when assembling the present magnetic tape cassette, thereby being able to enhance the yield of manufacture of the magnetic tape cassette, is prevented.

According to a further preferred embodiment of the invention, there is provided a magnetic tape cassette structured such that a pair of magnetic tape reels with magnetic tape wound therearound are stored within a cassette case composed of upper and lower halves and the height of the magnetic tape is restricted by a pair of ribs respectively disposed in the front end of the lower half, wherein, in the right and left portions of the cassette case, there are disposed position restrict means respectively including walls which not only are set higher than the ribs for restricting the height of the magnetic tape but also extend at right angles to the inserting direction of the magnetic tape cassette, and the push-in depth of the magnetic tape cassette is restricted by the position restrict means.

According to this embodiment, when the magnetic tape cassette is loaded into the recording and reproducing apparatus, the push-in depth of the magnetic tape cassette is restricted by the position restrict means. Here, to restrict the push-in depth of the magnetic tape cassette, the ribs for restricting the height of the magnetic tape are not used, thereby eliminating the possibility that the ribs can be damaged when the push-in depth of the magnetic tape cassette is restricted. This allows the ribs to display fully their functions to restrict the height of the magnetic tape.

Also, the position restrict means are set higher in height than the ribs and, therefore, the contact surfaces of the position restrict means with the stopper members of the recording and reproducing apparatus are larger than those that can be obtained in the conventional magnetic tape cassette. Thanks to this, when the magnetic tape cassette is loaded into the recording and reproducing apparatus, the push-in depth position of the magnetic tape cassette in the recording and reproducing apparatus can be restricted positively.

In the above-mentioned embodiment of the magnetic tape cassette, it is preferable that the position restrict means are situated on the same plane which extends at right angles to the inserting direction of the magnetic tape cassette and also includes a position where the recording and reproducing apparatus acts on a member of the magnetic tape cassette, or the position restrict means are situated backwardly of the same plane in the magnetic tape cassette.

With the preferable magnetic tape cassette, the position restrict means are situated on the same plane which extends at right angles to the inserting direction of the magnetic tape cassette and also includes a position where the recording and reproducing apparatus acts on a certain member of the magnetic tape cassette, for example, a position where the lid lock removing pin removes the locking of the lid of the magnetic tape cassette, or the position restrict means are situated backwardly of the same plane in the magnetic tape cassette. Thanks to this, in a system which executes a cassette operation function during a cassette inserting operation, after the locking of the lid is removed to thereby secure the operation condition of the magnetic tape cassette positively, the push-in depth of the magnetic tape cassette can be restricted by the position restrict means.

Further, in the above-mentioned magnetic tape cassette according to this embodiment, it is further preferable that, with respect to the two reference holes for determining the position of the magnetic tape cassette within the recording and reproducing apparatus, the position restrict means are positioned on the center line of the reference holes or in the neighborhood of the center line.

Thus, according to the above construction, since the position restrict means are positioned on the center line of the reference holes of the magnetic tape cassette or in the neighborhood of the center line, after the magnetic tape cassette is loaded into the recording and reproducing apparatus and the push-in depth position of the magnetic tape cassette in the recording and reproducing apparatus is restricted positively, the pins can be inserted into their respective reference holes with high precision.

Here, assuming that a line connecting the two reference holes of the magnetic tape cassette to each other is a center line of the two reference holes, the expression "in the neighborhood of the center line" means an area which extends from the center line to a portion located by 10 mm backwardly thereof.

Moreover, in the above-mentioned magnetic tape cassette according to this embodiment of the invention, it is advantageous that the two distances respectively from the two horizontally positioning reference holes formed in two kinds of magnetic tape cassettes equal in thickness to each other but different in size from each other to the above-mentioned position restrict means respectively disposed in the magnetic tape cassettes, are set equal to each other.

With the above-mentioned construction, even if any of the present magnetic tape cassettes is loaded into a recording and reproducing apparatus capable of receiving two kinds of magnetic tape cassettes equal in thickness to each other but different in size from each other, the position of the loaded magnetic tape cassette can be restricted positively.

By the way, the position restrict means as set forth in the third aspect of the present invention can also be formed in another manner. That is, the stopper members of the recording and reproducing apparatus can be contacted with recessed portions which are formed in the portions of the magnetic tape cassette that are distant from the outer-most' wall surfaces of the magnetic tape cassette, for example, recessed portions formed in the two side surfaces of the magnetic tape cassette. In this arrangement as well, the push-in depth of the magnetic tape cassette in the recording and reproducing apparatus can be restricted.

Thus, this embodiment of the present invention eliminates the drawbacks found in the above-mentioned conventional magnetic tape cassette. Furthermore, a magnetic tape cassette according to this embodiment is, when it is loaded into a recording and reproducing apparatus, capable of restricting the push-in depth position thereof positively.

According to a further preferred embodiment, there is provided a magnetic tape cassette, comprising:
a cassette main body composed of upper and lower halves and including in the front surface thereof an opening into which a tape draw-out member can be inserted;
magnetic tape wound around a pair of reels and stretched over the above-mentioned opening by tape guide members respectively disposed on the front surface of the lower half;
an outer lid rotatably mounted on the upper half for covering the front surface of the magnetic tape;
a top lid rotatably mounted on the outer lid for covering the upper edge of the magnetic tape; and,
an inner lid rotatably mounted on the top lid for covering the rear surface of the magnetic tape,
wherein two slide pins respectively provided on and projected from the two end portions of the lower edge of the inner lid can be slided on their associated inner lid cam grooves which are respectively formed in the inner side surface portions of the tape guide members and also which are so located as to adjoin their associated detect holes respectively formed in the lower half to serve as reference for positioning of the present magnetic tape cassette,
characterized in that, between the inner lid cam grooves and detect holes, there are respectively formed thickness reducing portions and, between the bottom surfaces of the thickness reducing portions and the upper surfaces of the detect holes, there are respectively formed stepped portions.

According to this embodiment, the thickness reducing portions, which are respectively formed between the inner lid cam grooves on which the slide pins of the inner lid can be slided and the detect holes serving as the reference for positioning of the present magnetic tape cassette, reduce the thickness between the inner lid cam grooves and detect holes to thereby be able to prevent occurrence of recesses (so called sink marks) in molding. Also, the stepped portions, which are respectively formed between the bottom surfaces of the thickness reducing portions and the upper surfaces of the detect holes, can prevent mutual contact between a slide core for molding the thickness reducing portions and a slide core for molding the detect holes.

Thus, the fourth problem found in the above-mentioned conventional magnetic tape cassette is eliminated. Furthermore, a sink mark (recess) that could be otherwise produced in a cam groove portion for an inner lid is prevented.

According to another preferred embodiment of the invention, there is provided an injection mold, comprising:
a mold main body composed of a fixed mold and a movable mold; and
two or more slide cores, the mold main body and slide cores respectively including mold surfaces each consisting of a coarse surface,
wherein, when one of the slide cores is slided on the extension surfaces of the mold surfaces of the mold main body or other slide core, at least one of the slide surfaces of the slide cores is formed as a smooth surface.

Here, as the smooth surface, there can be employed the smooth surface (that is, a surface which is not coarse) of a part of the injection mold. Also, the smooth surface may be formed in both of two injection mold parts which can be contacted with each other, or may be formed in one of them.

The term " the slide core is slided on the extension surfaces of the mold surfaces of the other injection mold parts" means that, for example, a certain slide core is moved toward a mold tightening complete position, the slide core is slided on the other surface portions of another slide core than the mold surface portion thereof.

With use of the thus structured injection mold, there can be reduced the amounts of wear of the parts of the injection mold such as the slide cores, mold main body and the like that is caused by the mutual sliding contact between the injection mold parts, thereby being able to extend the life of the injection mold.

Thus, the above-mentioned sixth problems found in the conventional injection mold is eliminated. For an injection mold according to this embodiment its own wear caused by the mutual sliding contact between the mold parts such as the slide cores, mold main body and the like to thereby be able to extend the life of the injection mold is reduced.

According to a further preferred embodiment of the invention, there are provided two kinds of tape reel respectively having the following structures: that is,
(1) a tape reel for use in a magnetic tape cassette, comprising: an upper reel including a flange portion; and, a lower reel so disposed as to be opposed to said upper reel and including a boss portion on the surface thereof facing the upper reel, wherein a pivot provided on and projected from the boss portion of the lower reel is fitted into a pivot hole formed in the flange portion of the upper reel, a plurality of welding bosses, which are respectively provided at and projected from the positions of the boss portion of the lower reel that are spaced in the radial direction of the boss portion from the pivot, are respectively fitted into their associated welding boss holes respectively formed in the flange portion of the upper reel, and, in this fitted state, the welding bosses are welded by ultrasonic waves, whereby the upper and lower reels can be fixed together with a given position relation between them, characterized in that the boss portion of the lower reel includes, in the peripheral portion thereof that is spaced in the radial direction of the boss portion from its boss center portion with the pivot projectingly provided thereon, a side wall serving as a magnetic tape winding surface, the boss center portion and side wall of the boss portion are connected together by a plurality of ribs respectively so formed as to extend in the radial direction of the boss portion, and the ribs are also so disposed as to avoid the base portions of their associated welding bosses.
(2) a tape reel for use in a magnetic tape cassette, comprising: an upper reel including a flange portion; and, a lower reel so disposed as to be opposed to said upper reel and including a boss portion on the surface thereof facing said upper reel, wherein a pivot provided on and projected from the boss portion of the lower reel is fitted into a pivot hole formed in the flange portion of the upper reel, a plurality of welding bosses, which are respectively provided at and projected from the positions of the boss portion of the lower reel that are spaced in the radial direction of the boss portion from the pivot, are respectively fitted into their associated welding boss holes respectively formed in the flange portion of the upper reel, and, in this fitted state, the welding bosses are welded by ultrasonic waves, whereby the upper and lower reels can be fixed together with a given position relation between them, characterized in that the boss portion of the lower reel includes, in the peripheral portion thereof that is spaced in the radial direction of the boss portion from its boss center portion with the pivot projectingly provided thereon, a side wall serving as a magnetic tape winding surface, the boss center portion and side wall of the boss portion are connected together by a plurality of ribs respectively so formed as to extend in the radial direction of the boss portion, and the ribs are also disposed in such a manner that parts thereof have clearances with respect to the base portions of their associated welding bosses.

In a tape reel for use in a magnetic tape cassette according to this embodiment, the pivot provided on and projected from the boss portion of the lower reel is fitted into the pivot hole formed in the flange portion of the upper reel. Also, a plurality of welding bosses respectively provided at and projected from the positions of the boss portion of the lower reel spaced in the radial direction of the boss portion from the pivot are respectively fitted into their associated welding boss holes respectively formed in the flange portion of the upper reel.

And, in this fitted state, the welding bosses are welded by ultrasonic waves. In this ultrasonic welding operation, since the ribs are so disposed as to avoid the base portions of their associated welding bosses or the ribs are also disposed in such a manner that parts thereof have clearances with respect to the base portions of their associated welding bosses, the oscillation energy of the ultrasonic waves is not transmitted to the other remaining portions than the welding bosses but is transmitted to the welding bosses with high efficiency, so that the welding bosses can be welded ultrasonically in a short time. Thanks to this, the upper and lower reels can be fixed together with a given position relation between them.

Thus, the above-mentioned seventh problem found in the conventional tape reels for use in a magnetic tape cassette is eliminated. Furthermore, the transmission efficiency of the oscillation energy of ultrasonic waves to the welding bosses is enhanced to thereby be able not only to shorten the time necessary for welding the welding bosses by ultrasonic waves but also to enhance the welding stability of the welding operation.

According to a further preferred embodiment of the invention, there is provided a magnetic tape cassette, comprising: a cassette main body composed of upper and lower halves and including in the front surface thereof an opening for insertion of a tape pull-out member; magnetic tape stretched over the above-mentioned opening by two tape guides respectively disposed on the front surface of the lower half; and, an open/close lid capable of covering the opening in a freely openable and closable manner, the open/close lid comprising an inner lid for covering the rear surface of the magnetic tape, the inner lid including two slide pins respectively provided on and projected from the two end portions of the lower edge of the inner lid, the two slide pins being slidably engageable with their associated inner lid cam grooves respectively formed in the inner surface portion of the lower half, wherein, on the front surface of the upper half, there is disposed position restrict means which, in a state where the open/close lid is completely opened, can be contacted with the two slide pins of the inner lid to thereby be able to restrict the positions of the slide pins.

According to this embodiment, in a state where the open/close lid is completely opened, when assembling the upper half to the lower half, the position restrict means disposed on the upper half is contacted with the slide pins of the inner lid to thereby restrict the positions of the slide pins and, with the contact positions as reference positions, the slide pins can be positively inserted into their associated inner lid cam grooves formed in the lower half.

Thus, according to this embodiment, the assembling reliability of the inner lid forming the open/close lid can be enhanced.

Here, as the position restrict means, for example, there can be employed the following means: that is,
(1) The front wall of the magnetic tape cassette (which is hereinafter referred to as the cassette front wall) is projected more forwardly of the magnetic tape cassette than that of the conventional magnetic tape cassette, whereby the cassette front wall is allowed to function as the position restrict means.
(2) In order to enhance the capacity for restricting the positions of the slide pins, in the cassette front wall, there is formed a curved recessed portion which has a curvature matched to the curvature of the slide pin, and the curved recessed portion is allowed to function as the position restrict means.
(3) The position of the cassette front wall is not changed but remains as it is in the conventional magnetic tape cassette; and, in the cassette front wall, there is separately provided a projection which can be contacted with the slide pin, and the projection is used as the position restrict means.
(4) The upper lid cam groove of the upper half, into which the slide pin of the top lid to be connected by the inner lid can be fitted, is cut more deeply by a given length, whereas the position of the cassette front wall is not changed but remains as it is in the conventional magnetic tape cassette, whereby the thus modified upper lid cam groove is used as the position restrict means.

Also, with use of the structure as explained above, that is, if the slide pin contact surfaces of the position restrict means are situated more forwardly of the magnetic tape cassette than the upper edge walls of the inner lid cam grooves, then there is eliminated the possibility that the slide pin can be contacted with the upper edge wall of the inner lid cam groove. This makes it possible to assemble the inner lid more positively.

Further, with use of the structure, that is, the slide pin contact surfaces of the position restrict means are situated on the substantially same plane as a plane which not only contains the reference holes of dimension reference projections provided on the lower half but also extends in parallel to the rear surface of the magnetic tape cassette, whereby the positions of the dimension reference holes are matched to each other. This makes it possible to assemble the inner lid still more positively.

Furthermore, it is preferable for the above-mentioned structures that the end portion of the upper half front wall facing in the direction of the cassette side surface may be stepped inwardly with respect to the slide pin contact surface. In this case, if the present end portion is situated on the back surface of the upper edge wall of the inner lid cam groove when the upper and lower halves are assembled together and, at the same time, if the boundary surface of the present stepped portion is formed as an inclined surface, then not only there can be secured a dustproof property but also, when assembling the upper half to the lower half, there can be prevented collision between the upper edge wall of the inner lid cam groove and the front wall of the upper half.

Thus, the eighth problem found in the above-mentioned conventional magnetic tape cassette is eliminated. Furthermore, a magnetic tape cassette according to this embodiment is capable of enhancing the reliability of assembling of an open/close lid.

In the following, the present invention is explained in greater detail with respect to several embodiments thereof in conjunction with the accompanying drawings, wherein:
Fig. 1 is an exploded perspective view of a conventional M-size DVC magnetic tape cassette for use in a broadcasting station;
Fig. 2 is a partially sectional view of the conventional magnetic tape cassette for use in a broadcasting station;
Fig. 3 is an explanatory view of a portion of a magnetic tape cassette, showing a state thereof in which the coil portion of a lid spring is inclined when a lid is opened;
Fig. 4 is an exploded perspective view of components employed in an example of a conventional magnetic tape cassette;
Fig. 5 is an enlarged perspective view of the main portions of an upper half cassette employed in the conventional magnetic tape cassette;
Fig. 6 is a section view of the main portions of the conventional magnetic tape cassette, showing the structure of the main portions of an upper half cassette and the fluidity of resin used to mold the upper half cassette;
Fig. 7 is a perspective view of a conventional magnetic tape cassette;
Fig. 8 is a perspective view of a conventional magnetic tape cassette including an open/close lid of a three-lid type, showing an assembled state thereof;
Fig. 9 is an exploded perspective view of the open/close lid of a three-lid type of the conventional magnetic tape cassette; and
Fig. 10 is an enlarged view of a tape guide member and its neighboring portion of a lower half employed in the conventional magnetic tape cassette;
Fig. 11 is an exploded perspective view of a conventional magnetic tape cassette;
Fig. 12 is a perspective view of the appearance of another conventional magnetic tape cassette;
Fig. 13 is an inner surface view of an upper cassette half employed in the conventional magnetic tape cassette shown in Fig. 12;
Fig. 14 is a partially sectional view of the conventional magnetic tape cassette shown in Fig. 12, showing the operation thereof;
Fig. 15 is a perspective view of a magnetic tape cassette;
Fig. 16 is an exploded perspective view of an outer lid, a top lid and an inner lid cooperating together in forming the lid part of the magnetic tape cassette shown in Fig. 4;
Fig. 17 is a side section view of the above magnetic tape cassette, showing a state thereof in which the three lids are respectively closed;
Fig. 18 is a schematic section view of an injection mold for molding the outer lid shown in Fig. 16;
Fig. 19 is an exploded perspective view of a conventional magnetic tape cassette;
Fig. 20 is a partially enlarged plan view of a lower reel of a tape reel employed in the conventional magnetic tape cassette shown in Fig. 19;
Fig. 21 is a perspective view of a conventional magnetic tape cassette for a DVC including an open/close lid of a three-lid type, showing its assembled state;
Fig. 22 is an exploded perspective view of the three lids employed in the open/close lid shown in Fig. 21;
Fig. 23A is a partially enlarged section view of an upper half employed in the conventional magnetic tape cassette shown in Fig. 21, taken along the longitudinal direction of the upper half, and Fig. 23B is a partially enlarged section view of an lower half employed in the conventional magnetic tape cassette shown in Fig. 21, taken along the longitudinal direction of the lower half;
Fig. 24 is an explanatory view of the conventional magnetic tape cassette shown in Fig. 21, showing how to assemble the same;
Fig. 25A is a schematic plan view of an upper half 2 employed in an M-type DVC magnetic tape cassette for use in a broadcasting station according to a first embodiment, and Fig. 25B is a schematic side view of the present upper half 2;
Fig. 26 is a partially sectional view of a magnetic tape cassette according to the first embodiment;
Fig. 27 is a schematic side view of the upper half 2, showing a modification of the position restrict means employed in the first embodiment;
Fig. 28 is an enlarged perspective view of the main portions of a second embodiment of a magnetic tape cassette;
Fig. 29 is a section view of the main portions of the first embodiment, showing the structure of the main portions of an upper half cassette and the fluidity of resin used to mold the upper half cassette;
Fig. 30 is an enlarged perspective view of the main portions of a third embodiment of a magnetic tape cassette;
Fig. 31 is a perspective view of the back surface side of a magnetic tape cassette according to a fourth embodiment;
Fig. 32 is a side view of the above magnetic tape cassette;
Fig. 33 is a perspective view of the above magnetic tape cassette, showing the position relation between the magnetic tape cassette and stopper members provided in a recording and reproducing apparatus when the magnetic tape cassette is loaded into the recording and reproducing apparatus;
Fig. 34 is back surface view of the above magnetic tape cassette;
Fig. 35 is a perspective view of a magnetic tape cassette according to a fifth embodiment;
Fig. 36 is a perspective view of a magnetic tape cassette according to a sixth embodiment of the invention;
Fig. 37 is back surface view of two magnetic tape cassettes equal in thickness to each other but different in size from each other, showing a state thereof when they are superimposed on top of each other;
Fig. 38 is a side view of a modification of a magnetic tape cassette;
Fig. 39 is a back surface view of another modification of a magnetic tape cassette according the invention;
Fig. 40 is a partially enlarged section view of the magnetic tape cassette shown in Fig. 39;
Fig. 41 is an exploded perspective view of a seventh embodiment of a magnetic tape cassette
Fig. 42 is an enlarged view of a tape guide member and its neighboring portion of a lower half;
Fig. 43 is a section view taken along the line A-A shown in Fig. 42;
Fig. 44 is a view of a portion of a magnetic tape cassette, showing a method for molding a thickness reducing portion and a detect hole;
Fig. 45 is a view of a portion of a magnetic tape cassette, showing another method for molding a thickness reducing portion and a detect hole;
Fig. 46 is a view of a modification of a thickness reducing portion according to the seventh embodiment;
Fig. 47 is a perspective view of the appearance of aneighth embodiment of a magnetic tape cassette;
Fig. 48 is an inner surface view of an upper cassette half employed in the above embodiment;
Fig. 49 is an enlarged perspective view of an upper back surface side center boss employed in the above embodiment;
Fig. 50 is a partially sectional view of the above embodiment of the invention, showing the operation thereof;
Fig. 51 is a perspective view of a ninth embodiment of an injection mold;
Fig. 52 is a plan view of the injection mold shown in Fig. 51;
Fig. 53 is a plan view of the injection mold shown in Fig. 51, showing a state thereof where the tightening of the injection mold is completed;
Fig. 54 is a plan view of a lower cassette half of a magnetic tape cassette to which a tape reel according to a tenth embodiment;
Fig. 55 is a perspective view of a lower reel of a tape reel;
Fig. 56 is a partially enlarged plan view of the lower reel shown in Fig. 55;
Fig. 57 is a perspective view of a lower reel of a tape reel according to an eleventh embodiment;
Fig. 58 is a partially enlarged plan view of the lower reel shown in Fig. 57;
Fig. 59 is an exploded perspective view of a magnetic tape cassette according to a twelfth embodiment;
Fig. 60 is a partially enlarged section view of an upper half employed in the twelfth embodiment, taken along the longitudinal direction of the upper half;
Fig. 61 is a partially enlarged back view of the upper half shown in Fig. 60;
Fig. 62 is an explanatory view of the magnetic tape cassette according to the twelfth embodiment, showing how to assemble the same;
Fig. 63 is a partially sectional view of a magnetic tape cassette according to a modification of the twelfth embodiment;
Fig. 64 is a partially enlarged perspective view of a magnetic tape cassette according to a thirteenth embodiment;
Fig. 65 is a partially sectional view of the magnetic tape cassette shown in Fig. 64;
Fig. 66 is a partially sectional view of the magnetic tape cassette according to a fourteenth embodiment;
Fig. 67 is a partially sectional view of the magnetic tape cassette according to a fifteenth embodiment;
Fig. 68 is an enlarged perspective view of an inner lid cam groove, a cam groove and an upper half front wall as well as their neighboring portion respectively employed in the fifteenth embodiment; and
Fig. 69 is a schematic front view of the upper half front wall shown in Fig. 68 when it is viewed from a direction of an arrow line D shown in Fig. 68.

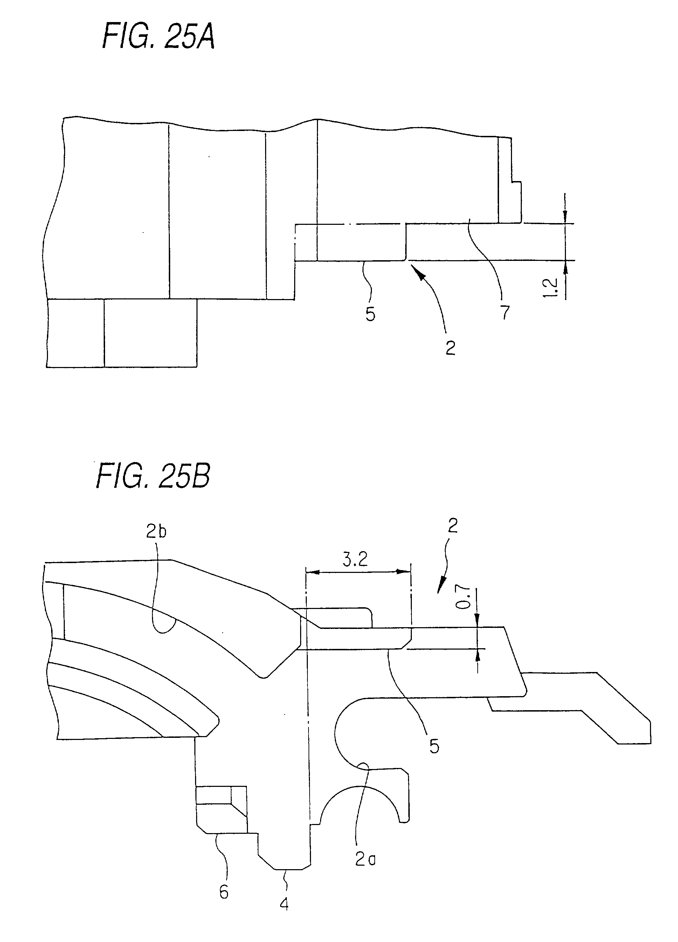

Now, description will be given below in detail of a first embodiment of a magnetic tape cassette with reference to the accompanying drawings. By the way, in the present embodiment, the same parts thereof as those employed in the above-cited conventional magnetic tape cassette shown in Figs. 1 and 2 will be described in a simplified manner, or the description thereof is omitted. Also, a lid, a lower half, a lid spring and a lid lock employed in the present embodiment are similar in structure to those employed in the above-cited conventional magnetic tape cassette, and thus the description thereof will be given using the same designations as in the above-cited conventional magnetic tape cassette. Here, Fig. 25A is a schematic plan view of an upper half 2 employed in an M-size DVC magnetic tape cassette for use in a broadcasting station according to the present embodiment and Fig. 25B is a schematic side view of the present upper half 2.

Now, at first, description will be given of the upper half 2 according to the present embodiment.
As shown in Figs. 25A and 25B, similarly to the conventional magnetic tape cassette, in the two side surfaces of the upper half 2, there are formed two pin support shaft holes 2a the entrance portions of which are set slightly smaller in diameter than their associated support shaft pins 61a and 61b respectively so disposed on the two side plates 55a and 55b of an outer lid 51 as to extend at right angles to the side plates 55a and 55b, so that the support shaft pins 61a and 61b can be fitted into and supported by the pin support shaft holes 2a respectively; two upper lid cam grooves 2b along which their associated two slide pins provided on and projected from the two arm portions 52c of a top lid 52 are respectively slided when a lid 50 is opened and closed; and, two positioning portions 4 which are used to position the upper half 2 with respect to a lower half 42. Also, on one side surface of the upper half 2, there is projectingly provided a projection portion 6 which is used to secure one leg portion 71b of the lid spring 71. Further, on one side surface of the upper half 2, there is provided a flat-plate-shaped rib 5 in such a manner that it is continuous with the front end portion side of the upper cam groove 2b and is located upwardly of the pin support shaft hole 2a, while the rib 5 serves as position restrict means which can be contacted with the coil portion 71c of the lid spring 71 to thereby restrict the position of the coil portion 71c.

The present embodiment, as described above, relates to an M-size DVC magnetic tape cassette for use in a broadcasting station, in which the flat-plate-shaped rib 5 is set such that it extends about 3.2 mm in the cassette front direction from the positioning portion 4, about 1.2 mm in the cassette right side surface direction from the side surface of the front end portion 7 of the upper half 2, and has a thickness of about 0.7 mm. That is, the shape of the conventional upper half corresponds to a position shown by a one-dot chained line in Fig. 25A.

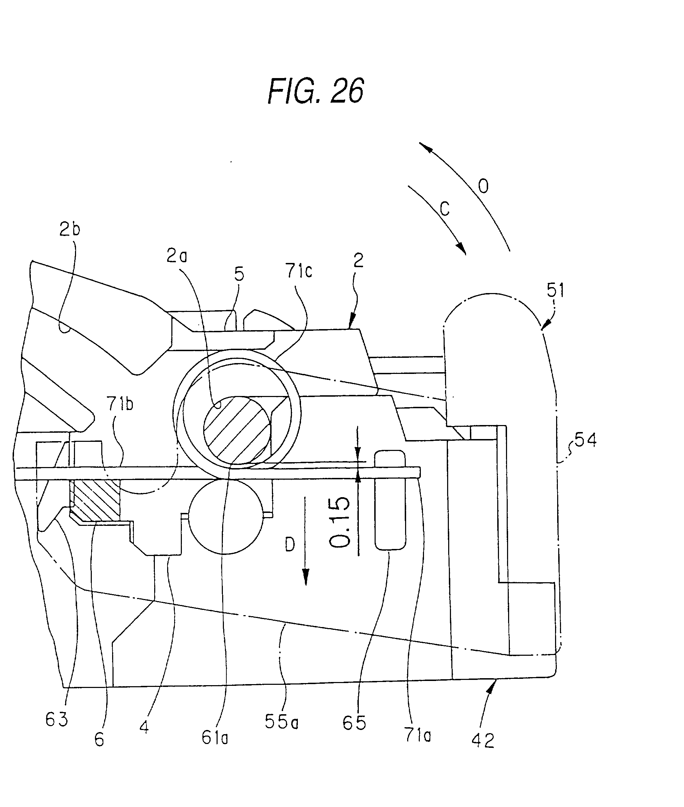

Now, Fig. 26 shows a partial section view of a magnetic tape cassette according to the present embodiment.

As shown in Fig. 26, similarly to the above-cited conventional magnetic tape cassette, on a substantially cylindrical-shaped support shaft pin 61a so provided on the side plate 55a of the outer lid 51 as to extend at right angles to the outer lid side plate 55a, there is mounted the coil portion 71c of the lid spring 71, which is composed of about 6 windings, in such a manner that it is loosely fitted with but not in contact with the support shaft pin 61a, one leg portion 71a of the lid spring 71 is secured to a projection portion 65 provided on the side plate 55a, and the other leg portion 71b is secured to a projection portion 6 provided on the upper half 2. In this structure, the outer lid 51 is energized in its closing direction (in the direction of an arrow line C shown in Fig. 26) by the energizing force that is produced in the direction of an arrow line D shown in Fig. 26 by the leg portions 71a and 71b of the lid spring 71. Also, one leg portion 71a can be engaged with the lid lock 59a from the upper half 2 side to thereby energize the lid lock 59a in the locking direction of the lid 50.

And, the rib 5, which is a characteristic of the present embodiment, is contacted with the coil portion 71c of the lid spring 71 from above to thereby be able to restrict the position of the coil portion 71c. In this contact state, a gap between the coil portion 71c and support shaft pin 61a is set to be of 0.15 mm. Thus, when the side plate 55a of the outer lid 51 is pushed up in the direction of an arrow line O shown in Fig. 26 and the lid 50 is thereby opened, the outer lid 51 is rotated in the O direction about the support shaft pin 61a, so that the leg portion 71a is moved together with the outer lid 51, whereas the coil portion 71c is prevented from inclining because the position of the coil portion 71c is restricted by the rib 5. Therefore, the gap between the coil portion 71c and support shaft pin 61a is kept unchanged to thereby prevent them from getting contact with each other.

As a result of this, even if the lid 50 is opened and closed repeatedly, there is no fear that the support shaft pin 61a can be shaved and the diameter of the support shaft pin 61a can be shortened. Thus, since the support shaft pin 61a is not shaved, no shavings of the support shaft pin 61a cannot be produced, which makes it possible to prevent the occurrence of a serious error such as drop-out and the like.

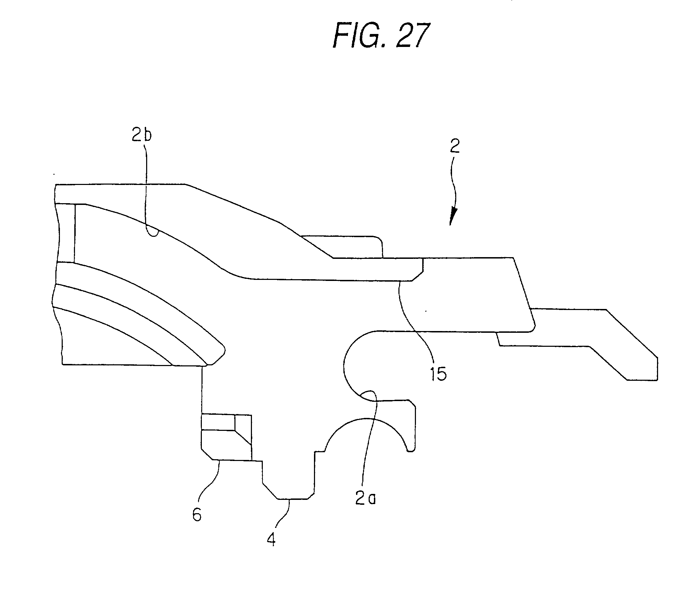

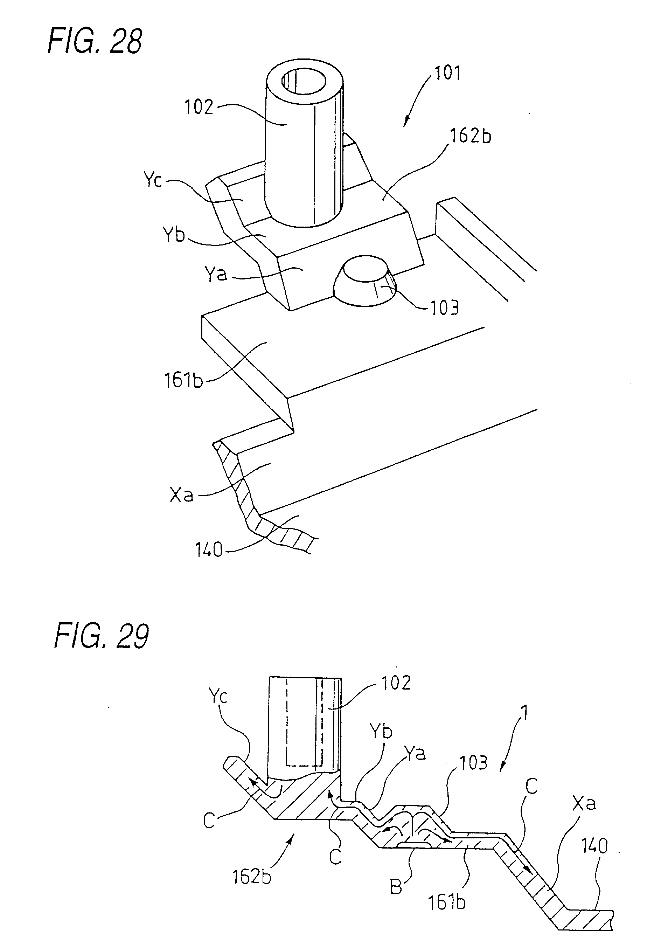

Now, Fig. 27 shows a modification of the above-mentioned position restrict means. As shown in Fig. 28, instead of the above-mentioned rib 5, by extending the upper lid cam groove 2b gently as it is, there is formed, as position restrict means, a position restrict portion 15 which can be contacted with the coil portion 71c of the lid spring 71.

While one embodiment has been described heretofore, the teaching is not limited to the above-mentioned embodiment but, of course, various changes and modifications are possible without departing from the subject matter of the embodiment. For example, in the above-mentioned embodiment, it is assumed that a magnetic tape cassette relates to an M-size digital video cassette (DVC) for use in a broadcasting station, but the teaching can also be applied to other various cassettes such as an L-size digital video cassette (DVC) for use in a broadcasting station, an S-size digital video cassette (DVC) for public use, and the like, provided that they include a lid spring. Also, the open/close lid is not limited to a lid of three-lid type but it is also possible to employ an open/close lid of a two-lid type. Further, the shape of the position restrict means for restricting the position of the lid spring is not limited to the above-mentioned flat-plate shape, but there can also be employed other shapes, provided that they are capable of restricting the position of the coil spring of the lid spring; for example, the shape may be a curved shape which extends along the coil portion of the lid spring.

Next, description will be given below of a second embodiment of a magnetic tape cassette with reference to the accompanying drawings.

Here, Fig. 28 is an enlarged perspective view of the main portions of the second embodiment of a magnetic tape cassette showing the structure of a screw boss provided on an upper half thereof. And, Fig. 29 is a section view of the main portions of the upper half, showing the structure of the screw boss and the fluidity of resin used to mold the magnetic tape cassette. By the way, in the following description of the present embodiment, there are employed the designations that have been given to the components used in the conventional magnetic tape shown in Fig. 4 as well as to the components thereof shown in Figs. 5 and 6.

A screw boss reinforcing mechanism 101 shown in Fig. 28, similarly to the conventional magnetic tape cassette, is provided on each of the two end portions of the front surface side of the upper half 140, while other portions of the upper half 140 than the screw boss reinforcing mechanism 101 may be similar to those of the conventional magnetic tape cassette. Therefore, similarly to Fig. 5, description will be given below of one of the two screw boss reinforcing mechanisms 101.

Now, Fig. 28 is a perspective view of the structure of the screw boss reinforcing mechanism 101 while the upper half 140 is turned downside up; in particular, an eaves portion 161b is formed in front of the upper half 140 with an inclined portion Xa between them, and there is formed an extension portion 162b which is provided on and projected from part of the eaves portion 161b, while the extension portion 162b includes an inclined portion Ya, a flat portion Yb, and an inclined portion Yc.

And, a hollow, cylindrical-shaped screw boss 102 is formed in such a manner that it extends over the flat portion Yb and inclined portion Yc in part. However, in the present embodiment, the above-mentioned reinforcing rib 164 is not provided, but there is formed a truncated conical-shaped increased thickness portion 103 in such a manner that it extends over the eaves portion 161b and inclined portion Ya in part.

That is, the screw boss reinforcing mechanism 101 according to the present embodiment comprises the eaves portion 161b similar in shape to that employed in the conventional magnetic tape cassette, the extension portion 162b so formed as to project from part of the eaves portion 161b and have a similar shape of that employed in the conventional magnetic tape cassette, and the increased thickness portion 103.

The increased thickness portion 103, as can be seen from Fig. 29, extends from the eaves portion 161b up to the middle portion of the inclined portion Ya, while the central portion of the back surface of the increased thickness portion 103 provides a gate position where resin is injected.

When molding the upper half 140, the resin, as shown by an arrow line C in Fig. 29, is allowed to flow along the surface of a die, that is, the surface of the upper half 140 into a space existing in the die, and fill up the space gradually to thereby provide the upper half 140. By the way, in molding, the side surface of the upper half 140, where gate traces B are formed, provides the upper portion of the upper half 140.

Since the gate is situated nearer to the inclined portion Ya, that is, nearer to the screw boss 102, the gap between the gate and the space for forming the screw boss 102 is reduced, which makes it possible to enhance the fluidity of the resin. Also, because a space which provides the increased thickness portion 103 is formed at the position of the gate, the resin injected is prevented from diverging at and from its injection position suddenly and is stored once in the space capable of providing the increased thickness portion 103, before it diverges. This not only can enhance the fluidity of the resin but also can secure the proper resin pressure. Therefore, the factor in causing the deformed screw boss 102 relating to the fluidity of the resin can be eliminated by the formation of the space which can provide the increased thickness portion 103.

On the other hand, in a state where the upper half 140 has been molded, the increased thickness portion 103 is formed in such a manner that it extends over part of the eaves portion 161b and part of the inclined portion Ya forming the extension portion 162b. This means that the eaves portion 161b and extension portion 162b are in part reinforced. Therefore, the eaves portion 161b and extension portion 162b are strongly integrated with each other and thus, when the upper half 140 is superimposed on and screwed to the lower half 131 in the above-mentioned manner, even if there is applied such a force that twists the screw boss 102, not only the extension portion 162b is prevented from being flexed and deformed but also the screw boss 102 is prevented against deformation.

As described above, the upper half 140 according to the second embodiment not only is able to prevent the deformation of the screw boss 102 when the upper half 140 is molded out of the resin, but also, when the upper half 140 is assembled into a magnetic tape cassette after it is molded, is able to prevent the upper half 140 from being deformed by its threaded engagement with the lower half 131 through the screwing operation.

Therefore, in a magnetic tape cassette to which the above-mentioned upper half 140 is applied, the rate of defective products in the manufacturing process thereof is reduced, which in turn makes it possible to enhance the yield rate of manufacture of the magnetic tape cassette as well as the reliability thereof.

Also, while a die is used to mold the upper half 140, when manufacturing such die, the die may be changed only in part, thereby being able to reduce the manufacturing cost thereof.

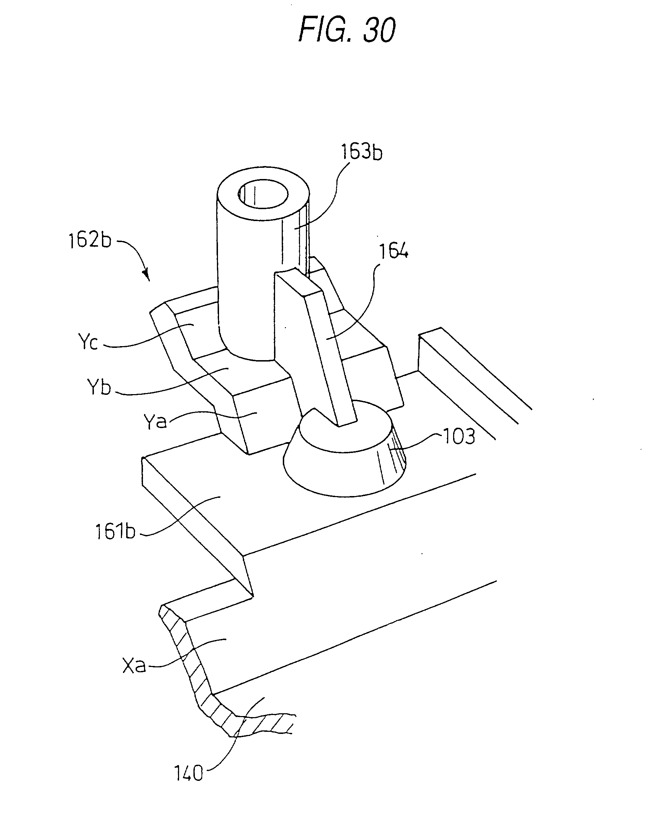

Now, Fig. 30 is a perspective view of the main portions of a third embodiment of a magnetic tape cassette

In the third embodiment, an increased thickness portion 103 is formed in such a manner that it is continuous with a reinforcing rib 164 provided on the screw boss 163b. That is, the increased thickness portion 103 is so formed as to be continuous with an extension portion 162b through the reinforcing rib 164. According to the present structure, resin, which is injected to the increased thickness portion 103 when the upper half is molded, is allowed to flow well up to the screw boss 163b through the reinforcing rib 164 and a proper amount of the resin can be loaded to the screw boss 163b with a suitable pressure.

While description has been given heretofore of the embodiments, the increased thickness portion according to the embodiment may be formed in such a manner that it is continuous directly or indirectly with the extension portion in which the screw boss is formed.

Also, a magnetic tape cassette to which the teaching can be applied is not limited to a DVC but the teaching can also be applied to a normal magnetic tape cassette of a VHS type.

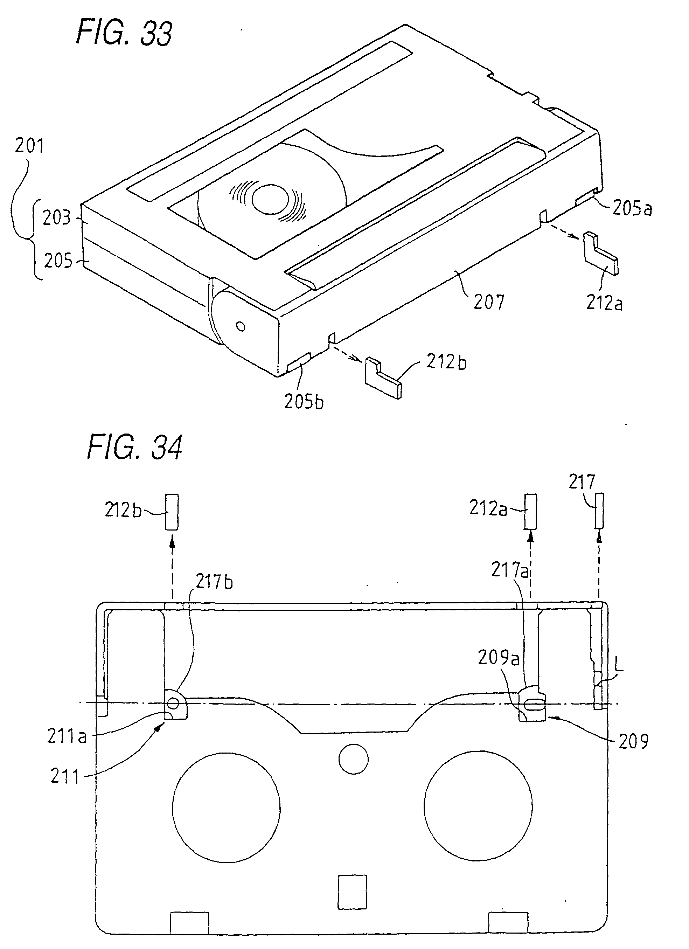

Now, description will be given below in detail of a fourth embodiment of a magnetic tape cassette with reference to the accompanying drawings. In particular, Fig. 31 is a perspective view of the back surface side of a magnetic tape cassette according to the fourth embodiment, Fig. 32 is a side view of the magnetic tape cassette, Fig. 33 shows the position relation between the magnetic tape cassette and stopper members provided in a recording and reproducing apparatus when the magnetic tape cassette is loaded into the recording and reproducing apparatus, and Fig. 34 is back surface view of the magnetic tape cassette.

As shown in Fig. 31, the magnetic tape cassette according to the fourth embodiment comprises a cassette case 201 which is composed of an upper half 203 and a lower half 205; and, in the cassette case 201, there are stored a pair of magnetic tape reels with magnetic tape wound therearound. And, the height of the magnetic tape is restricted by a pair of ribs 205a and 205b which are respectively disposed on the front end of the lower half 205.

As the characteristic structure of the embodiment, in the left and right portions of the lower half 205, there are disposed position restrict means 209 and 211 which respectively consist of recessed portions including walls 209a and 211a extending at right angles to the cassette insertion direction. And, as shown in Fig. 32, the height b of the walls 209a and 211a of the position restrict means 209 and 211 is set higher than the height a of the ribs 205a and 205b for restricting the height of the magnetic tape.

Thus, when loading the magnetic tape cassette according to the fourth embodiment into the recording and reproducing apparatus, as shown in Fig. 33, stopper members 212a and 212b respectively provided in the recording and reproducing apparatus can be contacted with the walls 209a and 211a of the position restrict means 209 and 211 to thereby be able to restrict the push-in depth of the magnetic tape cassette in the recording and reproducing apparatus. Here, the ribs 205a and 205b for restricting the height of the magnetic tape are not used to restrict the push-in depth of the magnetic tape cassette. This eliminates the possibility that the ribs 205a and 205b can be damaged when the magnetic tape cassette is pushed into the recording and reproducing apparatus, and thus the ribs 205a and 205b are allowed to fully display their function to restrict the height of the magnetic tape. Also, because the walls 209a and 211a of the position restrict means 209 and 211 are set higher in height than the ribs 205a and 205b, the walls 209a and 211a have large contact surfaces with the stopper members 212a and 212b of the recording and reproducing apparatus and thus they are able to restrict the position of the magnetic tape cassette positively.

Also, as shown in Fig. 34, the position restrict means 209 and 211 are situated more backward in the magnetic tape cassette than a surface which extends perpendicularly to the cassette inserting direction and includes a position L at which a lid lock removing pin 217 provided in the recording and reproducing apparatus acts on a lid lock member forming a component of the magnetic tape cassette according to the embodiment.

Thanks to this, in a system of a type that a cassette operation function is executed during a cassette inserting operation, after the lid lock removing pin 217 moves the lid lock member in the lid lock removing direction to thereby secure the cassette operation condition positively, the stopper members 212a and 212b of the recording and reproducing apparatus can be contacted with the walls 209a and 211a of the position restrict means 209 and 211 to thereby be able to restrict the push-in depth of the magnetic tape cassette.

By the way, even if the positions of the position restrict means 209 and 211 are set on the same plane that extends perpendicularly to the cassette inserting direction and includes the position L, the cassette operation condition can be secured positively. However, in a system of a type that the cassette operation function is not executed during the cassette inserting operation, it is not necessary to set the position restrict means 209 and 211 on the same plane or more backward in the magnetic tape cassette than the same plane.

Also, preferably, the position restrict means 209 and 211 may be set such that they are situated on a center line connecting together two reference holes 217a and 217b which are used to determine the positions of the magnetic tape cassette in the recording and reproducing apparatus, or, as shown in Fig. 34, they are situated in the neighborhood of the center line. That is, in this case, when the magnetic tape cassette is loaded into the recording and reproducing apparatus and the push-in position of the magnetic tape cassette is restricted by the position restrict means 209 and 211, since the positions of the position restrict means 209 and 211 are respectively near the two reference holes 217a and 217b, the positioning pins can be respectively inserted into their respective reference holes 217a and 217b with high accuracy.

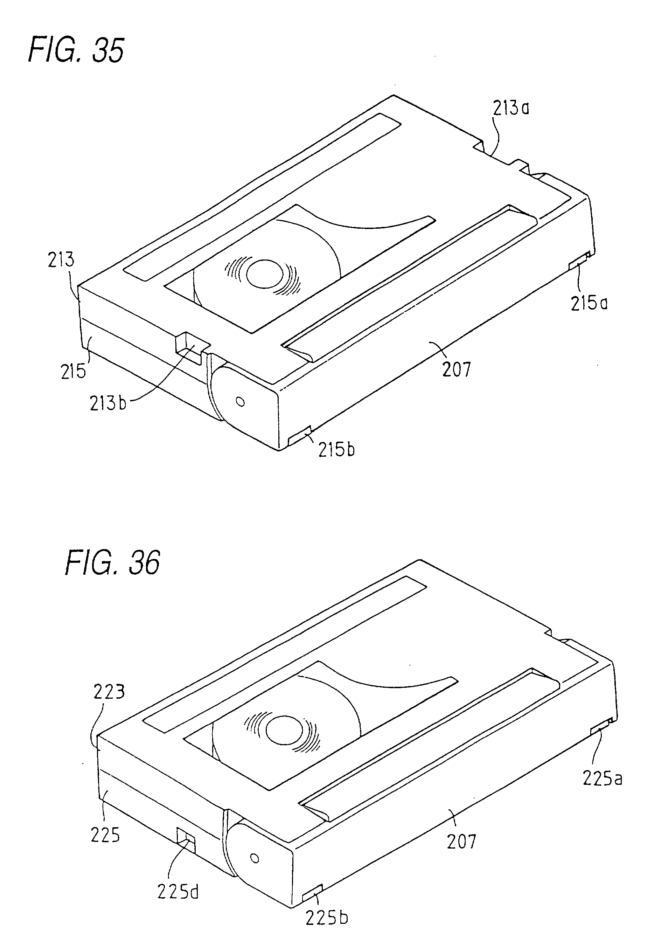

Next, description will be given below of a fifth embodiment of a magnetic tape cassette with reference to Fig. 35. As shown in Fig. 35, in a magnetic tape cassette according to the fifth embodiment, at positions which are remote from the two side surfaces of the magnetic tape cassette, that is, the outer-most walls of the upper half 213 of the magnetic tape cassette, there are formed two recessed portions 213a and 213b which are used as position restrict means. And, two stopper members (not shown) provided in a recording and reproducing apparatus can be contacted with the recessed portions 213a and 213b from the top of the magnetic tape cassette. In this structure where the position restrict means, that is, the recessed portions 213a and 213b are formed at such positions, similarly to the first embodiment, two ribs 215a and 215b for restricting the height of magnetic tape are not used to restrict the push-in depth of the magnetic tape cassette. Therefore, there is eliminated the need to use the two ribs 215a and 215b for the purpose of restriction of the push-in depth of the magnetic tape cassette. That is, the two ribs 215a and 215b are allowed to fully display their function to restrict the height of the magnetic tape.

Next, description will be given below of a sixth embodiment of a magnetic tape cassette with reference to Fig. 36. As shown in Fig. 36, in a magnetic tape cassette according to the sixth embodiment, at positions which are remote from the two side surfaces of the magnetic tape cassette, that is, the outer-most walls of the lower half 225 of the magnetic tape cassette, there are formed two recessed portions 225c (not shown) and 225d which are respectively used as position restrict means. In this structure where the position restrict means, that is, the recessed portions 225c and 225d are formed at these positions, similarly to the fourth and fifth embodiments, two ribs 225a and 225b for restricting the height of magnetic tape are not used to restrict the push-in depth of the magnetic tape cassette. Therefore, there is eliminated the need to use the two ribs 225a and 225b for the purpose of restriction of the push-in depth of the magnetic tape cassette. That is, the two ribs 225a and 225b are allowed to fully display their function to restrict the height of the magnetic tape. By the way, in Figs. 35 and 36, the recessed portions are formed at the positions that are present on the two side surfaces of the magnetic tape cassette. However, this is not limitative but, for example, the recessed portions may also be formed at such positions that are distant from the outer-most wall, that is, the upper surface of the upper half.

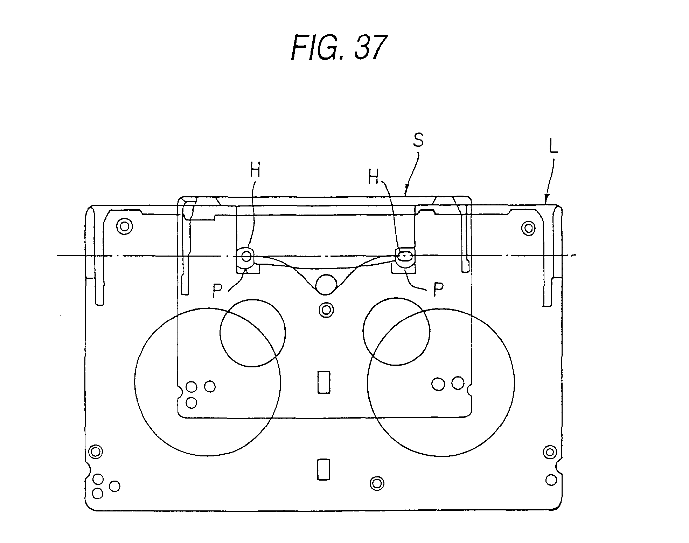

While description has been given above of the position restrict means for restricting the push-in depth of the magnetic tape cassette in the recording and reproducing apparatus, for example, the above-mentioned magnetic tape cassette can be sometimes loaded into a recording and reproducing apparatus which uses two kinds of magnetic tape cassettes equal in thickness but different in size in combination. Here, as shown in Fig. 37, it is assumed that there are used a magnetic tape cassette L having a large outside shape dimension and a magnetic tape cassette S equal in thickness to the magnetic tape cassette L but smaller in the outside shape dimension than the magnetic tape cassette L. In this case, two distances respectively from reference holes H, which are respectively formed in the two magnetic tape cassettes L and S and are used to position the two magnetic tape cassettes L and S in the horizontal direction thereof, to position restrict means P for restricting the push-in depth of the magnetic tape cassette in the recording and reproducing apparatus may be set equal to each other. With this arrangement, even when the two magnetic tape cassettes L and S are both loaded into the recording and reproducing apparatus, the positions of the two magnetic tape cassettes L and S can be restricted positively.

By the way, the teaching is not limited to the above-mentioned embodiments but the teaching can be changed and improved properly according to cases without departing from the subject matter of the teaching. For example, the magnetic tape cassette is not limited to an 8mm-cassette, aβ cam cassette, a D2 cassette, a D3 cassette and a digital video cassette, but can also be applied to various kinds of magnetic tape cassettes.

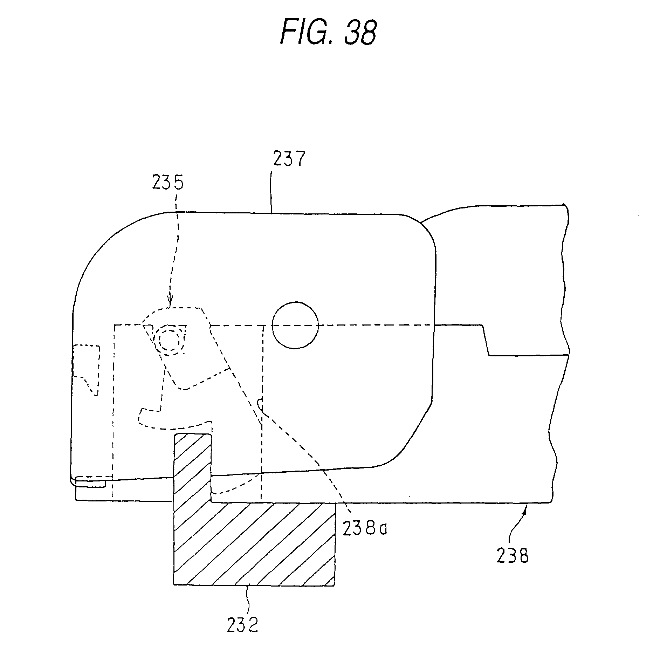

Also, in the structures of the above illustrated embodiments the stopper members of the recording and reproducing apparatus are structured such that they can be contacted directly with the position restrict means to thereby restrict the position or the push-in depth of the magnetic tape cassette in the recording and reproducing apparatus. However, this is not limitative but, for example, there can also be employed such a structure as shown in Fig. 38, in which a stopper member 232 is contacted indirectly, that is, through a lid lock member 235, with a wall 238a which is so formed in a lower half 238 as to extend at right angles to the cassette inserting direction, while the lid lock member 235 is used to keep a lid 237, which is disposed on the magnetic tape cassette side, in its closed condition. That is, use of this structure makes it possible to restrict the position or the push-in depth of the magnetic tape cassette in the recording and reproducing apparatus.

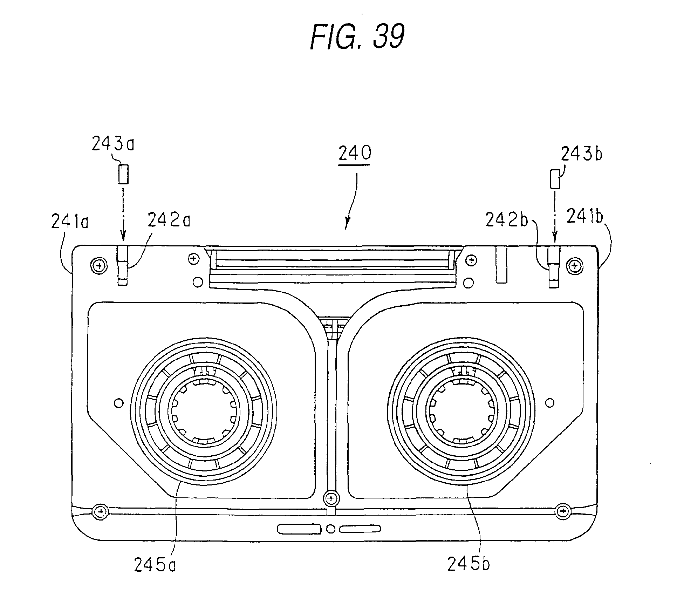

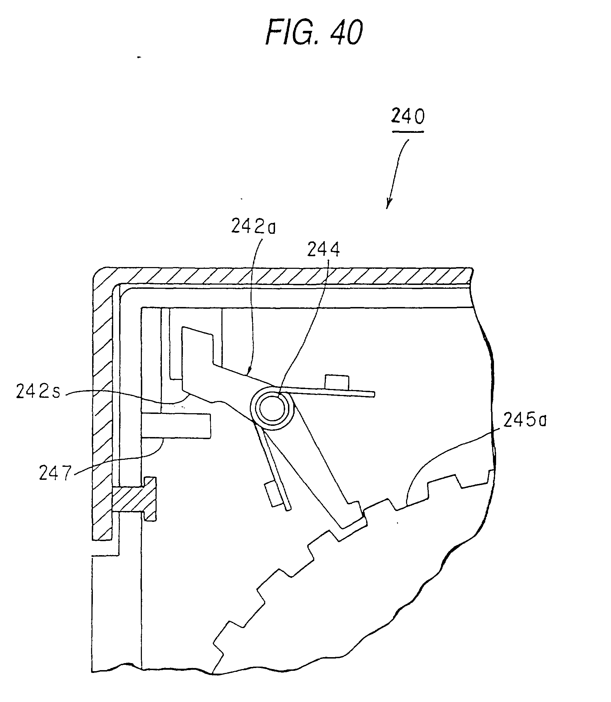

Further, in order to restrict the position or the push-in depth of the magnetic tape cassette in the recording and reproducing apparatus, there can also be employed another indirect-type of structure. That is, as shown in Fig. 39, stopper members 243a and 243b are respectively contacted with reel brake members 242a and 242b which are respectively disposed on the side surfaces 241a and 241b sides of a magnetic tape cassette 240 and are used to prevent the rotational movements of two reels 245a and 245b; and, as shown in Fig. 40, the reel brake member 242a (here, the description of the other reel brake member 242b is omitted) is rotated about a rotary shaft 244, and the side surface 242s of the reel brake member 242a is contacted with position restrict means 247, thereby being able to restrict the position or the push-in depth of the magnetic tape cassette in the recording and reproducing apparatus.

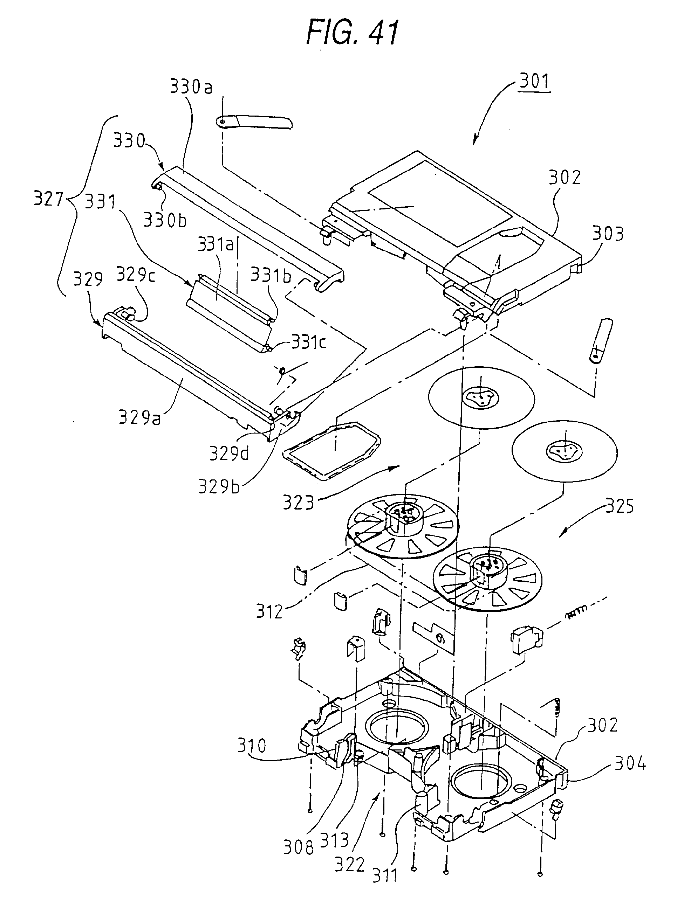

Now, description will be given below of a seventh embodiment of a magnetic tape cassette with reference to the accompanying drawings. By the way, in the following description of the present embodiment, the same parts thereof as those in the above-mentioned conventional magnetic tape cassette are respectively given the same designations. At first, in Fig. 41, there is shown an exploded perspective view of a magnetic tape cassette according to the present embodiment.

As shown in Fig. 41, a magnetic tape cassette 301 of an M type for DVC according to the present embodiment comprises a cassette main body 302 including in the front surface thereof an opening 322 for insertion of a tape draw-out member disposed on the side of equipment such as a VTR or the like, an upper half 303 and a lower half 304 which cooperate together in forming the cassette main body 302, a pair of reels 323 and 325 rotatably disposed within the lower half 4, magnetic tape 312 wound around the two reels 323 and 325 and stretched over the opening 322 by two tape guide members 310 and 311 respectively disposed on the front surface of the lower half 304, and an open/close lid 327 which is assembled to the front surface side of the cassette main body 302 in such a manner that, when the magnetic tape cassette 301 is carried or transferred, the magnetic tape 312 stretched over the opening 322 can be covered by the open/close lid 327.

By the way, between the two upper and lower halves 303 and 304, besides the above-mentioned two reels 323 and 325, there are stored various parts such as a reel lock member, a lid lock member, a wrong erasure preventive plug, and the like, but the description of these parts is omitted here. Also, the structure and operation of the open/close lid 327 are the same as those of the above-mentioned conventional magnetic tape cassette and thus the description of them is also omitted here.

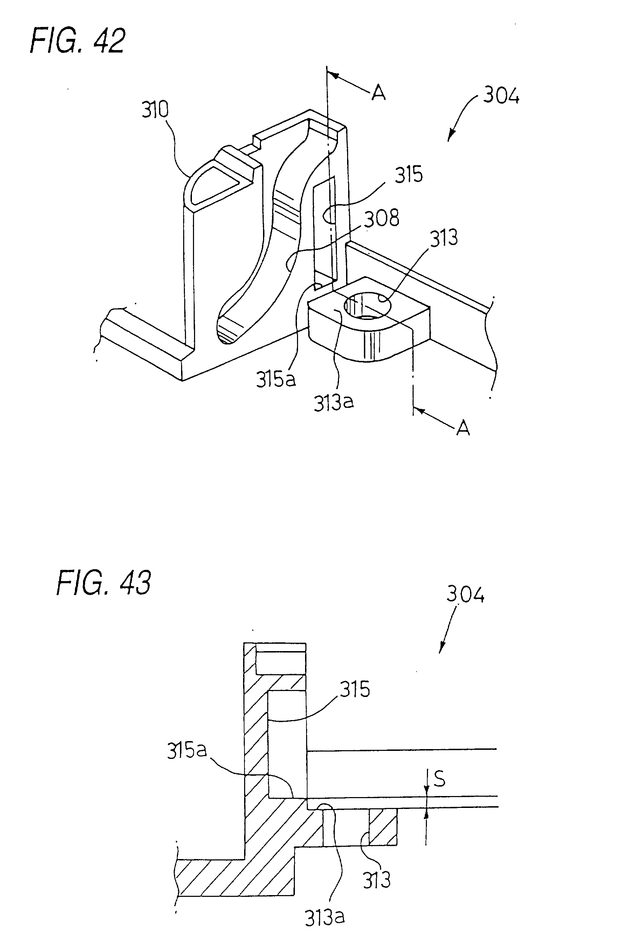

Now, Fig. 42 is an enlarged view of the tape guide member 310 and its neighboring portion of the lower half 304, and Fig. 43 is a section view taken along the line A-A shown in Fig. 42. As shown in Figs. 42 and 43, similarly to the conventional magnetic tape cassette, in the inner side surface portion of each of the tape guide members 310 of the lower half 304, there is formed an S-shaped inner lid cam groove 308 on which a slide pin 331c disposed in an inner lid 331 of the open/close lid 327 can be slided. And, at a position adjacent to the inner lid cam groove 308, there is formed a detect hole 313 which is used as reference positioning the magnetic tape cassette 301.

Also, between the inner lid cam groove 308 on which the slide pin 331c of the inner lid 331 can be slided and the detect hole 313 serving as the cassette positioning reference, there is provided a thickness lightening or reducing portion 315 which is formed as a recessed portion. But for the thickness reducing portion 315, there is a fear that the thickness between the inner lid cam groove 308 and detect hole 303 can be large to thereby cause a recess there in molding. On the other hand, provision of the thickness reducing portion 315 is able to reduce the thickness between the inner lid cam groove 308 and detect hole 303, thereby being able to prevent the occurrence of such recess in molding. Further, as the characteristic structure of the present embodiment, there is formed a stepped portion S between the bottom surface 315a of the thickness reducing portion 315 and the upper surface 313a of the detect hole 313. By the way, the stepped portion S, in the M type of cassette for DVC according to the present embodiment, is set as 0.1 mm.

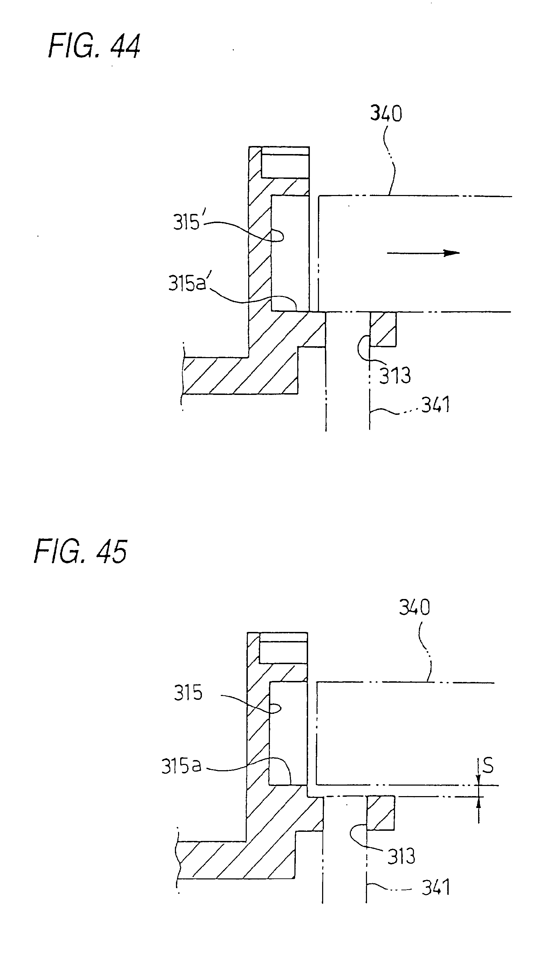

In a case as shown in Fig. 44 in which no stepped portion is formed between the thickness reducing portion and detect hole 313, in molding, a slide core 340 for molding a thickness reducing portion 315' is contacted with a cylindrical-shaped pin 341 which serves as a slide core for molding the detect hole 313, with the result that, when the slide core 341 retreats from the thickness reducing portion 315', it is contacted with the bottom surface 315a' of the thickness reducing portion 315' to thereby drag the pin 341. Therefore, there is a fear that the pin 341 can be deviated from its normal path and tilted, resulting in the poor molding of the detect hole 313.

On the other hand, according to the present embodiment, as shown in Fig. 45, because there is formed the stepped portion S between the thickness reducing portion 315 and detect hole 313, even when the slide core 340 retreats from the thickness reducing portion 315, the slide core 340 is never contacted with the pin 341. This eliminates the fear that the slide core 340 can drag the pin 341, so that the detect hole 313 can be molded well. Also, since dies are structured such that they are not contacted with each other, there is no fear that the dies can be deteriorated due to mutual contact between them, which makes it possible to increase the lives of the dies.

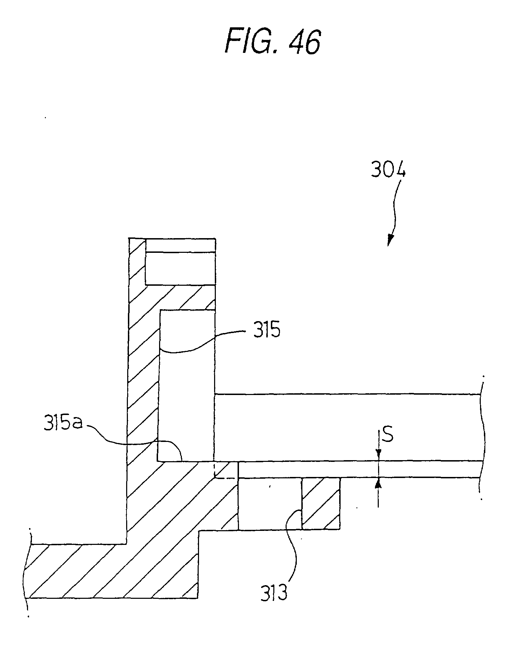

Also, according to a modification of the present embodiment, as shown in Fig. 46, the thickness reducing portion 315 can also be molded in such a manner that the bottom surface 315 of the thickness reducing portion 315 is extended up to the extension surface of the detect hole 313. In this case as well, since there is no possibility that the slide core for molding the thickness reducing portion 315 can be contacted with the pin for molding the detect hole 313, not only the detect hole 313 can be molded well but also the lives of the dies can be increased.

Although the description has been given of an embodiment the teaching is not limited to the illustrated embodiment, but various modifications and improvements are possible without departing from the subject matter of the teaching. For example, the teaching is not limited to a magnetic tape cassette for DVC but it can apply to various magnetic tape cassettes including an inner lid. Also, mutual contact between the slide core for molding the thickness reducing portion and the pin for molding the detect hole can also be prevented by forming the bottom surface of the thickness reducing portion as a tapered surface.

Now, description will be given below in detail of an eighth embodiment of a magnetic tape cassette with reference to the accompanying drawings. By the way, the parts that have been previously described herein are given the same reference characters or corresponding reference characters to thereby simplify or omit the description thereof.

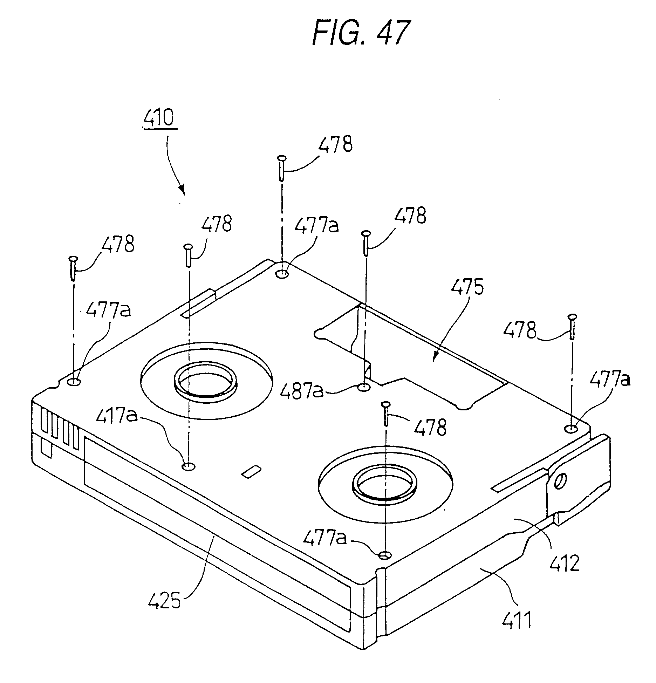

In Fig. 47, there is shown a magnetic tape cassette 410 according to the eighth embodiment. As shown in Fig. 47, at a position which is present on the back surface side (in Fig. 47, on this side) of a lower cassette half 412 and is shifted from the longitudinal-direction center portion of the lower cassette half 412 back surface toward the deep side in Fig. 47, there is opened up an insertion hole 417a of a lower back surface side center boss. In the present embodiment, to fix the upper and lower cassette halves 411 and 412 to each other, screws 478 may be inserted into not only the insertion holes 477a of four lower bosses respectively disposed at the four positions of the lower cassette half 412 near the four corner portions thereof but also the insertion holes 487a and 417a of lower opening side center boss and lower back surface side center boss, and the screws 478 may be then threadedly engaged with the upper bosses and upper center boss of the upper cassette half 411.

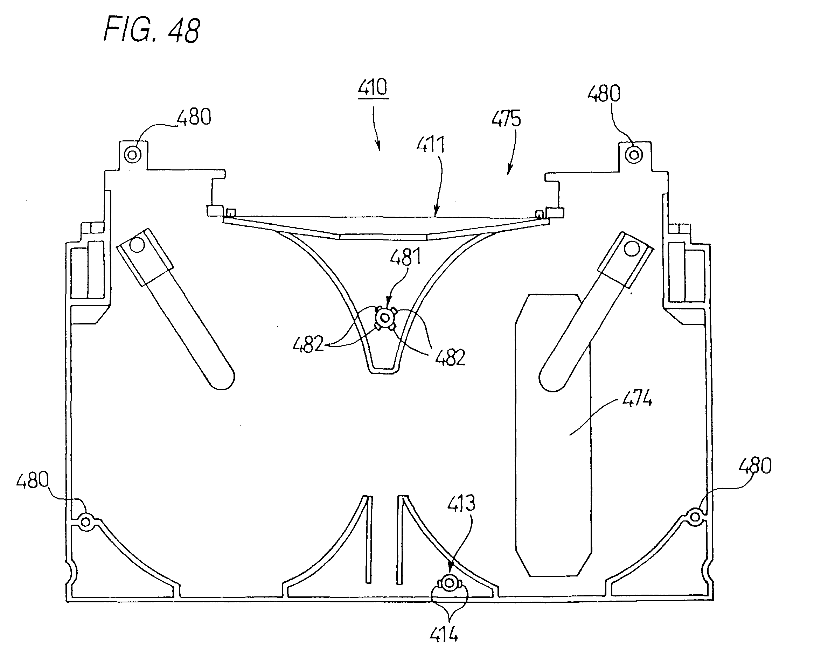

In Fig. 48, there is shown an inner surface of the upper cassette half 411 of the magnetic tape cassette 410. On one side (in Fig. 48, on the right side) of the upper cassette half 411 in the longitudinal direction thereof, there is formed a substantially rectangular-shaped opening which extends in the lateral direction of the upper cassette half 411, and there is disposed a window 474 in such a manner that it closes the present opening. Also, on the opening 475 side of the longitudinal-direction center portion of the upper cassette half 411, there is disposed an upper opening side center boss 481; and, in the boss 481, there is formed a self-tapping hole and, on the outer peripheral surface of the boss 481, there are provided four positioning ribs 482 in such a manner that they are spaced from one another in the peripheral direction of the boss 481.

And, at a position which is present on the back surface side (in Fig. 48, on the lower side) of the upper cassette half 411 and is shifted from the longitudinal-direction center portion toward the window 474 side, there is disposed an upper back surface side center boss 413.

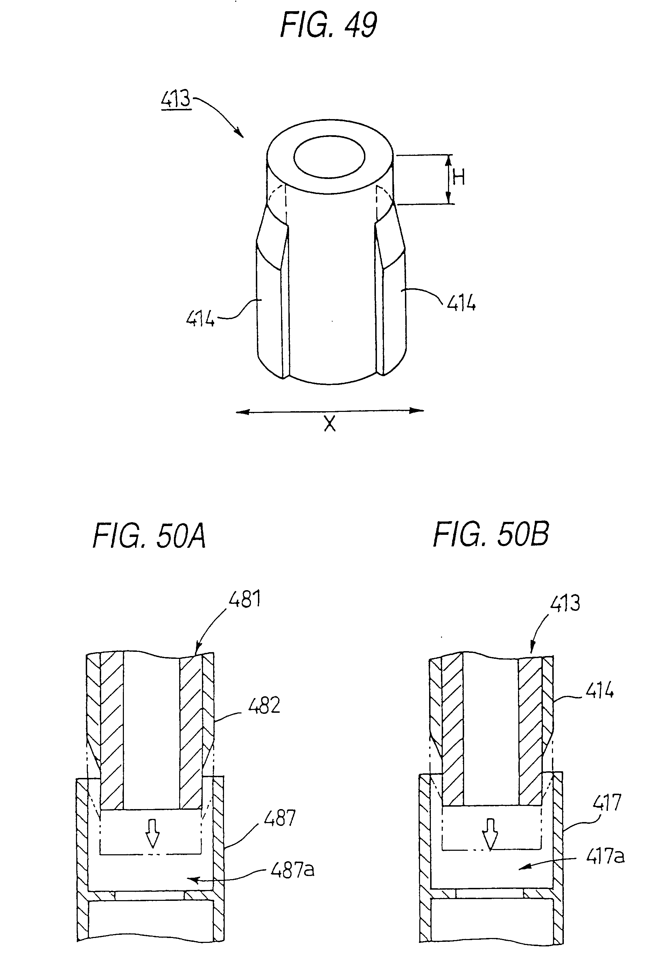

Now, Fig. 49 is an enlarged perspective view of the upper back surface side center boss 413. On the outer peripheral surface of the upper back surface side center boss 413, there are disposed two positioning ribs 414 which, when viewed from the upper surface of the center boss 413, project in the longitudinal direction X of the magnetic tape cassette. Also, similarly to the other bosses disposed on the upper cassette half, there is formed a self-tapping hole in the center boss 413. And, the length H from the leading end of the upper back surface side center boss 413 to the leading end of the positioning rib 414 is set larger than the length from the leading end of the upper opening side center boss 481 shown in Fig. 48 to the leading end of the positioning rib 482.

If the upper cassette half 411 shown in Fig. 48 is made to approach the lower cassette half 412 shown in Fig. 47 in order to fit the upper cassette half 411 with the lower cassette half 412, then, as shown in Fig. 50A, at first, the leading end of the upper opening side center boss 481 of the upper cassette half 411 is inserted into the insertion hole 487a of the lower opening side center boss 487 disposed at the corresponding position of the lower cassette half 412. At the then time, as shown in Fig. 50B, the leading end of the upper back surface side center boss 413 of the upper cassette half 411 is also inserted into the insertion hole 417a of the lower back surface side center boss 417 of the lower cassette half 412. At the then time, although not shown, the upper bosses, which are disposed at the four positions of the upper cassette half 411 near the four corner portions of the upper cassette half 411, are also inserted into the insertion holes of the lower bosses which are disposed at the corresponding positions of the lower cassette half 412.

And, if the upper cassette half 411 is made to approach the lower cassette half 412 further, then the four positioning ribs 482 of the upper opening side center boss 481, only two of which are shown in Fig. 50A, are respectively fitted into the insertion hole 487a. Slightly later than this, the two positioning ribs 414 of the upper back surface side center boss 413 shown in Fig. 50B are respectively fitted into the insertion hole 417a, so that the upper and lower cassette halves can be positioned.

In the above-structured magnetic tape cassette 410, at a position which is present on the back surface side of the upper cassette half 411 and is shifted from the longitudinal-direction center portion to the window 474 side, there is disposed the upper back surface side center boss 413; and, at a position which is present in the lower cassette half 412 and corresponds to the upper back surface side center boss 413, there is disposed the lower back surface side center boss 417. Due to this, not only the torsion and flexure of the upper and lower cassette halves 411 and 412 can be controlled but also the window 474 can be reinforced by the upper and lower back surface side center bosses 413 and 417, which in turn makes it possible to control the torsion and flexure of the window 474 itself. This can prevent the formation of a gap between the engaged surfaces 425 of the upper and lower cassette halves 411 and 412 on the back surface side thereof.

Also, on the upper cassette half 411, in addition to the upper opening side center boss 481, there is disposed the upper back surface side center boss 413 including the two positioning ribs 414. This makes it possible to prevent the deviations of the upper and lower cassette half 411 and 412 around the opening side center bosses 481 and 487. Especially, since, on the outer peripheral surface of the upper back surface side center boss 413, there are disposed the two positioning ribs 414 in such a manner that they respectively project in the longitudinal direction X of the magnetic tape cassette 410, the deviations of the upper and lower cassette halves 411 and 412 around the opening side center bosses 481 and 487 can be scarcely generated.

Also, because the length H from the leading end of the upper back surface side center boss 413 to the leading ends of the respective positioning ribs 414 is set larger than the length from the leading end of the upper opening side center boss 481 to the leading ends of the respective positioning ribs 482, the assembling efficiency of the operation to fit the upper and lower cassette halves 411 and 412 with each other is enhanced, which in turn makes it possible to improve the productivity of the magnetic tape cassette 410.

By the way, the magnetic tape cassette
is not limited to the above-mentioned embodiment but, of course, various changes and improvements are possible without departing from the scope of the patent claim set forth herein.

For example, in the above-mentioned embodiment, on the upper back surface side center boss, there are disposed the two positioning ribs 414 in such a manner that they respectively project in the longitudinal direction X of the magnetic tape cassette 410. However, it is also possible to provide additionally two more positioning ribs which respectively project in a direction at right angles to the longitudinal direction X.

Now, description will be given below in detail of a ninth embodiment of an injection mold with reference to the accompanying drawings. By the way, in the present embodiment, parts, which have been described hereinabove, are given the same or equivalent reference characters in the following drawings and thus the description thereof is simplified or omitted hereinafter.

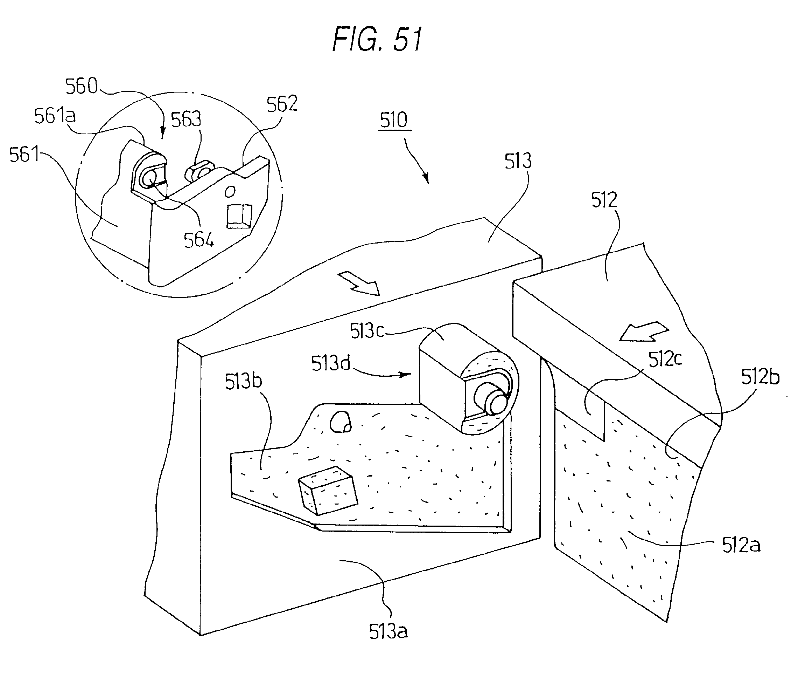

Here, Fig. 51 is a perspective view of the main portions of the ninth embodiment of an injection mold.

This injection mold 510 is used to mold such an outer lid 560 as shown by a two-dot chained line in Fig. 51 and also comprises two slide cores 512 and 513. The slide core 512, which is shown on the right in Fig. 51, includes a plane portion 512a which serves as a mold surface for molding an outer lid portion 561 of the outer lid 560, and a curved portion 512b serving as a mold surface for molding a projecting portion 561a of the outer lid 560. The surfaces of the plane portion 512a and curved portion 512b are both formed as coarse surfaces.

Referring to the slide core 513 which is located on the left in Fig. 51, it includes a plane portion 513a in the front portion thereof and, in the plane portion 513a of the slide core 513, there is disposed a female mold 513b into which molding material can be poured to thereby mold the side plate portion 562. The inner surface of the female mold 513b is formed as a coarse surface. Also, in the portion of the female mold 513b which is situated on the upper side in Fig. 51, that is, on the slide core 512 side of the female mold 513b, there is disposed a substantially cylindrical-shaped male mold 513d which is used to open up a pin hole 564 in the end portion of the projecting portion 561a of the outer lid 560.

The slide core 512 includes a smooth surface (a surface which is not subjected to a surface treatment such as a sand blast manner for making a surface coarser) 512c in a portion thereof (an extension surface of the mold surface 512b) with which the male mold 513d of the slide core 513 can be slidingly contacted when opening and tightening the injection mold 510.

Also, the substantially cylindrical-shaped male mold 513d of the slide core 513 includes a smooth surface (a surface which is not subject to a surface treatement for making it coarser) 513c in the peripheral surface thereof.

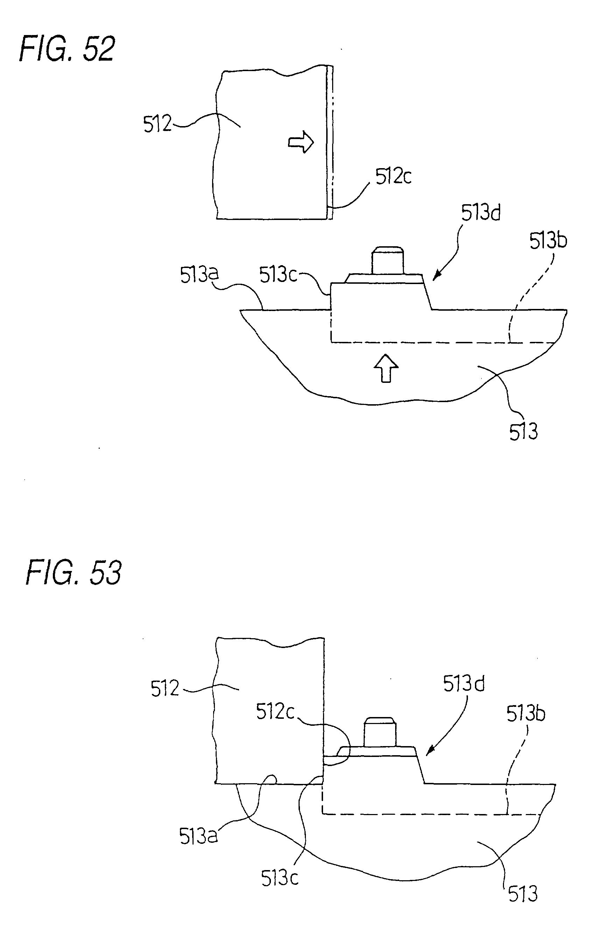

Now, Fig. 52 shows a schematic plan view of the injection mold 510 shown in Fig. 51. In the mold tightening operation, at first, the slide core 512 reaches ahead a mold tightening completion position which is shown by a two-dot chained line in Fig. 52. After then, the slide core 513 is moved, that is, the smooth surface 513c of the slide core 513 is slidingly contacted with the smooth surface 512c of the slide core 512; and, after then, the slide core 513 reaches the mold tightening completion position.

According to the thus structured injection mold, the respective sliding contact surfaces of the two slide cores 512 and 513 are both formed as the smooth surfaces and, therefore, there is no possibility that, when opening and tightening the injection mold, the sliding contact surfaces can be worn. This makes it possible to extend the life of the injection mold.

By the way, the teaching is not limited to the above-mentioned embodiment but it can be changed and modified properly without departing from the subject-matter of the teaching.

For example, in the above-mentioned embodiment, there are formed the smooth surfaces in the injection mold for molding the outer lid of the magnetic tape cassette. However, this is not limitative but the technological concept of the invention can also be applied to other various types of injection molds which are used to mold resin moldings such as a magnetic tape cassette and the like.

Now, description will be given below of the preferred embodiments of a tape reel for use in a magnetic tape cassette according to a tenth embodiment with reference to the accompanying drawings.

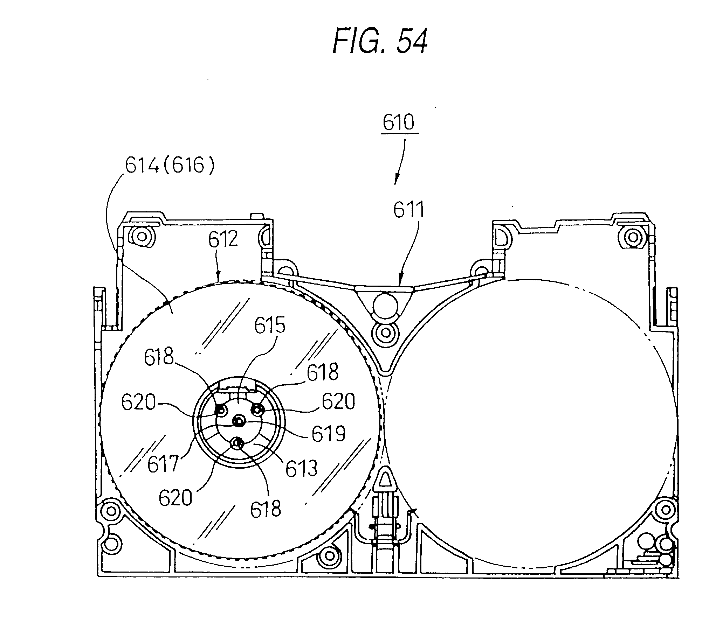

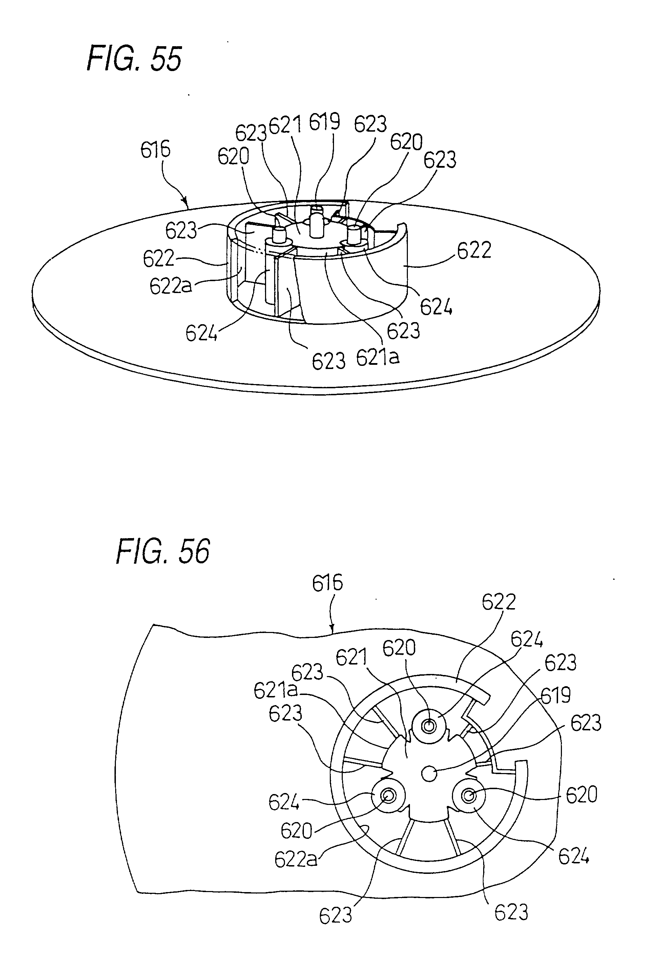

Here, Fig. 54 is a plan view of a lower cassette half of a magnetic tape cassette to which a tape reel according to the tenth embodiment is applied; Fig. 55 is a perspective view of a lower reel employed in a tape reel; and, Fig. 56 is a partially enlarged plan view of the lower reel shown in Fig. 55.

In Fig. 54, a magnetic tape cassette 610 is structured such that a pair of tape reels 612 (in Fig. 54, the illustration of a right side tape reel is omitted) with magnetic tape t (see Fig. 19) wound therearound are rotatably supported on a lower cassette half 611 which is the companion to an upper cassette half (not shown) of the magnetic tape cassette 610. The lower cassette half 611 is formed of synthetic resin such as ABS resin or the like in a united body.

Referring now to Figs. 54 to 56, each tape reel 612 comprises an upper reel 614 having a flange portion 613, and a lower reel 616 which is os disposed as to be opposed to the upper reel 614 and includes a boss portion 615 on a surface thereof facing the upper reel 614. The upper and lower reels 614 and 616 are fixed together in such a manner that the lower surface of the flange portion 613 of the upper reel 614 is spaced by a given distance apart from the upper surface of the boss portion 615 of the lower reel 616. The upper reel 614 is formed of transparent synthetic resin or the like in a united body, whereas the lower reel 616 is formed of opaque synthetic resin or the like in a united body.

In the upper reel 614, there are formed a pivot hole 617 and a plurality of welding boss holes 618. The pivot hole 617 is formed in such a manner that it is situated substantially in the central portion of the flange portion 613 and extends through the central portion of the flange portion 613. The welding boss holes 618 are opened up at the positions of the flange portion 613 of the upper reel 614 that respectively correspond to their associated welding bosses 620 to be discussed later, while the welding boss holes 618 extend through the flange portion 613 and the number of them is equal to the number of the welding bosses 620.

On the other hand, on the lower reel 616, there are disposed a pivot 619 and a plurality of welding bosses 620 in such a manner that they respectively project from the upper surface of the boss portion 615 of the lower reel 616. In particular, the boss portion 615 is structured such that, in the peripheral portion thereof spaced in the radial direction of the boss portion 615 from the center portion 621 of the boss portion 615, there is disposed a side wall 622 serving as a winding surface on which the magnetic tape t can be wound, and the boss center portion 621 and side wall 622 are connected together by a plurality of (in Fig. 56, 6 pieces of) ribs 623 which are respectively so disposed as to extend in the radial direction of the boss portion 615.

The pivot 619 is provided on and projected from the substantially central portion of the upper surface of the boss center portion 621. Also, the welding bosses 620 are respectively provided on and projected from the upper surfaces of base end portions 624 respectively formed in the outer edge portion of the boss center portion 621. That is, the base end portions 624 are formed in the outer edge portion of the boss center portion 621 that is spaced in the radial direction of the boss portion 615 from the pivot 619, while the base end portions 624 are arranged in the peripheral direction of the boss center portion 621 at given intervals in plural number (in Fig. 56, three pieces); and, the welding bosses 621, in Fig. 56, are disposed on the respective central portion of the upper surfaces of the three base end portions 624 one on one, that is, a total of three welding bosses 621 are disposed.

The ribs 623 are respectively interposed between the given positions of the side surface 621a of the boss center portion 621 avoiding the base end portions 624 of the welding bosses 620 and the inner surface 622a of the side wall 622 in such a manner that they extend in the radial direction of the boss portion 615; and also, the ribs 623 respectively have spaces with respect to the base portions of their associated welding bosses 620.

In each tape reel 612, the pivot 619 projectingly provided on the boss portion 615 of the lower reel 616 is fitted into the pivot hole 617 formed in the flange portion 613 of the upper reel 614. Also, the welding bosses 620 projectingly provided on the boss portion 615 of the lower reel 616 are respectively fitted into their associated welding boss holes 618 formed in the flange portion 613 of the upper reel 614. In the thus fitted state, if the welding horns (not shown) are respectively contacted with the substantially central portions of the leading end faces (in Fig. 55, the upper end faces) of the welding bosses 620, then the welding bosses 620 can be welded by ultrasonic waves. As a result of this, the upper and lower reels 614 and 616 can be fixed together with a given position relation between them.

Next, description will be given below of the operation of the above-mentioned tenth embodiment.

When welding the welding bosses 620 by ultrasonic waves, if the welding horns are respectively contacted with the leading end faces of the welding bosses 620, then the oscillation energy of the ultrasonic waves is transmitted from the welding horns to the substantially central portions of the leading end faces of the welding bosses 620.

In this operation, because none of the ribs 623 are disposed between the base end portions 624 of the welding bosses 620 and the inner surface 622a of the side wall 622, the oscillation energy of the ultrasonic waves can be transmitted from the welding horns to the welding bosses 620 concentratedly with high efficiency without being dispersed to the other remaining portions of the boss portion 615 than the welding bosses 620. Therefore, the welding bosses 620 can be welded ultrasonically in a short time by the thus efficiently transmitted oscillation energy of the ultrasonic waves.

That is, when compared with the conventional tape reel 631 shown in Figs. 19 and 20 which requires 0.4 seconds for ultrasonic welding of the welding bosses 648, the tape reel 612 according to this embodiment can reduce the welding time down to 0.2 seconds.

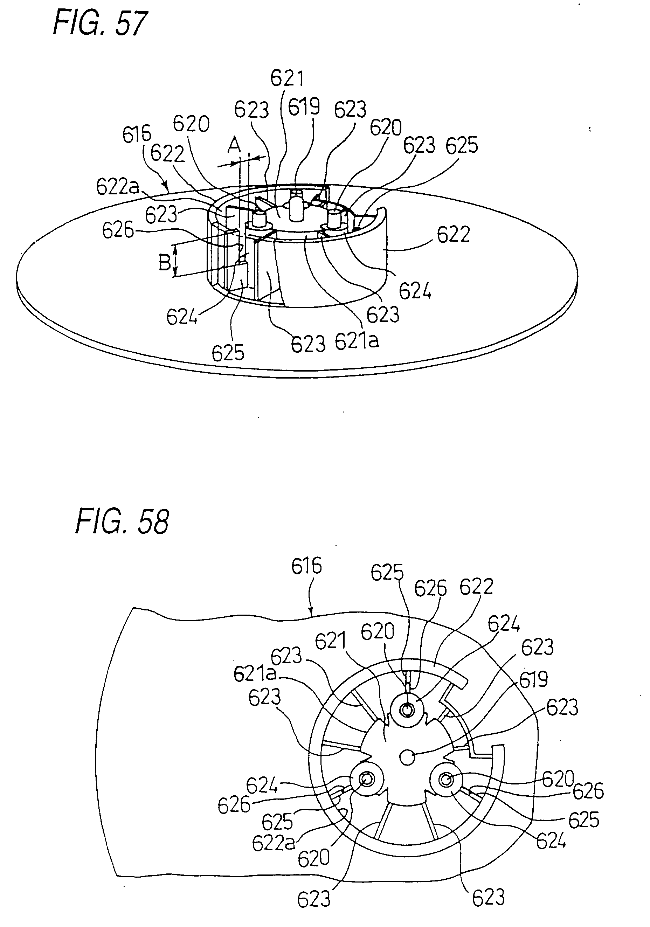

Now, Fig. 57 is a perspective view of a lower reel employed in a tape reel according to an eleventh embodiment, and Fig. 58 is a partially enlarged plan view of the lower reel shown in Fig. 57.

In the eleventh embodiment, in addition to a plurality of (in Fig. 58, six pieces of) ribs 623 respectively interposed between the boss center portion 621 of the boss portion 615 and the inner surface 622a of the side wall 622, there are interposed between the base end portions 624 of the welding bosses 620 and the inner surface 622a of the side wall 622 a plurality of (in Fig. 58, three pieces of) ribs 625 (which are hereinafter referred to as cutaway ribs 625) in each of which a cutaway portion 626 of a required shape is formed in order to avoid its associated welding boss 620. The cutaway portion 626 of each cutaway rib 625 is formed in such a manner that it is spaced by a given distance A in the radial direction of the boss portion 615 from the base end portion 624 of its associated welding boss 620 and also extends over a given dimension B in the vertical direction in Fig. 57.

The remaining portions of the structure and operation of the eleventh embodiment are similar to those of the previously described tenth embodiment.

By the way, in the eleventh embodiment, the shape of the cutaway portion 626 is a rectangular shape when it is viewed from the side surface thereof. However, this is not limitative but the cutaway portion 626 can also have a triangular shape, a trapezoidal shape, an elliptical shape, or the like when it is viewed from the side surface thereof.

As described above, according to the respective tenth and eleventh embodiments, the ribs 623, which are used to connect together the boss center portion 621 and side wall 622 that respectively form the boss portion 615 of the lower reel 616, are respectively so disposed as to avoid the neighboring portions of their associated welding bosses 620, that is, they have spaces with respect to the base portions of their associated welding bosses 620. In particular, in the tenth embodiment, the ribs 623 are so arranged as to avoid the base end portions 624 of their associated welding bosses 620. Also, in the eleventh embodiment, in each of the ribs 625 interposed between the base end portions 624 of the welding bosses 620 and the inner surface 622a of the side wall 622, there is formed the cutaway portion 626 having a required shape to be able to avoid its associated welding boss 620.

Thanks to the above-mentioned structures, the respective tenth and eleventh embodiments are able to enhance the transmission efficiency of the ultrasonic waves oscillation energy from the welding horns to the welding bosses 620. This not only can reduce greatly the time necessary for ultrasonic welding of the welding bosses 620 but also can enhance the welding stability of the ultrasonic welding operation. As a result of this, the mutually opposing attitudes of the upper and lower reels 614 and 616 can be kept properly, which makes it possible to surely prevent the surface vibrations of the tape reel 612 when it is rotated.

Now, description will be given below in detail of a twelfth embodiment of a magnetic tape cassette.

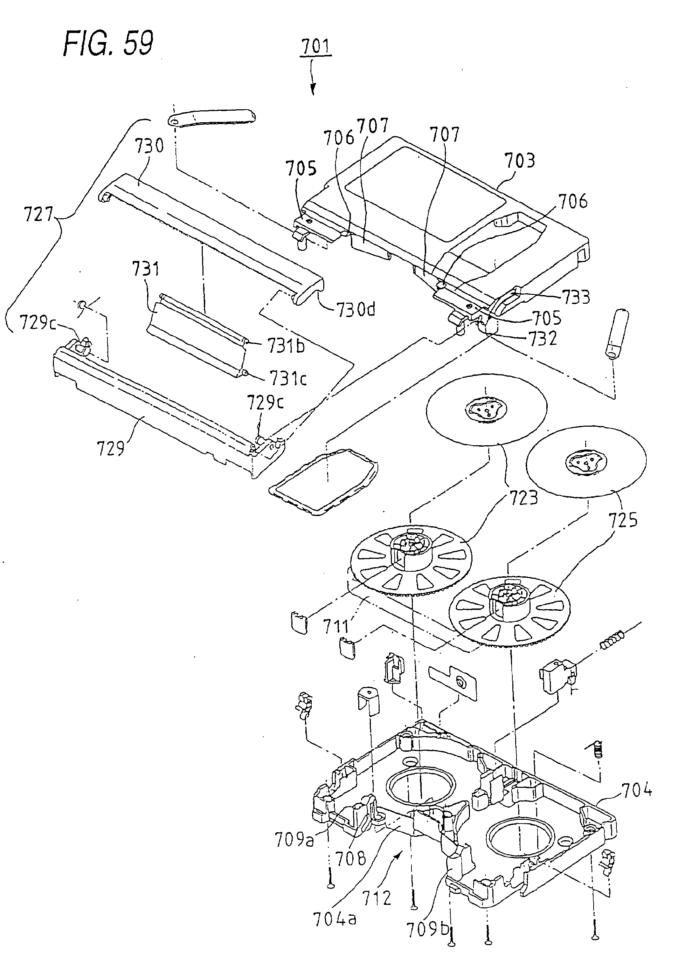

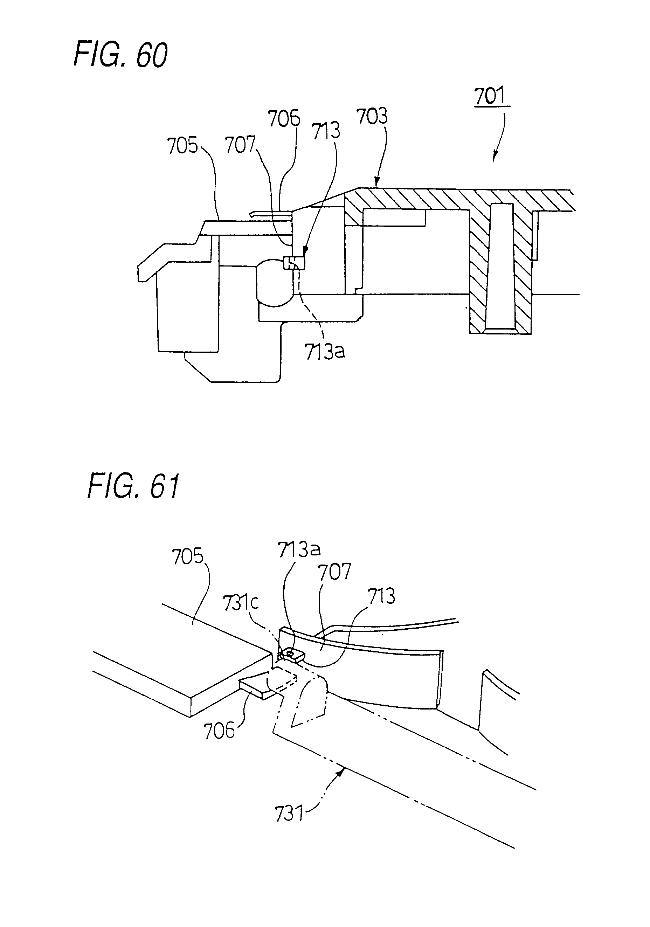

By the way, in the present embodiment, the same parts as those employed in the above-mentioned conventional magnetic tape cassette will be described using the same reference characters. Fig. 59 is an exploded perspective view of a magnetic tape cassette according to the twelfth embodiment; Fig. 60 is a partially enlarged section view of an upper half employed in the twelfth embodiment, taken along the longitudinal direction of the upper half; and, Fig. 61 is a partially enlarged back view of the upper half shown in Fig. 60.

As shown in Fig. 59, a magnetic tape cassette 701 according to the present embodiment comprises a cassette main body composed of an upper half 703 and a lower half 704 and including in the front surface thereof an opening 712 for insertion of a tape pull-out member disposed on apparatus such as a VTR or the like, a pair of reels 723 and 725 respectively disposed within the lower half 704 in such a manner that they can be rotated freely, magnetic tape 711 wound around the two reels 723 and 725 and stretched over the opening 712 by two tape guides 709a and 709b respectively disposed on the front surface of the lower half 704, and an open/close lid 727 assembled to the front surface side of the cassette main body so that the magnetic tape can be covered by the open/close lid 727 when the magnetic tape cassette 701 is carried. By the way, between the upper and lower halves 703 and 704, there are stored other various parts than the above-mentioned two reels 723 and 725. However, the description of the other parts is omitted here. Also, the structure of the open/close lid 727 is the same as that of the conventional one and thus the description thereof is also omitted here.

As shown in Figs. 59 to 62, in the upper half 703, in particular, on the tape travel area thereof, there are disposed two flat-plate-shaped upper lids 705 which are respectively located on the front surface and on the two side surface sides of the magnetic tape cassette 701. And, on the opposite side to the side surfaces of the magnetic tape cassette 701 where the upper lids 705 are respectively located, there are disposed not only two cam lids 706 respectively for preventing the two slide pins 731c of the inner lid 731 from moving to the upward side of the magnetic tape cassette 701, but also two upper half front walls 707 serving as position restrict means. On each of the two upper half front walls 707, there is disposed a dimension reference projection 713 with a reference hole 713a opened up therein in such a manner that the dimension reference projection 713 projects forwardly of the magnetic tape cassette 701.

The present embodiment is characterized by the upper half front walls 707: that is, each upper half front wall 707 is formed as a curved surface and, when compared with the conventional one, the position of the upper half front wall 707 is projected further forwardly of the magnetic tape cassette 701. Due to the fact that the upper half front wall 707 is projected in this manner, as shown in Fig. 61, in a state where the open/close lid 727 is opened, the upper half front wall 707 is contacted with its associated slide pin 731c of the inner lid 731. By the way, if the upper half front wall 707 is projected, then the upper half front wall 707 is not flush with the lower half front wall 704a, thereby raising a fear that a dustproof property cannot be secured. In view of this, as a measure against this, preferably, if the upper half front wall 707 may be gradually inclined toward the bottom portion thereof, then the mutually engaging surfaces of the upper half front wall 707 and lower half front wall 704a can be made flush with each other, so that a dustproof property can be secured.

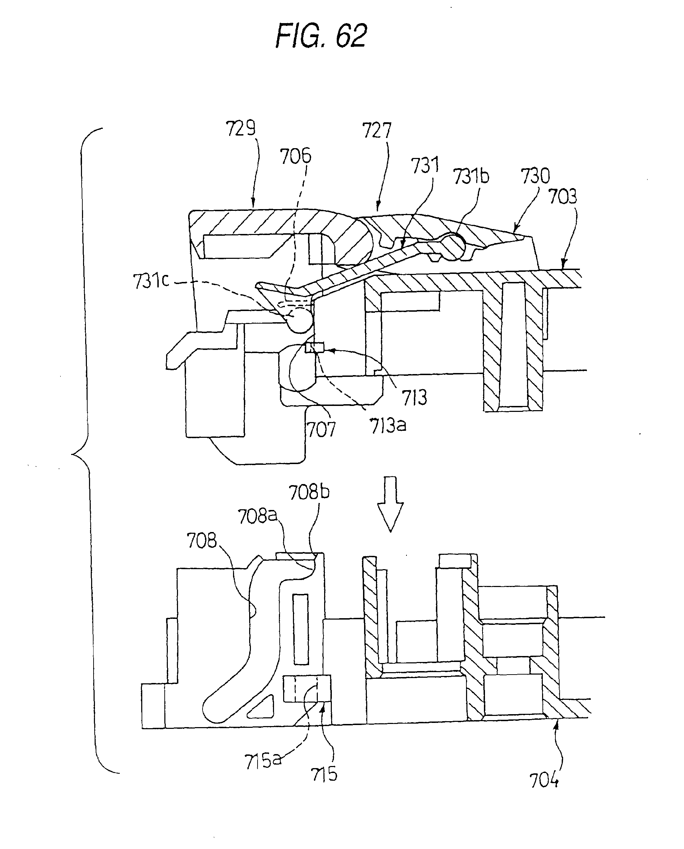

Next, description will be given below of a method for assembling a magnetic tape cassette according to the twelfth embodiment, At first, the outer lid 729, top lid 730 and inner lid 731 have been previously assembled together provisionally. After then, the slide pins 730d of the top lid 730 are respectively inserted into their associated upper lid cam grooves 733 which are respectively formed in the upper half 703 and, at the same time, the support shaft pins 729c of the outer lid 729 are respectively fitted into their associated pin support holes 732 formed in such portions of the two side surface portions of the upper half 703 that are located near the front surface thereof. Next, as shown in Fig. 62, in a state where the open/close lid 727 is completely opened, the upper and lower halves 703 and 704 are assembled together while matching the reference holes 713a and 715a of the dimension reference projections 713 and 715 of the upper and lower halves 703 and 704 to each other.

Here, if the open/close lid 727 is completely opened, then the upper half front walls 707 provided in the upper half 703 are respectively contacted with the slide pins 731c of the inner lid 731, so that the position of the inner lid 731 can be restricted. That is, since the contact positions between the upper half front walls 707 and the slide pins 731c can be used as the reference positions, the slide pins 731c of the inner lid 731 can be surely inserted into their associated inner lid cam grooves 708 of the lower half 704, which makes it possible to enhance the reliability of assembling of the present magnetic tape cassette. By the way, from the viewpoint of enhancing the assembling reliability, preferably, each of the inner lid cam grooves 708 may be structured such that, in the leading end of the upper edge wall 708a thereof, there is formed a tapered guide portion 708b.

In the above-mentioned twelfth embodiment, as the position restrict means, the position of the upper half front wall 707 is projected further forwardly of the magnetic tape cassette 701 when compared with the conventional upper half front wall, thereby being able to restrict the positions of the slide pins 731c of the inner lid 731. However, the embodiment is not limited to the above-mentioned position restrict means but various modifications and improvements are also possible.

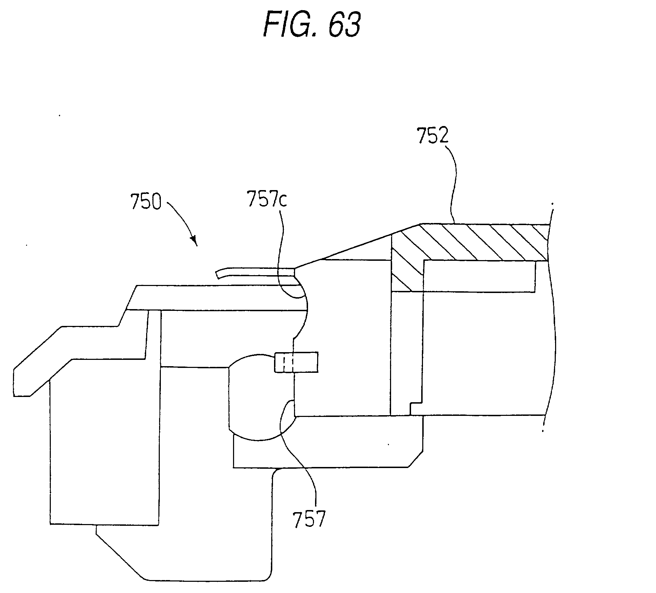

For example, as a modification of the twelfth embodiment, there can be employed an upper half 752 which is shown in Fig. 63. That is, as shown in Fig. 63, in the upper half 752 of a magnetic tape cassette 750 according to the present modification, there are formed upper half front walls 757 which can be used as position restrict means. In each of the upper half front walls 757, there is formed a curved recessed portion 757c part of which has substantially the same curvature as the slide pin 731c of the inner lid 731. The curved recessed portion 757c is capable of holding the slide pin 731c and also deciding the position of the slide pin 731c.

Also, as another modification of the position restrict means, there can be employed a structure in which the upper half front walls are disposed at the same positions as the conventional ones, there are provided projections separately, and the thus separately provided projections are used to restrict the positions of the slide pins 731c. Further, there can be employed another structure of a type that the upper lid cam grooves 733, into which the slide pins 730d of the top lid 730 can be fitted, are cut more deeply by a given length, and the upper half front walls formed at the same positions as the conventional upper half front walls are contacted with their associated slide pins of the inner lid. That is, this structure is also able to restrict the positions of slide pins 731c.

Next, description will be given below of a thirteenth embodiment of a magnetic tape cassette.

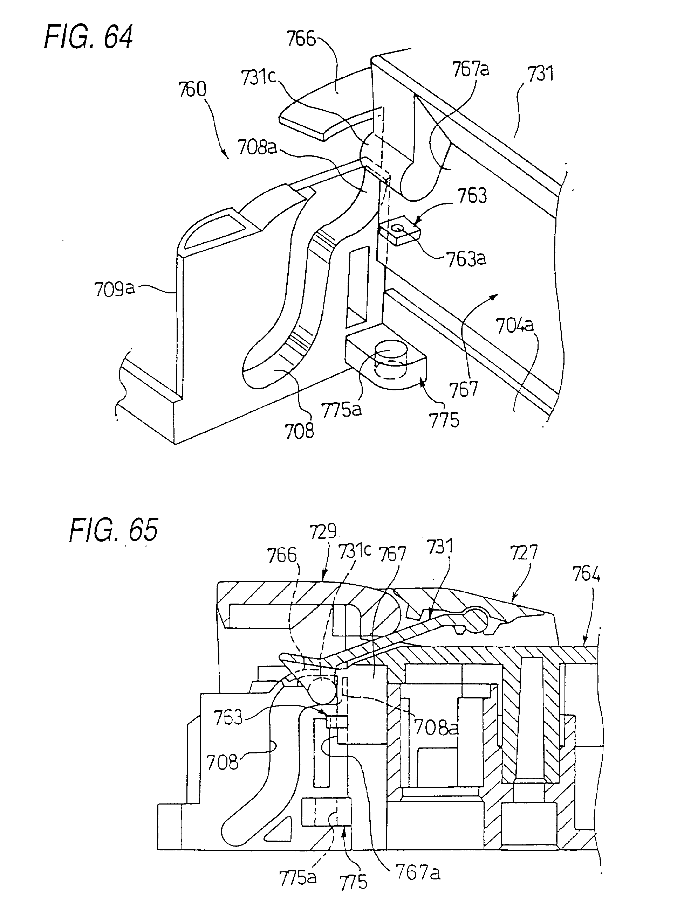

Fig. 64 is a partially enlarged perspective view of a magnetic tape cassette according to the thirteenth embodiment, and Fig. 65 is a partially sectional view of the present magnetic tape cassette.

As shown in Figs. 64 and 65, on an upper half 764 employed in a magnetic tape cassette 750 according to the thirteenth embodiment, there are provided two cam lids 766 (in Figs. 64 and 65, only one of the two cam lids 766 is shown) which are respectively used to prevent their associated slide pins 731c of the inner lid 731 from moving to the upward side of the magnetic tape cassette 750, and two upper half front walls 767 (similarly to the cam lids 766, in Figs. 64 and 65, only one of the two upper half front walls 767 is shown), respectively serving as position restrict means. On each of the upper half front walls 767, there is provided a dimension reference projection 763 with a reference hole 763a formed therein, while the dimension reference projection 763 projects forwardly of the magnetic tape cassette 750.

The upper half front walls 767, which are formed as the characteristic of the thirteenth embodiment, are different from the those formed in the twelfth embodiment and the modifications thereof in that their respective slide pin contact surfaces 767a project forwardly of the magnetic tape cassette 750 from the upper edge walls 708a of the inner lid cam grooves 708 that extend at right angles to the bottom surface of the lower half. Due to the fact that the pin contact surfaces 767a project forwardly in this manner, in a state where the open/close lid 727 is opened, similarly to the twelfth embodiment and the modifications thereof, the pin contact surfaces 767a can be respectively contacted with their associated slide pins 731 of the inner lid 731, thereby being able to decide the positions of the present slide pins 731c. Further, since the pin contact surfaces 767a of the upper half front walls 767 project more forwardly than the upper edge walls 708a of the inner lid cam grooves 708, when assembling the upper half to the lower half, the slide pins 731c are not contacted with the upper edge walls 708a of the inner lid cam grooves 708, that is, the slide pins 731c are not interfered by the upper edge walls 708a but can be situated just above the inner lid cam grooves 708, which makes it possible to insert the slide pins 731c into their associated inner lid cam grooves 708 positively. Therefore, the thirteenth embodiment is able to enhance the assembling reliability further than the twelfth embodiment. By the way, the slide pin contact surfaces 767a of the upper half front walls 767 and the upper edge walls 708a of the inner lid cam grooves 708 may also be so formed as to be flush with each other.

Next, description will be given below of a fourteenth embodiment of a magnetic tape cassette.

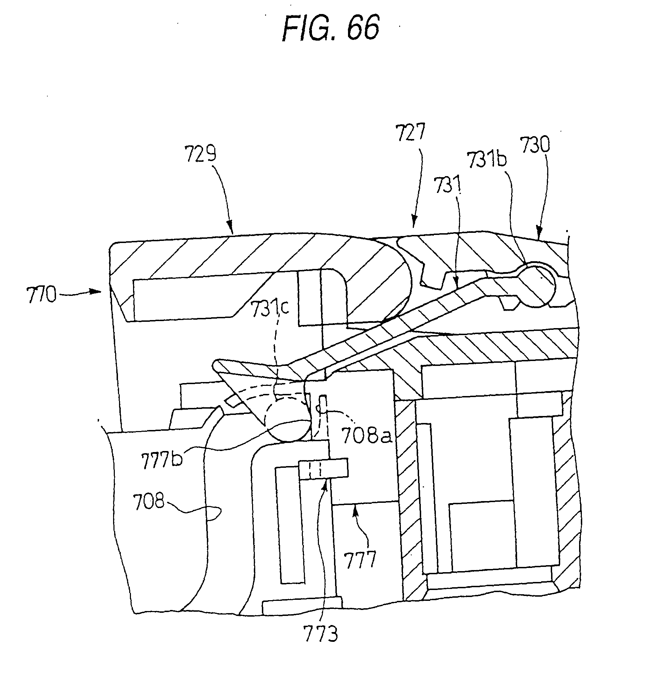

Fig. 66 is a partially sectional view of a magnetic tape cassette according to the fourteenth embodiment.

As shown in Fig. 66, in an upper half employed in a magnetic tape cassette 770 according to the fourteenth embodiment, there is disposed an upper half front wall 777 (in fact, two upper half front walls 777 are present but, in Fig. 66, only one of them is shown) which serves position restrict means. Differently from the thirteenth embodiment in the upper half front wall 777, a portion 777b thereof is projected further forwardly of the magnetic tape cassette 750 than the upper edge wall 708a of the inner lid cam groove 708, whereby the portion 777b is allowed to function as a slide pin contact surface. That is, due to the fact that the portion 777b of the upper half front wall 777 projects forwardly in this manner, similarly to the thirteenth embodiment, in a state where the open/close lid 727 is opened, the portion 777b can be contacted with its associated slide pin 731c of the inner lid 731, thereby being able to decide the position of the present slide pin 731c. Further, since the slide pin 731c can be positively inserted into its associated inner lid cam groove 708 without being contacted with the upper edge wall 708a of the inner lid cam groove 708. Thus, the fourteenth embodiment is able to enhance the assembling reliability of the inner lid further than the twelfth embodiment. By the way, the portion 777b of the upper half front wall 777 and the upper edge wall 708a of the inner lid cam groove 708 may also be so formed as to be present on the same plane.

Next, description will be given below of a fifteenth embodiment of a magnetic tape cassette.

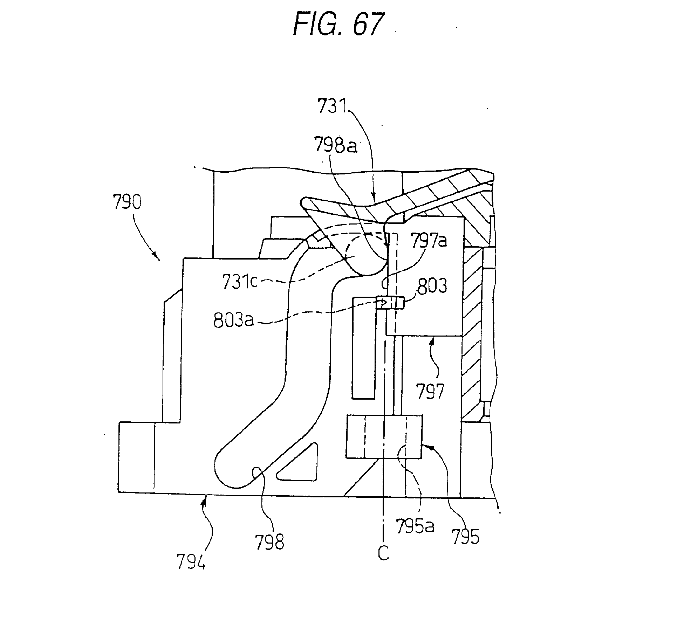

Fig. 67 is a partially sectional view of a magnetic tape cassette according to the fifteenth embodiment.

As shown in Fig. 67, in an upper half employed in a magnetic tape cassette 790 according to the fifteenth embodiment, there is disposed an upper half front wall 797 (in fact, two upper half front walls 797 are present but, in Fig. 67, only one of them is shown) which serves position restrict means. On the upper half front wall 797, there is provided a dimension reference projection 803 with a reference hole 803a formed therein, while the dimension reference projection 803 projects forwardly of the magnetic tape cassette 790. Also, on a lower half 794, in correspondence to the dimension reference projection 803, there is provided a dimension reference projection 795 in which there is opened up a reference hole 795a.

Differently from the previously described embodiments, the slide pin contact surface 797a of the upper half front wall 797, which is the characteristic of the fourth embodiment, is situated on the substantially same plane as a plane which not only contains the center line C of the reference hole 795a of the dimension reference projection 795 but also extends in parallel to the rear surface of the magnetic tape cassette 790, while the upper edge wall 798a of the inner lid cam groove 798 is also situated on the substantially same plane. By the way, the above-mentioned term "the substantially same plane" is the concept that it contains not only the same plane but also an area of less than and equal to 1.0 mm from the same plane with respect to the longitudinal direction of the magnetic tape cassette 790.

Thanks to this positional arrangement of the upper half front wall 797, when assembling the upper half to the lower half, since the upper and lower halves are assembled together while matching the reference holes 803a and 795a of the dimension reference projections 803 and 795 to each other in a state where the open/close lid 727 is opened completely, that is, since the upper and lower halves are assembled together by matching the positions of the reference holes to each other, the insertion position of the slide pin 731c of the inner lid 731 can be matched to the inner lid cam groove 798, thereby being able to enhance the assembling reliability of the inner lid 731.

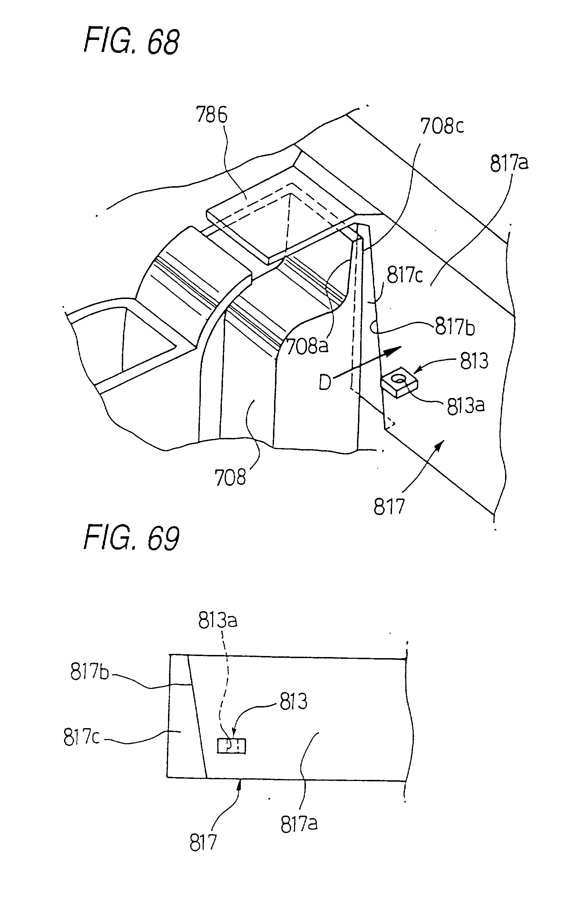

By the way, in any of the above-mentioned embodiments from the viewpoint of enhancing the dustproof property as well as upper half assembling reliability, the upper half front wall may preferably be structured as shown in Figs. 68 and 69. Here, Fig. 68 is an enlarged perspective view of the inner lid cam groove and upper half front wall and their neighboring portion, and Fig. 69 is a schematic front view of the upper half front wall when it is viewed from a direction of an arrow line D shown in Fig. 68. As shown in Figs. 68 and 69, in the upper half, similarly to the above-mentioned respective embodiments, there is disposed an upper half front wall 817 which serves as position restrict means. On the upper half front wall 817, there is provided a dimension reference projection 813 with a reference hole 813a formed therein, while the dimension reference projection 813 projects forwardly of the magnetic tape cassette.

Also, the upper half front wall 817 is structured such that its end portion 817c on the side surface side of the magnetic tape cassette is formed as a stepped portion with respect to the slide pin contact surface 817a thereof, while the end portion 817c is stepped toward the inside of the magnetic tape cassette. When assembling the upper half to the lower half, the end portion 817c is situated in the rear of the back surface 708c of the upper edge portion 708a when assembled, that is, the end portion 817c is structured as a so called a pillbox, thereby being able to secure the dustproof property. Also, the boundary surface 817b of the end portion 817c is formed as an inclined surface which is inclined gradually toward the lower half. Due to the fact that the boundary surface 817b is formed as an inclined surface in this manner, when assembling the upper half to the lower half, not only collision between the upper edge wall 708a of the inner lid cam groove 708 and upper half front wall 817 can be prevented, but also, even if the upper half is assembled to the lower half in such a manner that the former is shifted from the latter in the side surface direction of the magnetic tape cassette, the upper half can be guided by the boundary surface 817b, so that the upper half can be assembled to the lower half smoothly.

By the way, the teaching is not limited to the above-mentioned embodiments but it can be changed or improved properly. For example, the teaching is not limited to a magnetic tape cassette for a DVC but it can also be applied to any other type of magnetic tape cassette, provided that it includes an inner lid for covering the rear surface of the magnetic tape. That is, the open/close lid may also be of a two-lid type in which an outer lid and a top lid are formed integrally as a united body. Further, the modification of the twelfth embodiment shown in Fig. 63, that is, the position restrict means consisting of the curved recessed portion formed in the upper half front wall, of course, may also be applied to the other embodiments, namely, the above-mentioned thirteenth embodiment as well.

The present invention is based on Japanese Patent Applications No. Hei. 10-165503, Hei. 10-170196, Hei. 10-176263, Hei. 10-197482, Hei. 10-203716, Hei. 10-300005, Hei. 10-310949, and Hei. 11-138724.

In the above-mentioned first to fifteenth embodiments, present invention are separately explained, however, it is possible to combine two or more of these embodiments, to thereby obtain and enjoy functions and operations thereof simultaneously.

While there has been described in connection with the preferred embodiment of the invention, it will be obvious to those skilled in the art that various changes and modifications may be made therein without departing from the invention, and it is aimed, therefore, to cover in the appended claim all such changes and modifications as fall within the true spirit and scope of the invention.

As has been described heretofore, according to the magnetic tape cassette of the first embodiment, since, in the upper half thereof, there is provided the position restrict means which can be contacted with the coil portion of the lid spring to thereby restrict the position of the present coil portion, even if the lid is opened, the lid spring is prevented from removing from its proper mounting position.

This eliminates the fear that the coil portion of the lid spring can be contacted with the support shaft pin of the lid. Therefore, even if the opening and closing operations of the lid are executed repeatedly, no shavings of the support shaft pin can be produced, thereby being able not only to prevent the occurrence of a serious error such as drop-out or the like but also to assure a reliable lid lock.

As has been described hereinbefore, a magnetic tape cassette according to the second and third embodiments includes, in the portion thereof that is disposed opposed to a gate provided in a die, the increased thickness portion which, when screwing the upper and lower half cases to each other, exists continuously with the extension portion where the screw boss is formed and also which, when molding the upper half, provides the flow passage of the resin to the screw boss. According to the present structure, the fluidity of the resin can be enhanced and also the proper resin pressure can be secured, thereby being able to prevent the screw boss against deformation. In addition to this, the increased thickness portion enhances the strength of the extension portion in which the screw boss is formed as well as the strength of the eaves portion with which the extension portion is formed integrally. Thanks to this, the upper and lower half cases can be prevented against deformation when they are screwed together, which in turn makes it possible not only to prevent the upper half case itself from being deformed but also to reduce the rate of defective products in manufacturing the magnetic tape cassettes.

As has been described heretofore, according to the fourth, fifth and sixth embodiments, on the right and left sides of the present magnetic tape cassette, there are provided two position restrict means each including a wall which is higher in height than its associated one of the ribs for restricting the height of the magnetic tape and extends at right angles to the cassette inserting direction, and the push-in depth of the magnetic tape cassette in the recording and reproducing apparatus can be restricted by the present position restrict means. This allows the ribs to fully display their functions to restrict the height of the magnetic tape. Also, because the position restrict means are set higher in height than the ribs, the contact surfaces of the position restrict means with the stopper members of the recording and reproducing apparatus are larger than those that can be obtained in the conventional magnetic tape cassette. Thanks to this, when the magnetic tape cassette is loaded into the recording and reproducing apparatus, the push-in depth of the magnetic tape cassette in the recording and reproducing apparatus can be restricted positively.

Also, according to the fourth, fifth and sixth embodiments, the position restrict means are situated on the same plane which extends at right angles to the inserting direction of the magnetic tape cassette and also includes a position where the recording and reproducing apparatus acts on a certain member of the magnetic tape cassette, or the position restrict means are situated backwardly of the same plane in the magnetic tape cassette. Thanks to this, in a system which executes a cassette operation function during a cassette inserting operation, after the operation condition of the magnetic tape cassette is secured positively, the push-in depth position of the magnetic tape cassette in the recording and reproducing apparatus can be restricted by the position restrict means.

Further, according to the fourth, fifth and sixth embodiments, with respect to the two reference holes which are formed in the magnetic tape cassette and are used to determine the position of the magnetic tape cassette within the recording and reproducing apparatus, the position restrict means are situated on the center line of the two reference holes or in the neighborhood of the center line. Due to this, when the magnetic tape cassette is loaded into the recording and reproducing apparatus, the pins provided on the recording and reproducing apparatus side can be inserted into their associated reference holes with high precision.

Still further, according to the fourth, fifth and sixth embodiments, the distances respectively from the horizontally positioning reference holes respectively formed in the two kinds of magnetic tape cassettes equal in thickness to each other but different in size from each other to the position restrict means respectively disposed in the present magnetic tape cassettes having different sizes, are set equal to each other. Thanks to this, even if any of the present magnetic tape cassettes is loaded into a recording and reproducing apparatus capable of receiving two kinds of magnetic tape cassettes equal in thickness to each other but different in size from each other, the position of the loaded magnetic tape cassette can be restricted positively.

As has been described heretofore, according to the seventh embodiment, since the thickness reducing portions are respectively formed between the inner lid cam grooves on which the slide pins of the inner lid can be slided and the detect holes serving as the cassette positioning reference, occurrence of the recesses can be prevented in molding. Further, because there are formed the stepped portions respectively between the bottom surfaces of the thickness reducing portions and the upper surfaces of the detect holes, there is eliminated the possibility that the slide core for molding the thickness reducing portion can be contacted with the slide core for molding the detect hole. Thanks to this, not only the detect holes can be molded well but also to the lives of the slide cores can be extended.

As has been described heretofore, according to the magnetic tape cassette of the eighth embodiment, since the center bosses are disposed on the back surface side of the upper and lower cassette halves, the upper and lower cassette halves show high strength against torsion and flexure. Also, because the positioning ribs are disposed on the upper back surface side center boss, when compared with the conventional magnetic tape cassette in which the upper and lower cassette halves thereof are positioned only by the opening side center boss, the deviations of the upper and lower cassette halves around the opening side center bosses can be controlled. Therefore, there is no possibility that any gap can be formed between the engaged surfaces of the upper and lower cassette halves.

As has been described heretofore, in an injection mold according to the ninth embodiment, when one of slide cores provided in the injection mold is slided on the extension surface of the mold surface of an injection mold main body or the other slide core, the slide surface of the slide core is formed as a smooth surface.

This can reduce the amounts of wear of the parts of the injection mold such as the slide cores, injection mold main body and the like which could be caused by the mutual contact between them, thereby being able to extend the life of the injection mold.

As has been described heretofore, according to the tenth and eleventh embodiments, since the ribs for connecting together the boss center portion and side wall of the boss portion of the lower reel are so disposed as to avoid the base portions of the welding bosses or the ribs are disposed in such a manner that the respective parts thereof have clearances with respect to the base portions of their associated welding bosses, the transmission efficiency of the oscillation energy of the ultrasonic waves to the welding bosses can be enhanced. This makes it possible not only to reduce the time necessary for ultrasonic welding of the welding bosses but also to enhance the welding stability of the ultrasonic welding operation. As a result of this, the surface vibrations of the tape reel when it is rotated can be prevented positively.

As has been heretofore, in a magnetic tape cassette according to the twelfth, thirteenth, fourteenth and fifteenth embodiments, on the front surface of the upper half, there are disposed the position restrict means which, in a state where the open/close lid is opened completely, can be respectively contacted with their associated slide pins of the inner lid to thereby be able to restrict the positions of the inner lid slide pins. Thanks to this, the positions of the inner lid slide pins can be restricted positively and, with the contact positions between the inner lid slide pins and the position restrict means as the reference positions, the inner lid slide pins can be respectively inserted into their associated inner lid cam grooves of the lower half positively.

Therefore, the present structure is able to enhance the assembling reliability of the inner lid which forms the open/close lid.

Also, in a magnetic tape cassette according to the twelfth, thirteenth, fourteenth and fifteenth embodiments since the slide pin contact surfaces of the position restrict means are respectively situated more forwardly of the magnetic tape cassette than the upper edge walls of the inner lid cam grooves, the inner lid can be assembled more positively without being contacted with the upper edge walls of the inner lid cam grooves respectively formed in the lower half.

Further, in a magnetic tape cassette according to the twelfth thirteenth, fourteenth and fifteenth embodiments, since the slide pin contact surfaces of the position restrict means are respectively situated on the substantially same plane as a plane which not only contains the center line of the reference holes of the dimension reference projections projectingly provided on the lower half but also extends in parallel to the rear surface of the magnetic tape cassette, by matching the positions of the reference holes to each other, the assembling of the inner lid can be achieved still further positively.

## Claims

1. A magnetic tape cassette comprising:
upper cassette half (411) having upper bosses;
lower cassette half (412) having lower bosses and coupled with said upper cassette through screws (478) which are respectively inserted into said lower bosses and then threadedly engaged with said upper bosses,
wherein said lower bosses includes
a front center lower boss (487) which is substantially disposed in a center portion in a right-left direction and in a front end portion in a front-rear direction perpendicular to said right-left direction, and
a rear center lower boss (417) which is substantially disposed in a center portion in a right-left direction and in a rear end portion in the front-rear direction, and
wherein said upper bosses includes
a front center upper boss (481) mating with said front center lower boss, and
a rear center upper boss (413) mating with said rear center lower boss.

2. A magnetic tape cassette according to claim 1, **characterized in that** said rear center upper boss (413) is located in adjacent to a transparent window (414) formed on the upper cassette half (411), to thereby reinforce said transparent window.

3. A magnetic tape cassette according to claim 1 or 2, **characterized in that** said rear center upper boss (413) has a positioning rib (414) relative to said rear center lower boss.
